# EUROPEAN PATENT APPLICATION

(11) **EP 3 128 331 A1**
(43) Date of publication of application: **08.02.2017**
(21) Application number: 15773954.1
(22) Date of filing: 31.03.2015
(51) Int. Cl.: G01N 35/02, C12N 15/09, C12Q 1/68, G01N 21/03, G01N 37/00

(54) **SUPPORTING DEVICE AND INSPECTION METHOD**

(30) Priority: 31.03.2014 JP 2014071244
(71) Applicant: Nikon Corporation, Tokyo 108-6290 (JP)
(72) Inventor: ISAMI, Tadao, Minato-ku, Tokyo 108-6290 (JP)
(74) Representative: Hoffmann Eitle
(86) International application number: PCT/JP2015/060156
(87) International publication number: WO 2015/152255

(57) **Abstract**

A supporting apparatus (1) has: a columnar first member (12); and a cylindrical second member (13) having an inner surface (13b) that is allowed to face with at least one portion of an outer surface (122c) of the first member, at least one portion of the first member is inserted in a cylinder defined by the inner surface, a state of the first and second members is allowed to change from a first state to a second state, the first state includes a state in which a predetermined space (SP1) is ensured, the predetermined space is surrounded by at least one portion (13b-1) of the inner surface of the second member and an edge surface (122a) at one side of the first member that is different from the outer surface, the second state includes a state in which the second member has moved toward other side that is opposite to the one side relative to the first member from a base position of the first and second members in the first state.

## Description

### Technical Field

The present invention relates to a supporting apparatus that is configured to support a supported target such as a biochip, and an inspecting method using this supporting apparatus.

### Background Art

A well plate that is used for molecular diagnosis is known as this kind of supporting apparatus, for example. For example, a Patent Literature 1 discloses a bio-reaction device chip that serves as a well plate. In the bio-reaction device chip disclosed in the Patent Literature 1, a DNA chip is formed on a bottom surface of each well. In this case, a dispensing apparatus dispenses a specimen (for example, biological fluid) that is a target for the molecular diagnosis into each well. Then, a measuring apparatus such as a scanner optically detects a reaction of the DNA chip to the specimen. Then, a measurement result of the measuring apparatus is analyzed to do the molecular diagnosis.

### Citation List

### Patent Literature

Patent Literature 1: Japanese Unexamined Patent Application Publication No. 2013-181976

### Summary of Invention

### Technical Problem

However, it is preferable that the measuring apparatus (especially, an observing system such as an objective lens of the measuring apparatus) approach the DNA chip as much as possible, in order to detect the reaction of the DNA chip to the specimen with high accuracy. However, in the above described well plate, a technical problem that a side wall constituting the well possibly prevents the measuring apparatus from approaching the DNA chip arises, because the DNA chip is formed at the bottom surface of the well.

On the other hand, a method of forming the DNA chip on a structural object (for example, a columnar structural object) other than the well is imaginable as one method of allowing the measuring apparatus to approach the DNA chip as much as possible. However, when the DNA chip is merely formed on the structural object other than the well, the specimen that is dispensed to react the DNA chip cannot be held by the well. Therefore, it is preferable that the DNA chip be formed in the structural object like the well in order to hold the specimen that is dispensed to react the DNA chip.

Note that this technical problem may arise not only when the DNA chip is formed on the bottom surface of the well but also when any held target (for example, the specimen) is held in a space and any approaching target (for example, the measuring apparatus) is desired to approach a predetermined surface (for example, a surface at which the DNA chip is formed) for forming this space.

It is an object of the present invention to provide a supporting apparatus that is configured to hold any held target in a space and allow any approaching target to approach a predetermined surface that forms this space, and an inspecting method using this supporting apparatus.

### Solution to Problem

A supporting apparatus for solving the above described problem is a supporting apparatus having: a columnar first member; and a cylindrical second member having an inner surface that is allowed to face with at least one portion of an outer surface of the first member, at least one portion of the first member being inserted in a cylinder defined by the inner surface, a state of the first and second members is allowed to change from a first state to a second state, the first state includes a state in which a predetermined space is ensured, the predetermined space is surrounded by at least one portion of the inner surface of the second member and an edge surface at one side of the first member that is different from the outer surface, the second state includes a state in which the second member has moved toward other side that is opposite to the one side relative to the first member from a base position of the first and second members in the first state.

An inspecting method for solving the above described problem is an inspecting method using a supporting apparatus, the supporting apparatus has: a columnar first member; and a cylindrical second member having an inner surface that is allowed to face with at least one portion of an outer surface of the first member, at least one portion of the first member is inserted in a cylinder defined by the inner surface, the inspecting method includes: dispensing an inspected target specimen into a predetermined space in a state where the predetermined space is ensured, the predetermined space is surrounded by at least one portion of the inner surface of the second member and an edge surface at one side of the first member that is different from the outer surface; moving at least one of the first and second members so that the second member is moved toward other side that is opposite to the one side relative to the first member from a base position of the first and second members in dispensing the inspected target specimen; and making a measuring apparatus approach the edge surface at the one side of the first member after moving at least one of the first and second members.

An operation and another advantage of the present invention will become more apparent from the embodiments explained below.

### Brief Description of Drawings

FIG. 1 is a planer view illustrating the supporting apparatus in the first embodiment that is observed from +Z side.
FIG. 2 is a side view illustrating the supporting apparatus in the first embodiment that is observed from +Y side.
FIG. 3 is a I-I' cross sectional view of the supporting apparatus illustrated in FIG. 1.
FIG. 4(a) is a planar view of the first columnar member that is observed from +Z side, FIG. 4(b) is a IV-IV' cross sectional view of the first columnar member illustrated in FIG. 4(a), FIG. 4(c) is a side view of the first columnar member that is observed from +Y side, and FIG. 4(d) is an enlarged cross sectional view near an adhesion member of the IV-IV' cross sectional view of the first columnar member illustrated in FIG. 4(a).
FIG. 5(a) is a planar view of the second columnar member that is observed from +Z side, FIG. 5(b) is a V-V' cross sectional view of the second columnar member illustrated in FIG. 5(a), FIG. 5(c) is a side view of the second columnar member that is observed from +Y side, and FIG. 5(d) is a planar view of the second columnar member that is observed from -Z side.
FIG. 6(a) is a planar view of the cylindrical member that is observed from +Z side, FIG. 6(b) is a VI-VI' cross sectional view of the cylindrical member illustrated in FIG. 6(a), FIG. 6(c) is a side view of the cylindrical member that is observed from +Y side, and FIG. 6(d) is an enlarged cross sectional view near a first inner surface of the VI-VI' cross sectional view of the cylindrical member illustrated in FIG. 6(a).
FIG. 7 is a cross-sectional view illustrating a cross-sectional plane along the XZ plane of the first columnar member, the second columnar member and the cylindrical member in a state where the four protruding parts are fitted to the four hole parts.

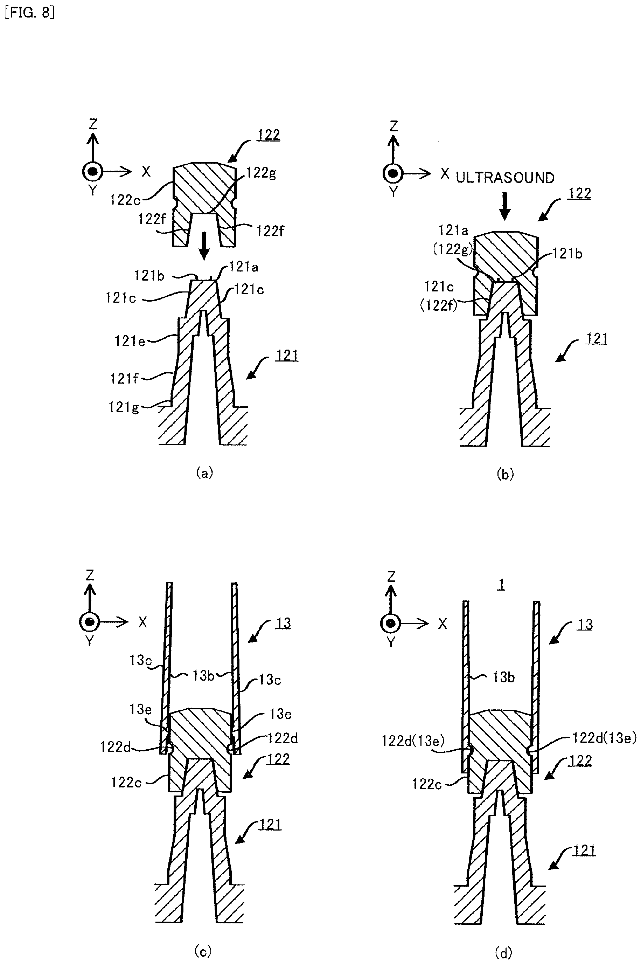

Each of FIG. 8(a) to FIG. 8(d) is a cross-sectional view illustrating a cross-sectional plane along the XZ plane of the supporting apparatus when each process for manufacturing the supporting apparatus in the first embodiment is performed.

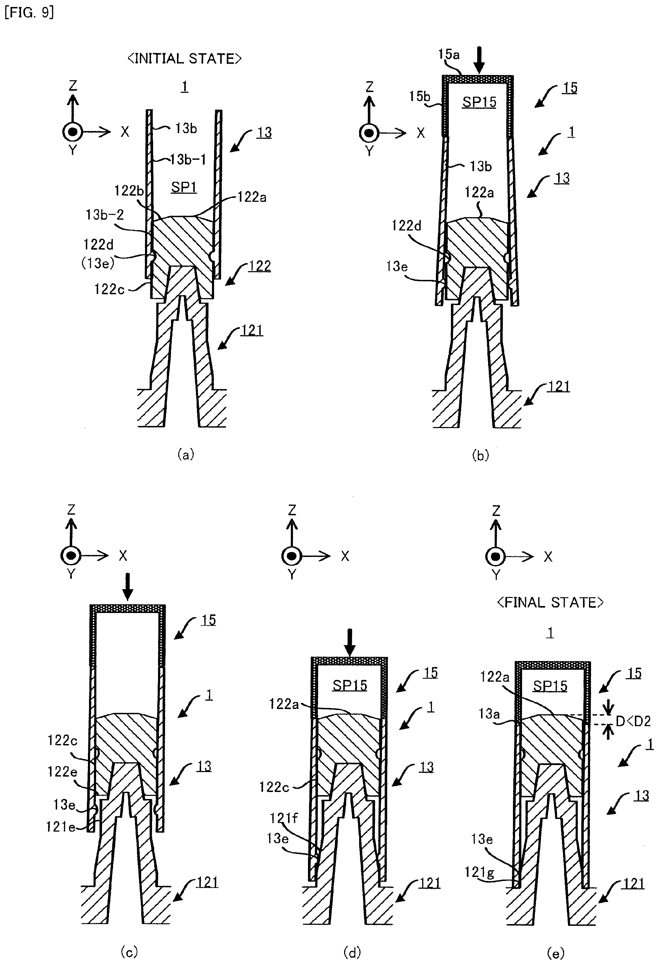

Each of FIG. 9(a) to FIG. 9(e) is a cross-sectional view illustrating a cross-sectional plane along the XZ plane of the supporting apparatus when the supporting apparatus in the first embodiment is used.

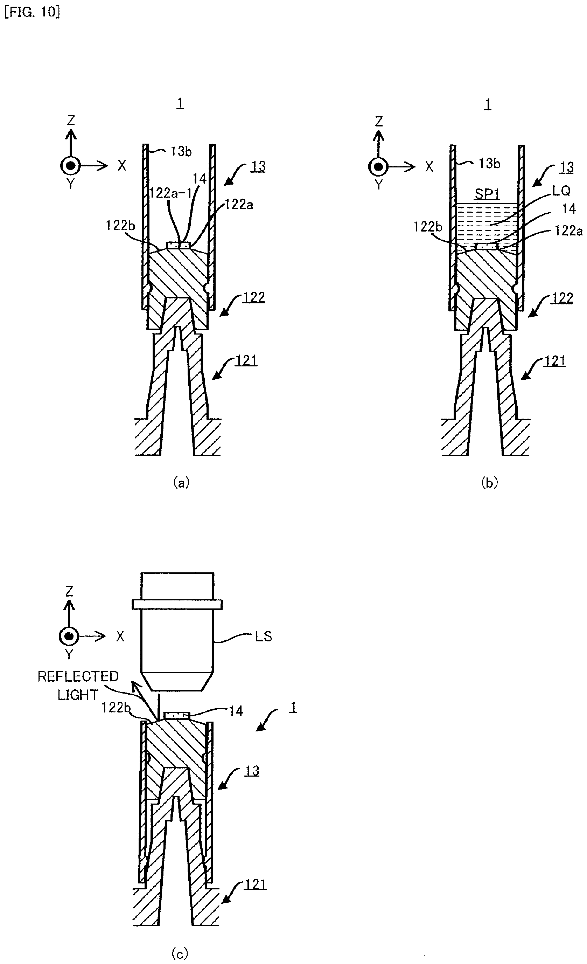

Each of FIG. 10(a) to FIG. 10(c) is a cross-sectional view illustrating a cross-sectional plane along the XZ plane of the supporting apparatus when the supporting apparatus in the first embodiment that supports the biochip is used.

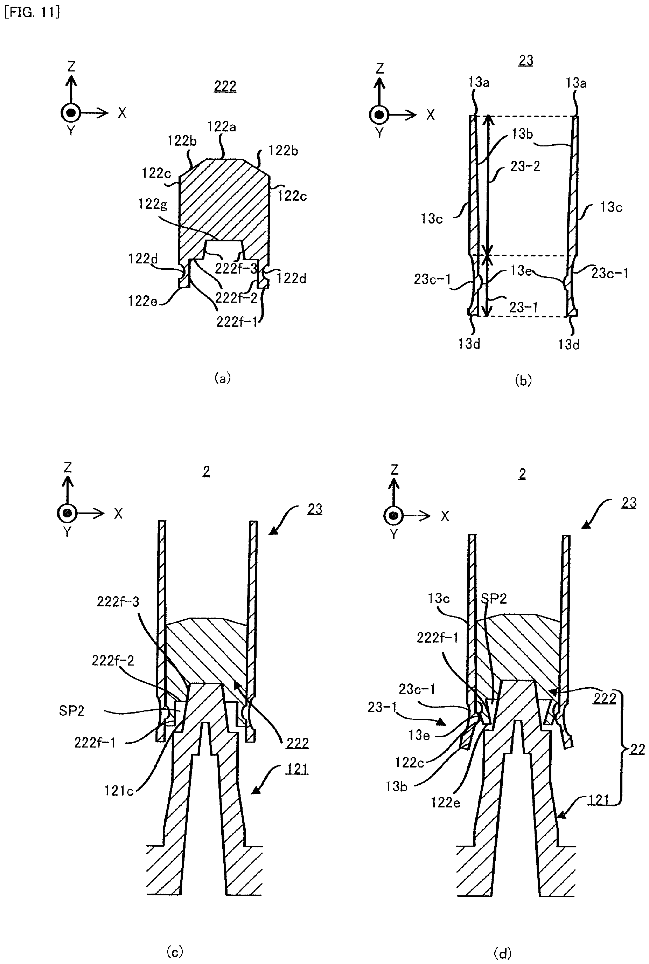

Each of FIG. 11 (a) to FIG. 11(d) is a cross-sectional view illustrating a cross-sectional plane along the XZ plane of the first columnar member, a second columnar member and a cylindrical member of the supporting apparatus in the second embodiment.

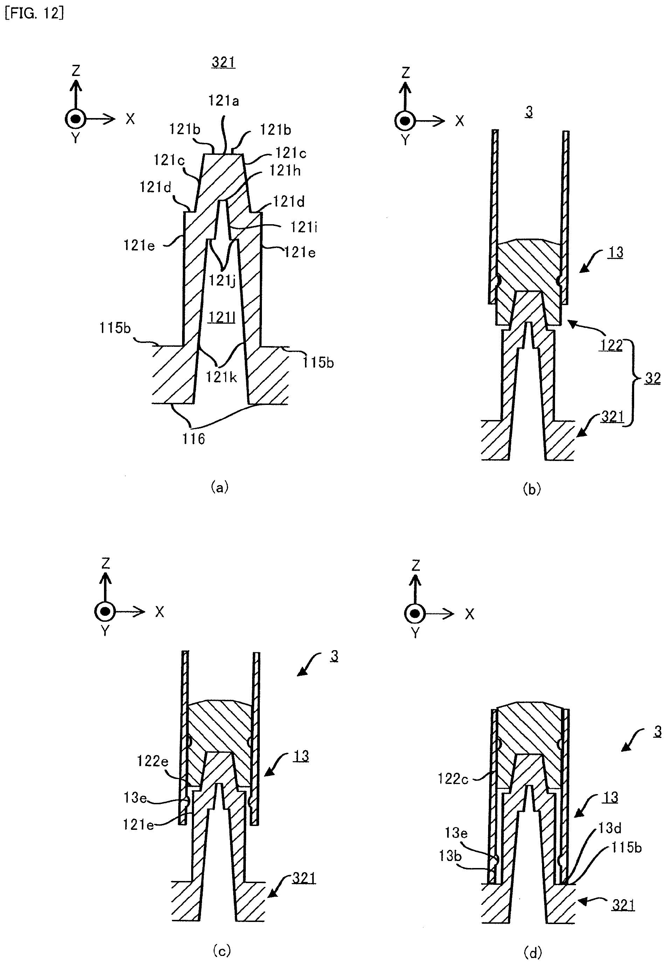

Each of FIG. 12(a) to FIG. 12(d) is a cross-sectional view illustrating a cross-sectional plane along the XZ plane of a first columnar member, the second columnar member and the cylindrical member of the supporting apparatus in the third embodiment.

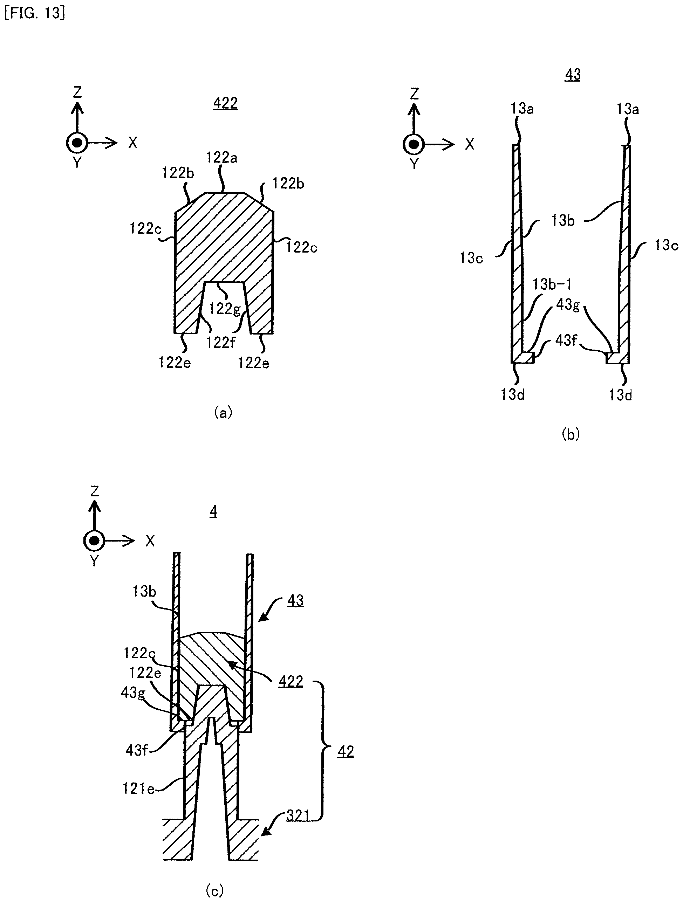

Each of FIG. 13(a) to FIG. 13(c) is a cross-sectional view illustrating a cross-sectional plane along the XZ plane of the first columnar member, a second columnar member and a cylindrical member of the supporting apparatus in the fourth embodiment.

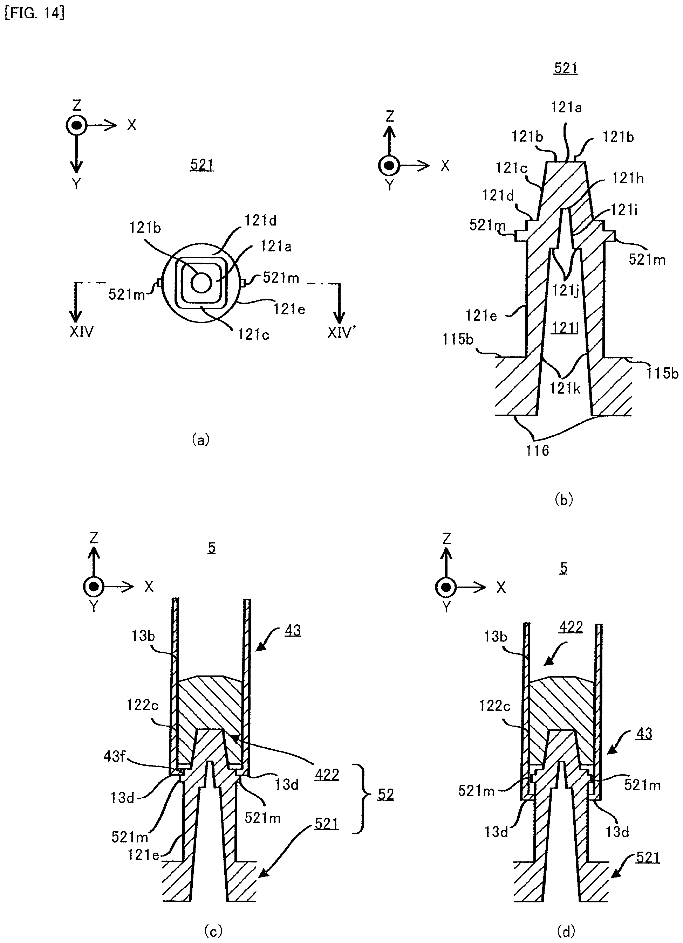

FIG. 14(a) is a planar view of a first columnar member of the supporting apparatus in the fifth embodiment that is observed from +Z side, FIG. 14(b) is a XIV-XIV' cross sectional view of the first columnar member illustrated in FIG. 14(a), Each of FIG. 14(c) to FIG. 14(d) is a cross-sectional view illustrating a cross-sectional plane along the XZ plane of the first columnar member, the second columnar member and the cylindrical member of the supporting apparatus in the fifth embodiment.

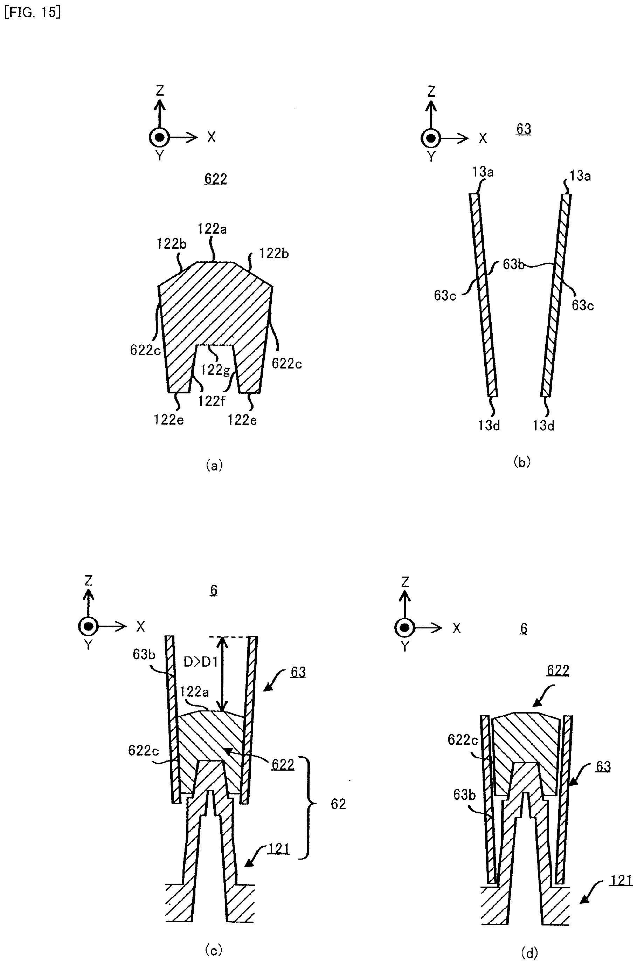

Each of FIG. 15(a) to FIG. 15(d) is a cross-sectional view illustrating a cross-sectional plane along the XZ plane of the first columnar member, the second columnar member and the cylindrical member of the supporting apparatus in the sixth embodiment.

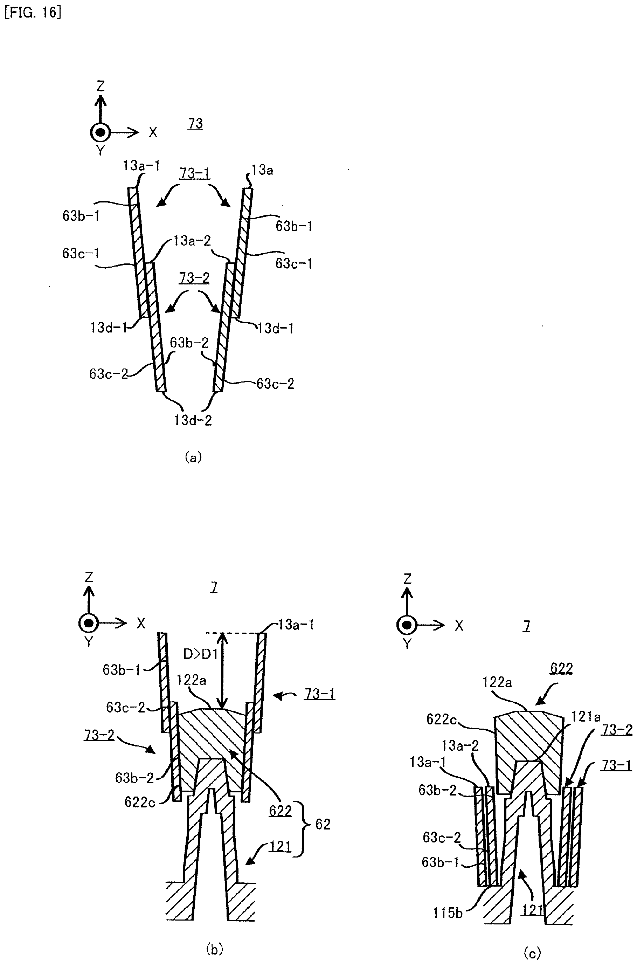

Each of FIG. 16(a) to FIG. 16(c) is a cross-sectional view illustrating a cross-sectional plane along the XZ plane of the first columnar member, the second columnar member and a cylindrical member of the supporting apparatus in the seventh embodiment.

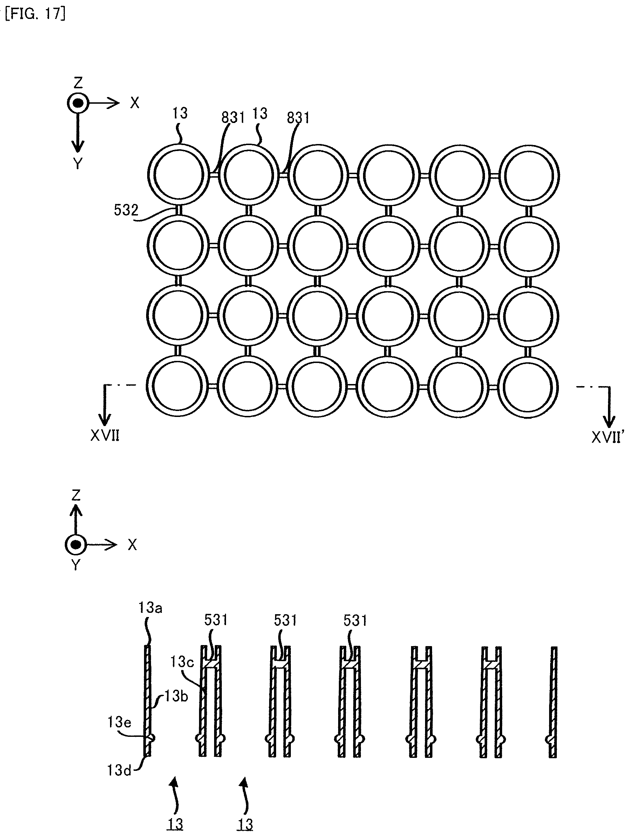

FIG. 17(a) is a planar view of the cylindrical members of the supporting apparatus in the eighth embodiment that is observed from +Z side, and FIG. 17(b) is a XVII-XVII' cross sectional view of the cylindrical members illustrated in FIG. 17(a).

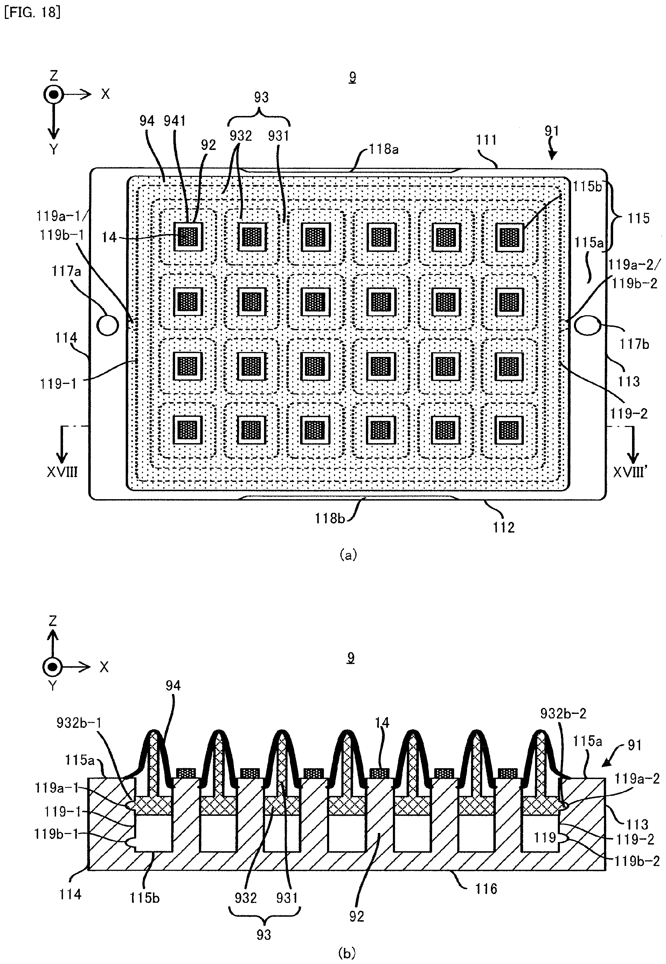

FIG. 18(a) is a planar view of the supporting apparatus in the ninth embodiment that is observed from +Z side, and FIG. 18(b) is a XVIII-XVIII' cross sectional view of the supporting apparatus illustrated in FIG. 18(a).

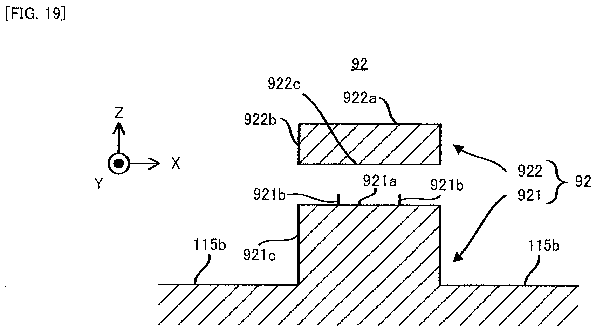

FIG. 19 is a cross-sectional view illustrating a cross-sectional plane along the XZ plane of a first columnar member and a second columnar member of the columnar member.

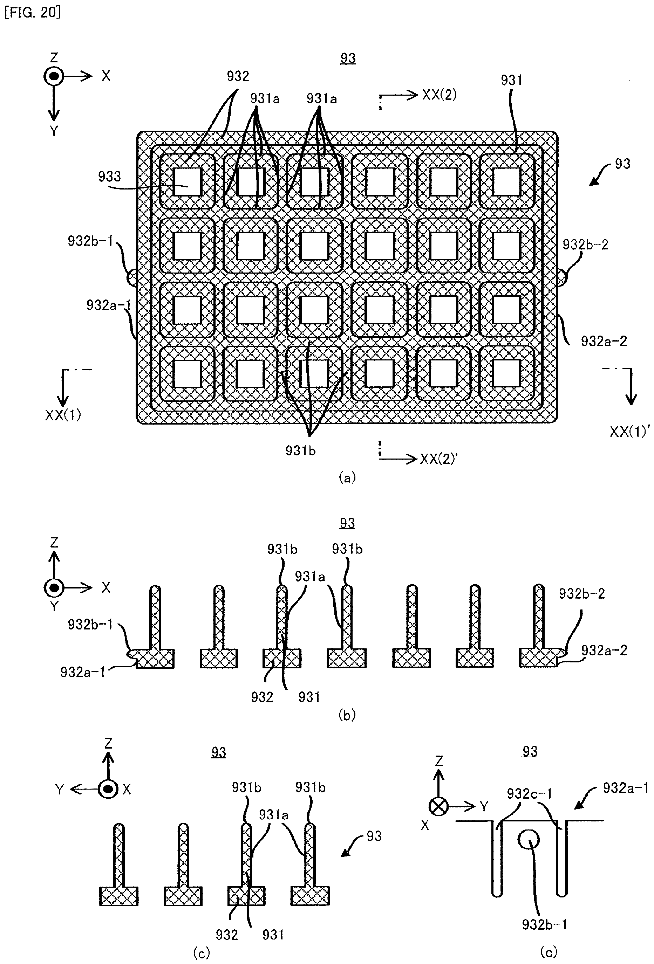

FIG. 20(a) is a planar view of the movable member that is observed from +Z side, FIG. 20(b) is a XX(1)-XX(1)' cross sectional view of the movable member illustrated in FIG. 20(a), FIG. 20(c) is a XX(2)-XX(2)' cross sectional view of the movable member illustrated in FIG. 20(a), FI. 20(d) is an enlarged view of a first surface at which the protruding part is formed.

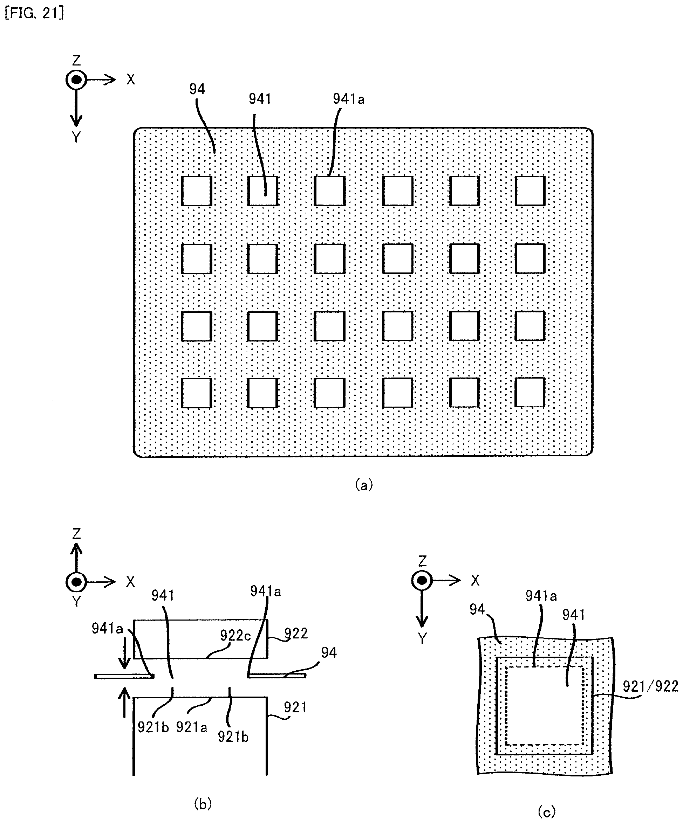

FIG. 21 (a) is a planar view of the rubber film that is observed from +Z side, FIG. 21(b) is a cross-sectional view along the XZ plane illustrating the columnar member and the rubber film fixed to the columnar member, and FIG. 21(c) is a is a planer view illustrating the columnar member and the rubber film fixed to the columnar member that are observed from +Z side.

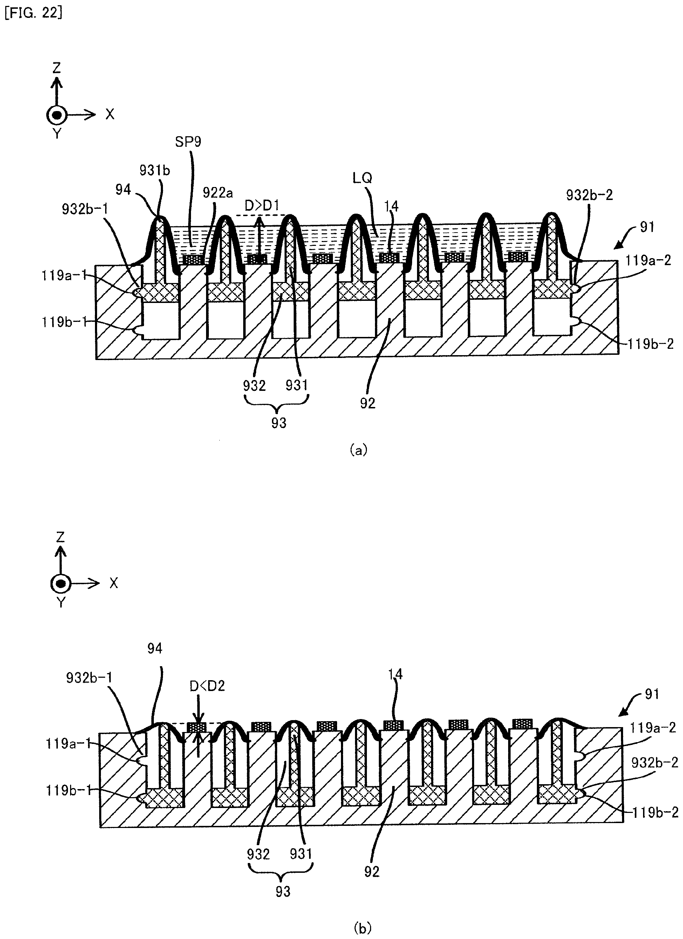

FIG. 22(a) is a cross-sectional view illustrating a cross-sectional plane along the XZ plane of the supporting apparatus in the initial state, and FIG. 22(b) is a cross-sectional view illustrating a cross-sectional plane along the XZ plane of the supporting apparatus in the final state.

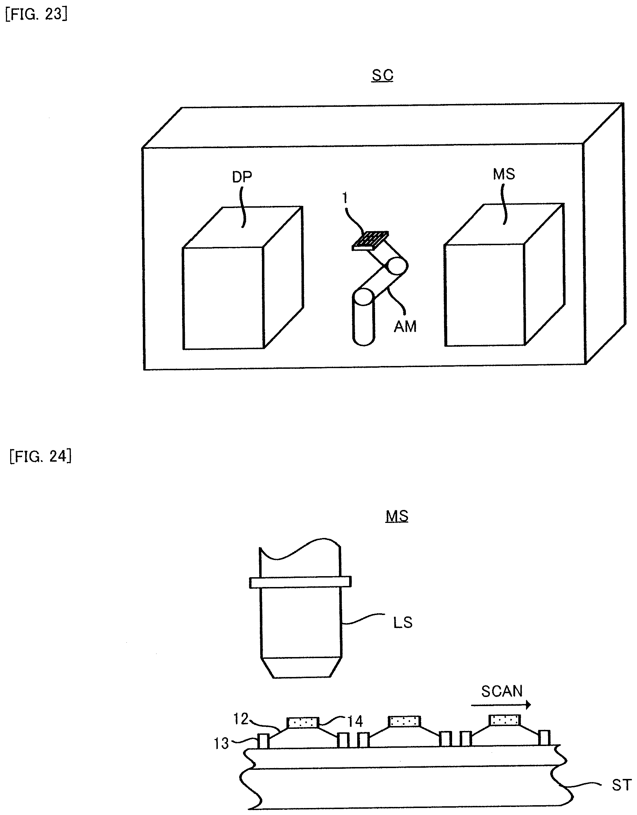

FIG. 23 is a schematic diagram illustrating one example of the structure of the inspecting apparatus in the present embodiment.

FIG. 24 is a schematic diagram illustrating one example of the structure of the measuring apparatus in the present embodiment.

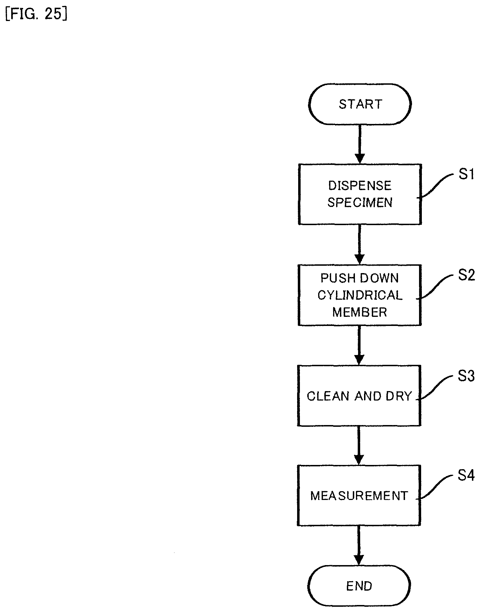

FIG. 25 is a flowchart illustrating the inspecting operation (the operation from the dispensing of the specimen to the measuring of the reaction of the biochip) performed by the inspecting apparatus.

### Description of Embodiments

Hereinafter, with reference to drawings, an embodiment of the supporting apparatus and the inspecting apparatus of the present invention will be described. However, the present invention is not limited to the below described embodiments.

In the description below, a positional relationship of components that constitute a supporting apparatus will be described by using an XYZ rectangular coordinate system defined by an X axis, a Y axis and a Z axis that are perpendicular to one another. In the description below, each of an X axis direction and a Y axis direction is a horizontal direction (namely, a predetermined direction in a horizontal plane) and a Z axis direction is a vertical direction (namely, a direction that is perpendicular to the horizontal plane, and substantially an up-down direction).

### (1) A supporting apparatus 1 in a first embodiment

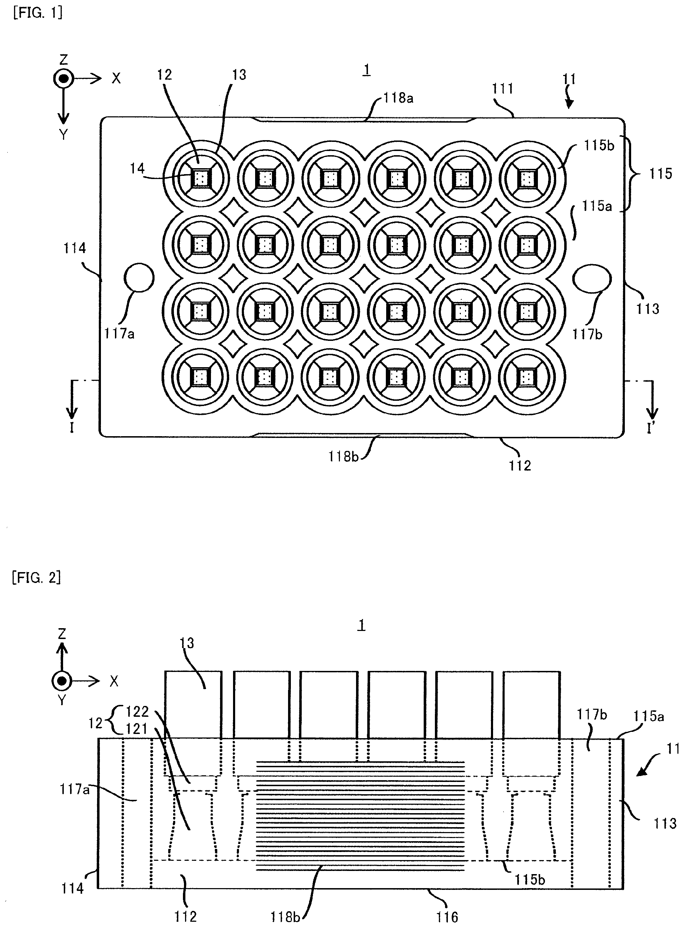

With reference to FIG. 1 to FIG. 9, a supporting apparatus 1 in a first embodiment will be described. In the description below, a structure of the supporting apparatus 1 in the first embodiment, a method of manufacturing the supporting apparatus 1 in the first embodiment and a method of using the supporting apparatus 1 in the first embodiment will be described in order, for the purpose of illustration.

### (1-1) A structure of the supporting apparatus 1 in the first embodiment

Firstly, with reference to FIG. 1 to FIG. 6, the structure of the supporting apparatus 1 in the first embodiment will be described. In the description below, an entire structure of the supporting apparatus 1, a structure of each member (mainly, a columnar member 12 and a cylindrical member 13 described later) that constitutes the supporting apparatus 1 and a relative positional relationship between the members that constitute the supporting apparatus 1 will be described.

### (1-1-1) An entire structure of the supporting apparatus 1 in the first embodiment

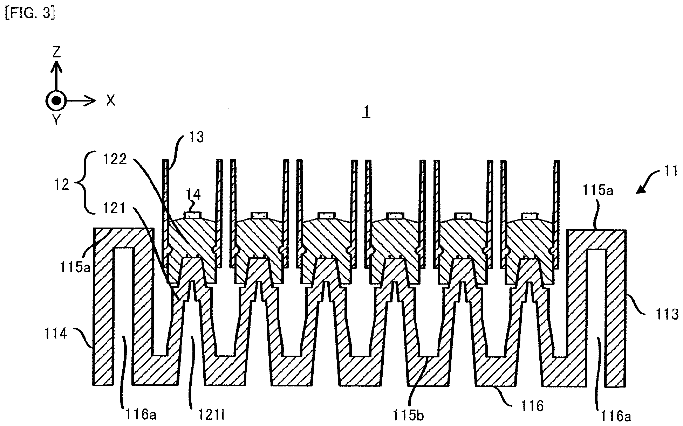

With reference to FIG. 1 to FIG. 3, the entire structure of the supporting apparatus 1 in the first embodiment will be described. FIG. 1 is a planer view illustrating the supporting apparatus 1 in the first embodiment that is observed from +Z side. FIG. 2 is a side view illustrating the supporting apparatus 1 in the first embodiment that is observed from +Y side. FIG. 3 is a I-I' cross sectional view of the supporting apparatus 1 illustrated in the FIG. 1.

As illustrated in FIG. 1 to FIG. 3, the supporting apparatus 1 has a base member 11. The base member 11 is made from resin material. The base member 11 is made from a translucent material. The base member 11 is made from a material having thermal plasticity. An acrylate resin such as PMMA (Poly Methyl Methacrylate) is one example of this material (the resin material).

The base member 11 is a plate-like member having a rectangular shape in a planar view. The base member 11 has a first surface 111, a second surface 112, a third surface 113, a fourth surface 114, a fifth surface 115 and a sixth surface 116.

The first surface 111 is a surface parallel to the XZ plane. A shape of the first surface 111 is an oblong shape. Note that the first surface 111 may be referred to as a "first side surface 111", if needed.

The second surface 112 is a surface parallel to the XZ plane. The second surface 112 is a surface parallel to the first surface 111. The second surface 112 is a plane located at +Y side than the first surface 111. A shape of the second surface 112 is an oblong shape. The shape of the second surface 112 is same as the shape of the first surface 111. Note that the second surface 112 may be referred to as a "second side surface 112", if needed.

The third surface 113 is a surface parallel to the YZ plane. The third surface 113 is a surface that is configured to connect an edge (especially, an edge that is located at +X side and that is parallel to the Z axis) of the first surface 111 and an edge (especially, an edge that is located at +X side and that is parallel to the Z axis) of the second surface 112. A shape of the third surface 113 is an oblong shape. Note that the third surface 113 may be referred to as a "third side surface 113", if needed.

The fourth surface 114 is a surface parallel to the YZ plane. The fourth surface 114 is a surface parallel to the third surface 113. The fourth surface 114 is a surface located at -X side than the third surface 113. The fourth surface 114 is a surface that is configured to connect an edge (especially, an edge that is located at -X side and that is parallel to the Z axis) of the first surface 111 and an edge (especially, an edge that is located at -X side and that is parallel to the Z axis) of the second surface 112. A shape of the fourth surface 114 is an oblong shape. The shape of the fourth surface 114 is same as the shape of the third surface 113. Note that the fourth surface 114 may be referred to as a "fourth side surface 114", if needed.

The fifth surface 115 is a surface parallel to the XY plane. The fifth surface 115 is a surface that is configured to connect edges (especially, edges that are located at +Z side and that is parallel to the ZY plane) of the first surface 111, the second surface 112, the third surface 113 and the fourth surface 114. The fifth surface 115 is a surface perpendicular to each of the first surface 111, the second surface 112, the third surface 113 and the fourth surface 114. A shape of the fifth surface 115 is an oblong shape. The fifth surface 115 is a lapped surface. Note that the fifth surface 115 may be referred to as an "upper surface 115", if needed.

The fifth surface 115 includes an upper surface 115a and a lower surface 115b.

The upper surface 115a is a surface that is located near an edge of the fifth surface 115. The upper surface 115a is a surface located at +Z side than the lower surface 115b. The upper surface 115a is a surface having a height (for example, a height from a base position that is the sixth surface 116) larger than the height of the lower surface 115b. The upper surface 115a is a surface at which the below described columnar members 12 are not formed.

The lower surface 115b is a surface surrounded by the upper surface 115a on the XY plane. The lower surface 115b is a surface located at -Z side than the upper surface 115a. The lower surface 115b is a surface having a height (for example, a height from a base position that is the sixth surface 116) smaller than the height of the upper surface 115a. The lower surface 115b is a surface at which the below described columnar members 12 are formed. Note that the side view of the supporting apparatus 1 in FIG. 2 illustrates each of the lower surface 115b and the columnar members 12 formed on the lower surface 115b by dashed line.

The sixth surface 116 is a surface parallel to the XY plane. The sixth surface 116 is a surface parallel to the fifth surface. The sixth surface 116 is a surface located at -Z side than the fifth surface 115. The sixth surface 116 is a surface that is configured to connect edges (especially, edges that are located at -Z side and that is parallel to the XY plane) of the first surface 111, the second surface 112, the third surface 113 and the fourth surface 114. The sixth surface 116 is a surface perpendicular to each of the first surface 111, the second surface 112, the third surface 113 and the fourth surface 114. A shape of the sixth surface 116 is an oblong shape. The sixth surface 116 is a lapped surface. Note that the sixth surface 116 may be referred to as a "lower surface 116", if needed.

A hole part 116a is formed at the sixth surface 116 (see FIG. 3). The hole part 116a is a hole extending from the sixth surface 116 toward +Z side. The hole part 116a may not be a through hole that penetrates the base member 11 from the sixth surface 116 to the fifth surface 115. The hole part 116a is formed mainly for the purpose of reducing a weight of the base member 11 or reducing a manufacturing cost of the base member 11.

A first through hole part 117a and a second through hole part 117b are formed at the base member 11. Each of the first through hole part 117a and the second through hole part 117b is a through hole that penetrates the base member 11 from the upper surface 115a of the fifth surface 115 to the sixth surface 116. Therefore, an aperture of each of the first through hole part 117a and the second through hole part 117b is formed at each of the upper surface 115a and the sixth surface 116. Note that the side view of the supporting apparatus 1 in FIG. 2 illustrates each of the first through hole part 117a and the second through hole part 117b that penetrates the base member 11 from the upper surface 115a to the sixth surface 116 by dashed line. The first through hole part 117a and the second through hole part 117b are formed so that a line that connects a center of the first through hole part 117a and a center of the second through hole part 117b is parallel to the X axis. A shape of an edge of the first through hole part 117a on the XY plane is different from a shape of an edge of the second through hole part 117b on the XY plane. In an example illustrated in FIG. 1, the shape of the edge of the first through hole part 117a is a circular shape and the shape of the edge of the second through hole part 117b is an oval shape in which a long axis is along the X axis.

The first through hole part 117a and the second through hole part 117b are used to adjust the position of the supporting apparatus 1 in a below described dispensing apparatus DP and a below described measuring apparatus MS (see FIG. 23). For example, the first through hole part 117a and the second through hole part 117b are used to adjust the position of the supporting apparatus 1 so that positioning pins formed on a stage of the dispensing apparatus DP or the measuring apparatus MS are inserted to the first through hole part 117a and the second through hole part 117b.

A groove part 118a and a groove part 118b are formed at the base member 11. The groove part 118a is formed at the first surface 111. The groove part 118b is formed at the second surface 112. The groove parts 118a and 118b are formed at symmetric positions. Each of the groove parts 118a and 118b includes a plurality of grooves (for example, grooves each having a V-notch bottom part in a cross-sectional direction) each of which extends along the X axis and that are arranged along the Y axis. A length in the X axis of each of the groove parts 118a and 118b is equal to or larger than half of a length in the X axis of at least one of the first surface 111 and the second surface 112.

The groove parts 118a and 118b are used as an area at which the supporting apparatus 1 is held by the transporting apparatus AM (see FIG. 23) that is configured to transport the supporting apparatus 1 from the below described dispensing apparatus DP to the below described measuring apparatus MS.

Furthermore, the supporting apparatus 1 has a plurality of columnar members 12. Each columnar member 12 has a columnar shape extending along the Z axis. A shape of an edge of each columnar members 12 on the XY plane is a circular shape. The plurality of columnar members 12 are formed on the lower surface 115b of the base member 11. The plurality of columnar members 12 are formed in a matrix arrangement. In an example illustrated in FIG. 1 to FIG. 3, 24 columnar members 12 are formed in a matrix arrangement of 4 columns x 6 rows.

Each columnar member 12 is made from resin material. Each columnar member 12 is made from a translucent material. Each columnar member 12 is made from a material having thermal plasticity. Each columnar member 12 is made from a material that is same as the material from which the base member 11 is made. Each columnar member 12 is made from a material that allows erectness of each columnar member 12 (a character that represents a difficulty of a distortion of the columnar member 12 in a direction intersecting with the Z axis) to be relatively large. The above described acrylate resin such as the PMMA is one example of this material.

Each columnar member 12 includes a first columnar member 121 and a second columnar member 122.

The first columnar member 121 is formed on the lower surface 115b of the base member 11. The first columnar member 121 is a columnar member extending from the lower surface 115b toward +Z side. A shape of the edge of the first columnar member 121 on the XY plane is a circular shape. The first columnar member 121 is unified with the base member 11. The first columnar member 121 and the base member 11 are molded integrally. A hole part 1211 extending in the Z axis is formed inside the first columnar member 121. The hole part 1211 forms an aperture at the sixth surface 116 of the base member 11. The hole part 1211 is formed mainly for the purpose of reducing the weight of the base member 11.

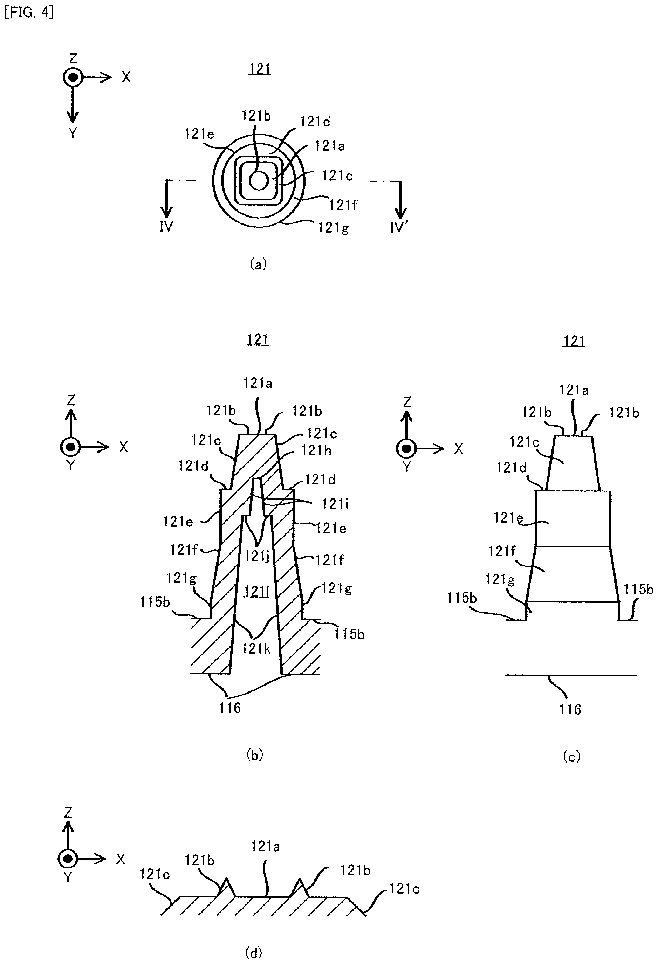

Note that the detailed description of the first columnar member 121 is omitted here, because it will be described later in detail (see FIG. 4).

The second columnar member 122 is formed on the first columnar member 121. The second columnar member 122 is a columnar member extending from the first columnar member 121 toward +Z side. A shape of the edge of the second columnar member 122 on the XY plane is a circular shape. The second columnar member 122 is fixed to the first columnar member 121 by adhesion (for example, ultrasound adhesion). The second columnar member 122 is a member that is configured to support a desired supported target. A biochip 14 used for a molecular diagnosis is one example of the desired supported target.

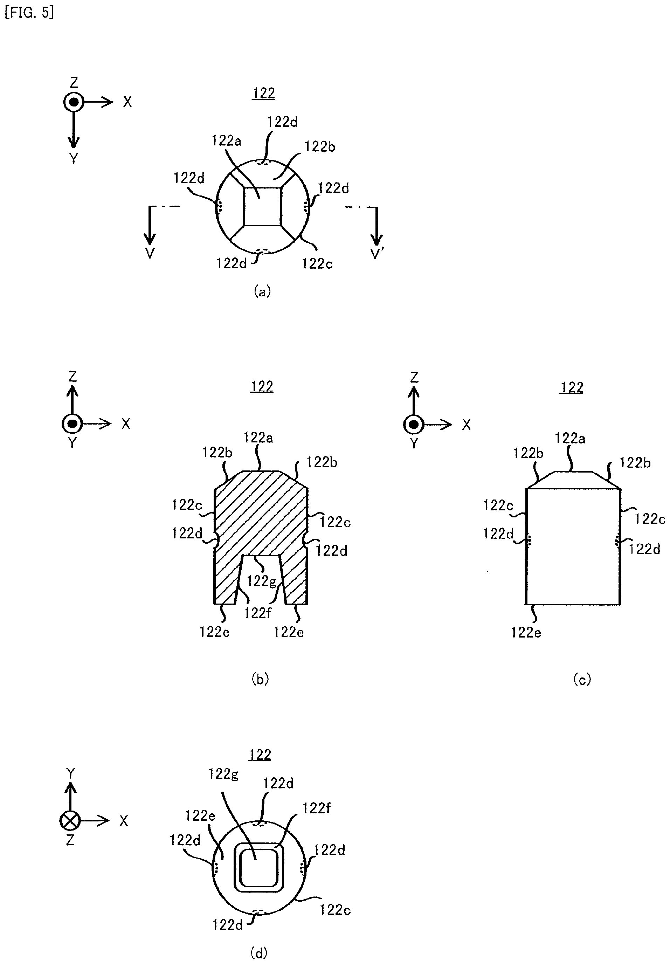

Note that the detailed description of the second columnar member 122 is omitted here, because it will be described later in detail (see FIG. 5).

Furthermore, the supporting apparatus 1 has a plurality of cylindrical members 13. Each cylindrical member 13 is a cylindrical member extending in the Z axis. A shape of an edge at each of an inner side direction and an outer side direction of the cylindrical member 13 on the XY plane is a circular shape. Namely, the shape of the cylindrical member 13 on the XY plane is a ring shape. Each cylindrical member 13 is used with respective one columnar member 12 that corresponds to each cylindrical member 13. Thus, the supporting apparatus 1 has 24 cylindrical members 13. Each cylindrical member 13 is fitted to respective one columnar member 12 that corresponds to each cylindrical member 13 so that at least one portion of respective one member 12 that corresponds to each cylindrical member 13 is housed or inserted in a space in each cylindrical member 13. Note that the side view of the supporting apparatus 1 in FIG. 2 illustrates the cylindrical members 13 that are fitted to the columnar members 12 by dashed line.

Each cylindrical member 13 is made from resin material. Each cylindrical member 13 is made from an elastic material. Each cylindrical member 13 is made from a material having higher elasticity than the material from which each columnar member 12 is made. Each cylindrical member 13 is made from a material that can be distorted more easily than the material from which each columnar member 12 is made. Each cylindrical member 13 is made from a material that is different from the material from which the each columnar member 12 is made. LDPE (Low Density PolyEthylene) and the like is one example of this material.

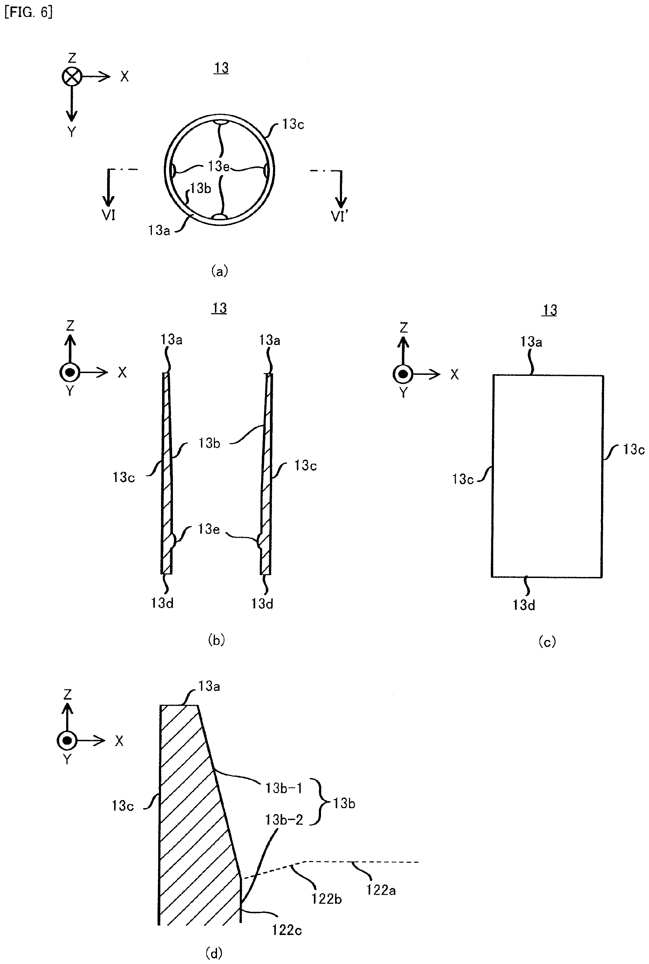

Note that the detailed description of the cylindrical member 13 is omitted here, because it will be described later in detail (see FIG. 6).

Note that the supporting apparatus 1 described by using FIG. 1 to FIG. 3 is one example. Thus, one portion of the structure of the supporting apparatus 1 may be changed. In the description below, an example of the supporting apparatus 1 in which one portion of the structure has been changed will be described.

The base member 11 may be made from a resin other than the acrylate resin. For example, the base member 11 may be made from PC (PolyCarbonate). The base member 11 may be made from COC (Cycloolefin Copolymer). The base member 11 may be made from PS (PolyStyrene). The base member 11 may be made from a material other than the resin. The base member 11 may be made from a material not having a translucency. The base member 11 may be made from a material not having the thermal plasticity. The base member 11 may not be the plate-like member having the rectangular shape in a planar view.

At least one portion of the first surface 111 may be a surface that is inclined with respect to (in other words, may intersect with, same is true in the following description) the XZ plane. At least one portion of the first surface 111 may be a curved surface. The shape of the first surface 111 may be a shape (for example, any polygonal shape, a circular shape or an oval shape) different from the rectangular shape.

At least one portion of the second surface 112 may be a surface that is inclined with respect to the XZ plane. At least one portion of the second surface 112 may be a curved surface. At least one portion of the second surface 112 may be a surface that is inclined with respect to the first surface 111. The shape of the second surface 112 may be a shape (for example, any polygonal shape, a circular shape or an oval shape) different from the rectangular shape. The shape of the second surface 112 may be a shape different from the shape of the first surface 111.

At least one portion of the third surface 113 may be a surface that is inclined with respect to the YZ plane. At least one portion of the third surface 113 may be a curved surface. The shape of the third surface 113 may be a shape (for example, any polygonal shape, a circular shape or an oval shape) different from the rectangular shape.

At least one portion of the fourth surface 114 may be a surface that is inclined with respect to the YZ plane. At least one portion of the fourth surface 114 may be a curved surface. At least one portion of the fourth surface 114 may be a surface that is inclined with respect to the third surface 113. The shape of the fourth surface 114 may be a shape (for example, any polygonal shape, a circular shape or an oval shape) different from the rectangular shape. The shape of the fourth surface 114 may be a shape different from the shape of the third surface 113.

At least one portion of the fifth surface 115 may be a surface that is inclined with respect to the XY plane. At least one portion of the fifth surface 115 may be a curved surface. At least one portion of the fifth surface 115 may be a surface that is inclined with respect to at least one of the first surface 111, the second surface 112, the third surface 113 and the fourth surface 114 at any angle. The shape of the fifth surface 115 may be a shape (for example, any polygonal shape, a circular shape or an oval shape) different from the rectangular shape. The fifth surface 115 may be a not-lapped surface.

The fifth surface 115 may not include at least one of the upper surface 115a and the lower surface 115b. In this case, the columnar members 12 may be formed on at least one portion of the fifth surface 115. The upper surface 115a may be a surface located at a position different from a vicinity of the edge of the fifth surface 115. At least one portion of the upper surface 115a may be a surface at which the columnar member 12 is formed. At least one portion of the lower surface 115b may be a surface that is not surrounded by the upper surface 115a on the XY plane. At least one portion of the lower surface 115b may be a surface at which the columnar member 12 is not formed.

At least one portion of the sixth surface 116 may be a surface that is inclined with respect to the XY plane. At least one portion of the sixth surface 116 may be a curved surface. At least one portion of the sixth surface 116 may be a surface that is inclined with respect to the fifth surface 115. At least one portion of the sixth surface 116 may be a surface that is inclined with respect to at least one of the first surface 111, the second surface 112, the third surface 113 and the fourth surface 114 at any angle. The shape of the sixth surface 116 may be a shape (for example, any polygonal shape, a circular shape or an oval shape) different from the rectangular shape. The sixth surface 116 may be a not-lapped surface.

The hole part 116a may not be formed at the sixth surface 116. The hole part 116a may not be the hole extending from the sixth surface 116 toward +Z side. The hole part 116a may be a hole extending from the sixth surface 116 toward any direction. The hole part 116a may be the through hole that penetrates the base member 11 from the sixth surface 116 to the fifth surface 115.

The first through hole part 117a and the second through hole part 117b may not be formed at the base member 11. In this case, another method that does not use the first through hole part 117a and the second through hole part 117b may be used to adjust the position of the supporting apparatus 1.

At least one of the first through hole part 117a and the second through hole part 117b may be formed at any position of the base member 11. At least one of the first through hole part 117a and the second through hole part 117b may not be the through hole that penetrates the base member 11 from the upper surface 115a of the fifth surface 115 to the sixth surface 116. At least one of the first through hole part 117a and the second through hole part 117b may be a hole part, a concave part or a depressed part by which an aperture is formed at the upper surface 115a (alternatively, another surface of the base member 11). At least one of the first through hole part 117a and the second through hole part 117b may be a hole part, a concave part or a depressed part by which an aperture is formed at the sixth surface 116 (alternatively, another surface of the base member 11).

The first through hole part 117a and the second through hole part 117b may be formed so that the line that connects the center of the first through hole part 117a and the center of the second through hole part 117b intersects with the X axis. The shape of the edge of the first through hole part 117a on the XY plane may be any shape (for example, any polygonal shape or an oval shape) different from the circular shape. The shape of the edge of the second through hole part 117b on the XY plane may be any shape (for example, any polygonal shape or a circular shape) different from the oval shape in which the long axis is along the X axis.

At least one of the groove parts 118a and 118b may not be formed at the base member 11. The groove part 118a may be formed at another surface of the base member 11 different from the first surface 111. The groove part 118b may be formed at another surface of the base member 11 different from the second surface 112. The groove parts 118a and 118b may not be formed at symmetric positions. The length in the X axis of at least one of the groove parts 118a and 118b may be smaller than half of the length in the X axis of at least one of the first surface 111 and the second surface 112.

The supporting apparatus 1 may have 23 or less (for example, 6) columnar members 12. The supporting apparatus 1 may have 25 or more (for example, 96 or 384) columnar members 12. The supporting apparatus 1 may have single columnar member 12. One or more columnar member 12 may be formed on another surface of the base member 11 different from the lower surface 115b. One or more columnar member 12 may be a columnar member extending from any surface toward any direction. The plurality of columnar members 12 may be formed to arrange in any arrangement manner different from the matrix arrangement manner. The shape of the edge of the columnar member 12 on the XY plane may be a shape (for example, any rectangular shape or an oval shape) different from the circular shape.

Each columnar member 12 may be made from a resin other than the acrylate resin such as the PMMA. For example, each columnar member 12 may be made from the above described PC. Each columnar member 12 may be made from the above described COC. Each columnar member 12 may be made from the above described PS. Each columnar member 12 may be made from PPE (modified PolyPhenyleneEther). Each columnar member 121 may be made from a material other than the resin. Each columnar member 12 may be made from a material not having a translucency. Each columnar member 12 may be made from a material not having the thermal plasticity. Each columnar member 12 may be made from a material different from the material from which the base member 11 is made.

The columnar member 12 may not include at least one of the first columnar member 121 and the second columnar member 122. The first columnar member 121 and the second columnar member 122 may be unified. The first columnar member 121 and the second columnar member 122 may be molded integrally.

The first columnar member 121 may be formed on another surface of the base member 11 different from the lower surface 115b. The first columnar member 121 may be a columnar member extending from any surface toward any direction. The shape of the edge of the first columnar member 121 on the XY plane may be a shape (for example, any polygonal shape or an oval shape) different from the circular shape. The first columnar member 121 may not be unified with the base member 11. The first columnar member 121 and the base member 11 are molded separately. The hole part 1211 may not be formed inside the first columnar member 121. The hole part 1211 extending in a direction different from the direction along the Z axis may be formed inside the first columnar member 121. The hole part 1211 may not form the aperture. The hole part 1211 may form the aperture at another surface of the base member 11 different from the sixth surface 116.

The second columnar member 122 may be a columnar member extending from the first columnar member 121 toward any direction. The shape of the edge of the second columnar member 122 on the XY plane may be a shape (for example, any rectangular shape or an oval shape) different from the circular shape. The second columnar member 122 may be fixed to the first columnar member 121 by a method different from the adhesion (for example, the ultrasound adhesion).

The supporting apparatus 1 may have 23 or less (for example, 6) cylindrical members 13. The supporting apparatus 1 may have 25 or more (for example, 96 or 384) cylindrical members 13. The supporting apparatus 1 may have single cylindrical member 13. One or more cylindrical member 13 may be a cylindrical member extending toward any direction. The shape of the edge at at least one of the inner side direction and the outer side direction of the cylindrical member 13 on the XY plane may be a shape (for example, any rectangular shape or an oval shape) different from the circular shape.

Each cylindrical member 13 may be made from a resin different from LDPE. For example, each cylindrical member 13 may be made from PTFE (PolyTetraFluoroEthylene). Each cylindrical member 13 may be a material not having the elasticity. Each cylindrical member 13 may not be made from the material having higher elasticity than the material from which each columnar member 12 is made. Each cylindrical member 13 may not be made from the material that can be distorted more easily than the material from which each columnar member 12 is made. Each cylindrical member 13 may be made from a material that is same as the material from which the each columnar member 12 is made.

### (1-1-2) A structure of the first columnar member 121

Next, with reference to FIG. 4(a) to FIG. 4(d), the first columnar member 121 of the supporting apparatus 1 in the first embodiment will be described. FIG. 4(a) is a planar view of the first columnar member 121 that is observed from +Z side. FIG. 4(b) is a IV-IV' cross sectional view of the first columnar member 121 illustrated in FIG. 4(a). FIG. 4(c) is a side view of the first columnar member 121 that is observed from +Y side. FIG. 4(d) is an enlarged cross sectional view near adhesion members 121b of the IV-IV' cross sectional view of the first columnar member 121 illustrated in FIG. 4(a).

As illustrated in FIG. 4(a) to FIG. 4(c), the first columnar member 121 has a first upper surface 121 a, adhesion members 121b, a first outer surface 121c, a second upper surface 121 d, a second outer surface 121e, a third outer surface 121f, a fourth outer surface 121 g, a first lower surface 121 h, a first inner surface 121 i, a second lower surface 121 j and a second inner surface 121k.

The first upper surface 121a is a surface parallel to the XY plane. The first upper surface 121a is a surface located at the most +Z side among the surfaces of the first columnar member 121. The first upper surface 121a is a surface facing toward +Z side. A shape of an edge of the first upper surface 121 a on the XY plane is a square shape.

The adhesion members 121b are formed on the first upper surface 121a. The adhesion members 121b are members that are unified with the first upper surface 121 a. The adhesion members 121b are arranged on the first upper surface 121 a in an arrangement manner forming a ring-shape. A shape of an edge of the adhesion member 121b on the XZ plane is a triangle shape (see FIG. 4(d)). A center of the adhesion members 121b that are arranged in the arrangement manner forming the ring-shape (namely, a center of the ring-shape on the XY plane) corresponds to a center of the first upper surface 121 a on the XY plane (namely, a center of the circular shape). The adhesion members 121b melt due to an irradiation of ultrasound when the first columnar member 121 is fixed to the second columnar member 122. As a result, the adhesion members 121b serve as an adhesive material and thus the first columnar member 121 is fixed to the second columnar member 122.

The first outer surface 121c is a surface extending from the edge of the first upper surface 121 a toward -Z side. The first outer surface 121c faces toward a direction away from a center line of the first columnar member 121 parallel to the Z axis (specifically, a line that is parallel to the Z axis and that passes through the center of the first upper surface 121 a on the XY plane). Note that, in the following description, the direction away from the center line of the first columnar member 121 parallel to the Z axis is referred to as an "outer side direction" and a direction approaching the center line of the first columnar member 121 parallel to the Z axis is referred to as an "inner side direction", for the purpose of the illustration. The first outer surface 121c is a surface that is inclined with respect to the Z axis. The first outer surface 121c is inclined with respect to the Z axis so that a diameter of the first outer surface 121c on the XY plane increases toward -Z side. The first outer surface 121c is inclined with respect to the Z axis so that the first outer surface 121c becomes wider outwardly toward -Z side. A shape of the first outer surface 121c is a tapered shape. A shape of an edge of the first outer surface 121c on the XY plane is a square shape. A center of the first outer surface 121c (namely, a center of the square shape) on the XY plane corresponds to the center of the first upper surface 121a on the XY plane.

The second upper surface 121 d is a surface extending from the edge at -Z side of the first outer surface 121c toward the outer side direction. The second upper surface 121 d is a surface facing toward +Z side. The second surface 121 d is a surface parallel to the XY plane. A shape of an edge at the inner side direction of the second upper surface 121 d on the XY plane is a square shape. A shape of an edge at the outer side direction of the second upper surface 121 d on the XY plane is a circular shape. A center of the second upper surface 121 d (namely, a center of the circular shape) on the XY plane corresponds to the center of the first upper surface 121 a on the XY plane.

The second outer surface 121e is a surface extending from an edge at the outer side direction of the second upper surface 121c toward -Z side. The second outer surface 121e is a surface facing toward the outer side direction. The second outer surface 121e is a surface parallel to the Z axis. A shape of an edge of the second outer surface 121e on the XY plane is a circular shape. A center of the second outer surface 121e (namely, a center of the circular shape) on the XY plane corresponds to the center of the first upper surface 121a on the XY plane.

The third outer surface 121f is a surface extending from the edge at -Z side of the second outer surface 121e toward -Z side. The third outer surface 121f is a surface facing toward the outer side surface. The third outer surface 121f is a surface that is inclined with respect to the Z axis. The third outer surface 121f is inclined with respect to the Z axis so that a diameter of the third outer surface 121 f on the XY plane increases toward -Z side. The third outer surface 121f is inclined with respect to the Z axis so that the third outer surface 121 f becomes wider outwardly toward -Z side. A shape of the third outer surface 121f is a tapered shape. A diameter of the third outer surface 121 f on the XY plane is equal to or larger than a diameter of the second outer surface 121e on the XY plane. A shape of an edge of the third outer surface 121 f on the XY plane is a circular shape. A center of the third outer surface 121 f (namely, a center of the circular shape) on the XY plane corresponds to the center of the first upper surface 121 a on the XY plane.

The fourth outer surface 121 g is a surface extending from an edge at the outer side direction of the third upper surface 121 f toward -Z side. The fourth outer surface 121 g is a surface extending from the fifth surface 115 (especially, the lower surface 115b thereof) of the base member 11 toward +Z side. The fourth outer surface 121g is a surface facing toward the outer side direction. The fourth outer surface 121 g is a surface parallel to the Z axis. A shape of an edge of the fourth outer surface 121 g on the XY plane is a circular shape. A center of the fourth outer surface 121 g (namely, a center of the circular shape) on the XY plane corresponds to the center of the first upper surface 121 a on the XY plane.

The first lower surface 121h is a surface parallel to the XY plane. The first lower surface 121h is a surface facing toward -Z side. The first lower surface 121 h is a surface located at -Z side than the first upper surface 121 a. A shape of an edge of the first lower surface 121 h on the XY plane is a circular shape. A center of the first lower surface 121h (namely, a center of the circular shape) on the XY plane corresponds to the center of the first upper surface 121 a on the XY plane.

The first inner surface 121i is a surface extending from the edge of the first lower surface 121 h toward -Z side. The first inner surface 121i is a surface facing toward the inner side direction. The first inner surface 121i is a surface that is inclined with respect to the Z axis. The first inner surface 121 is inclined with respect to the Z axis so that a diameter of the first inner surface 121i on the XY plane increases toward -Z side. The first inner surface 121i is inclined with respect to the Z axis so that the first inner surface 121i becomes wider outwardly toward -Z side. A shape of the first inner surface 121i is a tapered shape. A shape of an edge of the first inner surface 121i on the XY plane is a circular shape. A center of the first inner surface 121i (namely, a center of the circular shape) on the XY plane corresponds to the center of the first lower surface 121 h on the XY plane.

The second lower surface 121 j is a surface extending from the edge at -Z side of the first inner surface 121i toward the outer side direction. The second lower surface 121 j is a surface facing toward -Z side. The second lower surface 121 j is a surface parallel to the XY plane. A shape of an edge at each of the inner side direction and the outer side direction of the second lower surface 121 j on the XY plane is a circular shape. A center of the second lower surface 121 j (namely, a center of the circular shape) on the XY plane corresponds to the center of the first lower surface 121h on the XY plane.

The second inner surface 121k is a surface extending from the edge at the outer side direction of the second lower surface 121 j toward -Z side. The second inner surface 121k is a surface extending from the sixth surface 116 of the base member 11 toward +Z side. The second inner surface 121k is a surface facing toward the inner side direction. The second inner surface 121k is a surface that is inclined with respect to the Z axis. The second inner surface 121k is inclined with respect to the Z axis so that a diameter of the second inner surface 121k on the XY plane increases toward -Z side. The second inner surface 121k is inclined with respect to the Z axis so that the second inner surface 121k becomes wider outwardly toward -Z side. A shape of the second inner surface 121k is a tapered shape. A shape of an edge of the second inner surface 121k on the XY plane is a circular shape. A center of the second inner surface 121k (namely, a center of the circular shape) on the XY plane corresponds to the center of the first lower surface 121 h on the XY plane.

The hole part 1211 that is surrounded by the first lower surface 121 h, the first inner surface 121 i, the second lower surface 121 j and the second inner surface 121k is formed in the first columnar member 121.

Note that the first columnar member 121 described by using FIG. 4(a) to FIG. 4(d) is one example. Thus, one portion of the structure of the first columnar member 121 may be changed. In the description below, an example of the first columnar member 121 in which one portion of the structure has been changed will be described.

The first columnar member 121 may not have at least one of the first upper surface 121 a, the adhesion members 121b, the first outer surface 121c, the second upper surface 121 d, the second outer surface 121e, the third outer surface 121f, the fourth outer surface 121 g, the first lower surface 121h, the first inner surface 121i, the second lower surface 121 j and the second inner surface 121k.

At least one portion of the first upper surface 121a may be a surface that is inclined with respect to the XY plane. At least one portion of the first upper surface 121 a may be a curved surface. The first upper surface 121 a may not be the surface located at the most +Z side among the surfaces of the first columnar member 121. The shape of the edge of the first upper surface 121a on the XY plane may be a shape (for example, any rectangular shape, a circular shape or an oval shape) different from the square shape.

The adhesion members 121b may be members that are not unified with the first upper surface 121a. The adhesion members 121b may be members that are formed separately from the first upper surface 121 a. The adhesion members 121b may be arranged on the first upper surface 121 a in an arrangement manner that is different from the ring-shape. The shape of the adhesion member 121b on the XZ plane may be a shape (for example, any rectangular shape, a circular shape or an oval shape) different from the triangle shape. The center of the adhesion members 121b may not correspond to the center of the first upper surface 121 a on the XY plane.

At least one portion of the first outer surface 121c may be a surface parallel to the Z axis. At least one portion of the first outer surface 121c may be a curved surface. At least one portion of the first outer surface 121c may not be the tapered shape. The shape of the first outer surface 121c on the XY plane may be a shape (for example, any rectangular shape, a circular shape or an oval shape) different from the square shape. The center of the first outer surface 121c on the XY plane may not correspond to the center of the first upper surface 121 a on the XY plane.

At least one portion of the second upper surface 121 d may be a surface that is inclined with respect to the XY plane. At least one portion of the second upper surface 121d may be a curved surface. The shape of the edge at the inner side direction of the second upper surface 121 d on the XY plane may be a shape (for example, any rectangular shape, a circular shape or an oval shape) different from the square shape. The shape of the edge at the outer side direction of the second upper surface 121 d on the XY plane may be a shape (for example, any rectangular shape or an oval shape) different from the circular shape. The center of the second upper surface 121 d on the XY plane may not correspond to the center of the first upper surface 121 a on the XY plane.

At least one portion of the second outer surface 121 e may be a surface that is inclined with respect to the Z axis. At least one portion of the second outer surface 121e may be a curved surface. The shape of the edge of the second outer surface 121e on the XY plane may be a shape (for example, any rectangular shape or an oval shape) different from the circular shape. The center of the second outer surface 121e on the XY plane may not correspond to the center of the first upper surface 121 a on the XY plane.

At least one portion of the third outer surface 121f may be a surface parallel to the Z axis. At least one portion of the third outer surface 121f may be a curved surface. The shape of at least one portion of the third outer surface 121f may not be the tapered shape. The diameter of at least one portion of the third outer surface 121f on the XY plane may be smaller than the diameter of at least one portion of the second outer surface 121e e on the XY plane. The shape of the edge of the third outer surface 121f on the XY plane may be a shape (for example, any rectangular shape) different from the circular shape. The center of the third outer surface 121f on the XY plane may not correspond to the center of the first upper surface 121 a on the XY plane.

At least one portion of the fourth outer surface 121 g may be a surface that is inclined with respect to the Z axis. At least one portion of the fourth outer surface 121 g may be a curved surface. The shape of the edge of the fourth outer surface 121 g on the XY plane may be a shape (for example, any rectangular shape or an oval shape) different from the circular shape. The center of the fourth outer surface 121 g on the XY plane may not correspond to the center of the first upper surface 121a on the XY plane.

At least one portion of the first lower surface 121h may be a surface that is inclined with respect to the XY plane. At least one portion of the first lower surface 121h may be a curved surface. The shape of the edge of the first lower surface 121 h on the XY plane may be a shape (for example, any rectangular shape or an oval shape) different from the circular shape. The center of the first lower surface 121 h on the XY plane may not correspond to the center of the first upper surface 121 a on the XY plane.

At least one portion of the first inner surface 121i may be a surface parallel to the Z axis. At least one portion of the first inner surface 121 i may be a curved surface. The shape of at least one portion of the first inner surface 121i may not be the tapered shape. The shape of the edge of the first inner surface 121 i on the XY plane may be a shape (for example, any rectangular shape or an oval shape) different from the circular shape. The center of the first inner surface 121 i on the XY plane may not correspond to the center of the first lower surface 121h on the XY plane.

At least one portion of the second lower surface 121 j may be a surface that is inclined with respect to the XY plane. At least one portion of the second lower surface 121 j may be a curved surface. An inner diameter of the second lower surface 121 j on the XY plane may be smaller than a diameter of at least one portion of the first inner surface 121i on the XY plane. An outer diameter of the second lower surface 121 j on the XY plane may be equal to or smaller than the diameter of at least one portion of the first inner surface 121 i on the XY plane. The shape of the edge at each of the inner side direction and the outer side direction of the second lower surface 121 j on the XY plane may be a shape (for example, any rectangular shape or an oval shape) different from the circular shape. The center of the second lower surface 121j on the XY plane may not correspond to the center of the first lower surface 121 h on the XY plane.

At least one portion of the second inner surface 121k may be a surface parallel to the Z axis. At least one portion of the second inner surface 121k may be a curved surface. The shape of at least one portion of the second inner surface 121k may not be the tapered shape. The shape of the edge of the second inner surface 121k on the XY plane may be a shape (for example, any rectangular shape or an oval shape) different from the circular shape. The center of the second inner surface 121k on the XY plane may not correspond to the center of the first lower surface 121h on the XY plane.

### (1-1-3) A structure of the second columnar member 122

Next, with reference to FIG. 5(a) to FIG. 5(d), the second columnar member 122 of the supporting apparatus 1 in the first embodiment will be described. FIG. 5(a) is a planar view of the second columnar member 122 that is observed from +Z side. FIG. 5(b) is a V-V' cross sectional view of the second columnar member 122 illustrated in FIG. 5(a). FIG. 5(c) is a side view of the second columnar member 122 that is observed from +Y side. FIG. 5(d) is a planar view of the second columnar member 122 that is observed from -Z side.

As illustrated in FIG. 5(a) to FIG. 5(d), the second columnar member 122 has a first upper surface 122a, a second upper surface 122b, a first outer surface 122c, four hole parts 122d, a first lower surface 122e, a first inner surface 122f and a second lower surface 122g.

The first upper surface 122a is a surface located at the most +Z side among the surfaces of the second columnar member 122. The first upper surface 122a is a surface facing toward +Z side. The first upper surface 122a is a surface parallel to the XY plane. A shape of an edge of the first upper surface 122a on the XY plane is a square shape.

The second upper surface 122b is a surface located around the first upper surface 122a. The second upper surface 122b is a surface that is inclined with respect to the XY plane. The second upper surface 122b is a surface that is inclined with respect to the first upper surface 122a. The second outer surface 122b faces toward a direction away from a center line of the second columnar member 122 parallel to the Z axis (namely, a line that is parallel to the Z axis and that passes through the center of the first upper surface 122a on the XY plane). Note that, in the following description, the direction away from the center line of the second columnar member 12" parallel to the Z axis is referred to as an "outer side direction" and a direction approaching the center line of the second columnar member 122 parallel to the Z axis is referred to as an "inner side direction", for the purpose of the illustration. The second upper surface 122b is a surface facing toward +Z side and outer side direction. A shape of an edge at the inner side direction of the second upper surface 122b on the XY plane is a square shape. A shape of an edge at the outer side direction of the second upper surface 122b on the XY plane is a circular shape.

The first outer surface 122c is a surface extending from the edge at the outer side direction of the second upper surface 122b toward -Z side. The first outer surface 122c is a surface facing toward the outer side direction. The first outer surface 122c is a surface parallel to the Z axis. A shape of an edge of the first outer surface 122c on the XY plane is a circular shape. A center of the first outer surface 122c (namely, a center of the circular shape) on the XY plane corresponds to the center of the first upper surface 122a on the XY plane.

Each of the four hole parts 122d is a hole formed at the first outer surface 122c. The four hole parts 122d are formed at the same XY plane. The four hole parts 122d are formed to arrange at equal intervals along a circle that corresponds to the edge of the first outer surface 122c on the XY plane. Each of the four hole parts 122d is a hole that hollows from the first outer surface 122c toward the inner side direction. Each of the four hole parts 122d does not penetrate the second columnar member 122. The four hole parts 122d are allowed to be fitted to below described four protruding parts 13e of the cylindrical member 13, respectively.

The first lower surface 122e is a surface extending from an edge at -Z side of the first outer surface 122c toward the inner side direction. The first lower surface 122e is a surface facing toward -Z side. The first lower surface 122e is a surface parallel to the XY plane. A shape of an edge at the outer side direction of the first lower surface 122e on the XY plane is a circular shape. A shape of an edge at the inner side direction of the first lower surface 122e on the XY plane is a square shape. A center of the first lower surface 122e (namely, a center of the circular shape or the square shape) on the XY plane corresponds to the center of the first upper surface 122a on the XY plane.

The first inner surface 122f is a surface extending from the edge at the inner side direction of the first lower surface 122e toward +Z side. The first inner surface 122f is a surface facing toward the inner side surface. The first inner surface 122f is a surface that is inclined with respect to the Z axis. The first inner surface 122f is inclined with respect to the Z axis so that a diameter of the first inner surface 122f on the XY plane increases toward -Z side. The first inner surface 122f is inclined with respect to the Z axis so that the first inner surface 122f becomes wider outwardly toward -Z side. A shape of the first inner surface 122f is a tapered shape. A shape of an edge of the first inner surface 122f on the XY plane is a square shape. A center of the first inner surface 122f (namely, a center of the circular shape) on the XY plane corresponds to the center of the first upper surface 122a on the XY plane.

The second lower surface 122g is a surface extending from the edge at +Z side of the first inner surface 122f toward inner side direction. The second lower surface 122g is a surface facing toward -Z side. The second lower surface 122g is a surface parallel to the XY plane. A shape of an edge of the second lower surface 122g on the XY plane is a square shape. A center of the second lower surface 122g (namely, a center of the circular shape) on the XY plane corresponds to the center of the first upper surface 122a on the XY plane.

Note that the second columnar member 122 described by using FIG. 5(a) to FIG. 5(b) is one example. Thus, one portion of the structure of the second columnar member 122 may be changed. In the description below, an example of the second columnar member 122 in which one portion of the structure has been changed will be described.

The second columnar member 122 may not have at least one of the first upper surface 122a, the second upper surface 122b, the first outer surface 122c, the four hole parts 122d, the first lower surface 122e, the first inner surface 122f and the second lower surface 122g.

At least one portion of the first upper surface 122a may be a surface that is inclined with respect to the XY plane. At least one portion of the first upper surface 122a may be a curved surface. The first upper surface 122a may not be the surface located at the most +Z side among the surfaces of the second columnar member 122. The first upper surface 122a may be a surface facing toward a direction different from +Z side. The shape of the edge of the first upper surface 122a on the XY plane may be a shape (for example, any rectangular shape, a circular shape or an oval shape) different from the square shape.

At least one portion of the second upper surface 122b may be a surface parallel to the XY plane. At least one portion of the second upper surface 122b may be a surface parallel to the first upper surface 122a. The second upper surface 122b may be a surface facing toward a direction different from the outer side direction. The shape of the edge at the inner side direction of the second upper surface 122b on the XY plane may be a shape (for example, any rectangular shape, a circular shape or an oval shape) different from the square shape. The shape of the edge at the outer side direction of the second upper surface 122b on the XY plane may be a shape (for example, any rectangular shape or an oval shape) different from the circular shape.

At least one portion of the first outer surface 122c may be a surface that is inclined with respect to the Z axis. At least one portion of the first outer surface 122c may be a curved surface. The shape of the edge of the first outer surface 122c on the XY plane may be a shape (for example, any rectangular shape or an oval shape) different from the circular shape. The center of the first outer surface 122c on the XY plane may not correspond to the center of the first upper surface 122a on the XY plane.

At least one of the four hole parts 122d may be formed at a XY plane that is different from a XY plane at which the other hole part(s) 122d is formed. The four hole parts 122d may be formed to arrange at different or any intervals along the circle that corresponds to the edge of the first outer surface 122c on the XY plane. At least one of the four hole parts 122d may penetrate the second columnar member 122. The second columnar member 122 may have three or less hole parts 122d or five or more hole parts 122d.

The second columnar member 122 may have four or any number of protruding parts, instead of or in addition to the four hole parts 122d. In this case, the below described cylinder member 13 may have four or any number of hole parts that are allowed to be fitted to the protruding parts of the second columnar member 122, respectively, instead of or in addition to the four protruding parts 13e.

At least one portion of the first lower surface 122e may be a surface that is inclined with respect to the XY plane. An outer diameter of the first lower surface 122e on the XY plane may be different from a diameter of at least one portion of the first outer surface 122c on the XY plane. An inner diameter of the first lower surface 122e on the XY plane may be equal to or larger than the diameter of at least one portion of the first outer surface 122c on the XY plane. The shape of the edge at the outer side direction of the first lower surface 122e on the XY plane may be a shape (for example, any rectangular shape or an oval shape) different from the circular shape. The shape of the edge at the inner side direction of the first lower surface 122e on the XY plane may be a shape (for example, any rectangular shape, a circular shape or an oval shape) different from the square shape. The center of the first lower surface 122e on the XY plane may not correspond to the center of the first upper surface 122a on the XY plane.

At least one portion of the first inner surface 122f may be a surface parallel to the Z axis. At least one portion of the first inner surface 122f may be a curved surface. The shape of at least one portion of the first inner surface 122f may not be the tapered shape. The shape of the edge of the first inner surface 122f on the XY plane may be a shape (for example, any rectangular shape, a circular shape or an oval shape) different from the square shape. The center of the first inner surface 122f on the XY plane may not correspond to the center of the first upper surface 122a on the XY plane.

At least one portion of the second lower surface 122g may be a surface that is inclined with respect to the XY plane. At least one portion of the second lower surface 122g may be a curved surface. The shape of the second lower surface 122g on the XY plane may be a shape (for example, any rectangular shape, a circular shape or an oval shape) different from the square shape. The center of the second lower surface 122g on the XY plane may not correspond to the center of the first upper surface 122a on the XY plane.

### (1-1-4) A structure of the cylindrical member 13

Next, with reference to FIG. 6(a) to FIG. 6(d), the cylindrical member 13 of the supporting apparatus 1 in the first embodiment will be described. FIG. 6(a) is a planar view of the cylindrical member 13 that is observed from +Z side. FIG. 6(b) is a VI-VI' cross sectional view of the cylindrical member 13 illustrated in FIG. 6(a). FIG. 6(c) is a side view of the cylindrical member 122 that is observed from +Y side. FIG. 6(d) is an enlarged cross sectional view near a first inner surface 13b of the VI-VI' cross sectional view of the cylindrical member 13 illustrated in FIG. 6(a).

As illustrated in FIG. 6(a) to FIG. 6(d), the cylindrical member 13 has a first upper surface 13a, the first inner surface 13b, a first outer surface 13c, a first lower surface 13d and four protruding parts 13e.

The first upper surface 13a is a surface located at the most +Z side among the surfaces of the cylindrical member 13. The first upper surface 13a is a surface facing toward +Z side. The first upper surface 13a is a surface parallel to the XY plane. A shape of an edge at each of the inner side direction and the outer side direction of the first upper surface 13a on the XY plane is a circular shape. Note that, in the following description, a direction away from a center line of the cylindrical member 13 parallel to the Z axis (namely, a line that is parallel to the Z axis and that passes through the center of the first upper surface 13a on the XY plane) is referred to as an "outer side direction" and a direction approaching the center line of the cylindrical member 13 parallel to the Z axis is referred to as an "inner side direction", for the purpose of the illustration.

The first inner surface 13b is a surface extending from the edge at the inner side direction of the first upper surface 13a toward -Z side. The first inner surface 13b is a surface facing toward the inner side direction. A shape of the first inner surface 13b on the XY plane is a circular shape.

The first inner surface 13b includes a first inner surface part 13b-1 and a second inner surface part 13b-2.

The first inner surface part 13b-1 is a surface extending from the edge at the outer side direction of the first upper surface 13a toward -Z side. The first inner surface part 13b-1 is a surface that is inclined with respect to the Z axis. The first inner surface part 13b-1 is inclined with respect to the Z axis so that a diameter of the first inner surface part 13b-1 on the XY plane decreases toward -Z side. The first inner surface part 13b-1 is inclined with respect to the Z axis so that the first inner surface part 13b-1 becomes narrower inwardly toward -Z side. A shape of the first inner surface part 13b-1 is a tapered shape.

The second inner surface part 13b-2 is a surface extending from an edge at -Z side of the first inner surface part 13b-1 toward -Z side. The second inner surface 13b-2 is a surface parallel to the Z axis.

The first outer surface 13c is a surface extending from the edge at the outer side direction of the first upper surface 13a toward -Z side. The first outer surface 13c is a surface facing toward the outer side direction. The first outer surface 13c is a surface parallel to the Z axis. A shape of an edge of the first outer surface 13c on the XY plane is a circular shape.

The first lower surface 13d is a surface located at the most -Z side among the surfaces of the cylindrical member 13. The first lower surface 13d is a surface extending from the edge at -Z side of the first inner surface 13b toward the outer side direction. The first lower surface 13d is a surface extending from the edge at -Z side of the first outer surface 13c toward the inner side direction. The first lower surface 13d is a surface facing toward -Z side. The first lower surface 13d is a surface parallel to the XY plane. A shape of an edge at each of the outer side direction and the inner side direction of the first lower surface 13d on the XY plane is a circular shape.

Each of the four protruding parts 13e is a protrusion formed at the first inner surface 13b. Each of the four protruding parts 13e is a protrusion formed at the second inner surface part 13b-2. Each of the four protruding parts 13e is a protrusion that protrudes from the first inner surface 13b toward the inner side direction. The four protruding parts 13e are formed at the same XY plane. The four protruding parts 13e are formed to arrange at equal intervals along a circle that corresponds to the edge of the first inner surface 13b on the XY plane. The four protruding parts 13e are allowed to be fitted to the four hole parts 122d of the second columnar member 122, respectively.

When the cylindrical member 13 is fitted to the columnar member 12, the four protruding parts 13e are fitted to the four hole parts 122d at a timing in accordance with a degree of fitting of the cylindrical member 13 to the columnar member 12 (in other words, a degree of inserting of the cylindrical member 13 to the columnar member 12). As a result, a positional relationship between the columnar member 12 and the cylindrical member 13 is fixed due to the fitting (intermeshing) of the four protruding parts 13e and the four hole parts 122d.

Note that the cylindrical member 13 described by using FIG. 6(a) to FIG. 6(d) is one example. Thus, one portion of the structure of the cylindrical member 13 may be changed. In the description below, an example of the cylindrical member 13 in which one portion of the structure has been changed will be described.

The cylindrical member 13 may not have at least one of the first upper surface 13a, the first inner surface 13b, the first outer surface 13c, the first lower surface 13d and the four protruding parts 13e.

The first upper surface 13a may not be the surface located at the most +Z side among the surfaces of the cylindrical member 13. The first upper surface 13a may be a surface facing toward a direction different form +Z side. At least one portion of the first upper surface 13a may be a surface that is inclined with respect to the XY plane. At least one portion of the first upper surface 13a may be a curved surface. The shape of the edge at at least one of the inner side direction and the outer side direction of the first upper surface 13a on the XY plane may be a shape (for example, any rectangular shape or an oval shape) different from the circular shape.

The shape of the edge of the first inner surface 13b on the XY plane may be a shape (for example, any rectangular shape) different from the circular shape. The first inner surface 13b may not include at least one of the first inner surface part 13b-1 and the second inner surface part 13b-2. At least one portion of the first inner surface part 13b-1 may be a surface parallel to the Z axis. At least one portion of the first inner surface part 13b-1 may be a curved surface. The shape of at least one portion of the first inner surface part 13b-1 may not be the tapered shape. At least one portion of the second inner surface part 13b-2 may be a surface that is inclined with respect to the Z axis. At least one portion of the second inner surface part 13b-2 may be a curved surface.

At least one portion of the first outer surface part 13c may be a surface that is inclined with respect to the Z axis. At least one portion of the first outer surface part 13c may be a curved surface. The shape of the edge of the first outer surface 13c on the XY plane may be a shape (for example, any rectangular shape or an oval shape) different from the circular shape.

The first lower surface 13d may not be the surface located at the most -Z side among the surfaces of the cylindrical member 13. At least one portion of the first lower surface part 13d may be a surface that is inclined with respect to the XY plane. At least one portion of the first lower surface part 13d may be a curved surface. The shape of the edge at at least one of the inner side direction and the outer side direction of the first lower surface 13d on the XY plane may be a shape (for example, any rectangular shape or an oval shape) different from the circular shape.

At least one of the four protruding parts 13e may be a protrusion formed at the first inner surface part 13b-1. At least one of the four protruding parts 13e may be formed at a XY plane different from a XY plane at which the other protruding part(s) 13e is formed. The four protruding parts 13e may be formed to arrange at different or any intervals along the circle that corresponds to the edge of the first inner surface 13b on the XY plane. The cylindrical member 13 may have three or less protruding parts 13e or five or more protruding parts 13e.

### (1-1-5) A structure relating to a relative positional relationship between the columnar member 12 and the cylindrical member 13

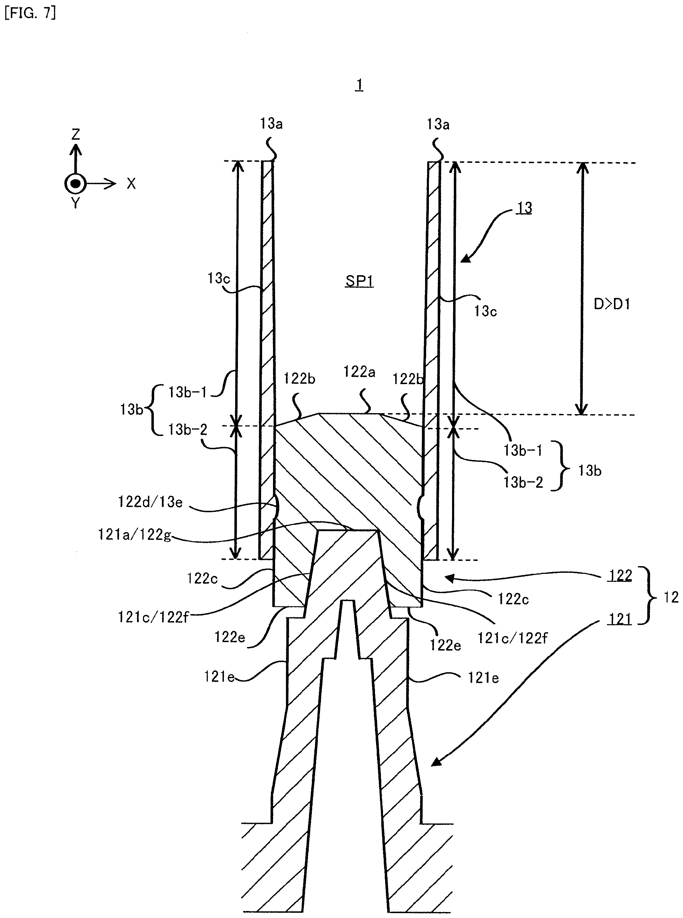

Next, with reference to FIG. 7, a structure relating to a relative positional relationship between the columnar member 12 and the cylindrical member 13 will be described. FIG. 7 is a cross-sectional view illustrating a cross-sectional plane along the XZ plane of the first columnar member 121, the second columnar member 122 and the cylindrical member 13 in a state where the four protruding parts 13e are fitted to the four hole parts 122d, respectively (hereinafter, this state is referred to as an "initial state").

As illustrated in FIG. 7, the first outer surface 122c of the second columnar member 122 is located at the outer side direction than the second outer surface 121e of the first columnar member 121. A diameter of the first outer surface 122c on the XY plane is larger than the diameter of the second outer surface 121e on the XY plane. A distance on the XY plane between the first outer surface 122c and the second outer surface 121e is larger than a size of each protruding part 13e on the XY plane (namely, a distance from the second inner surface part 13b-2 to a peak of the protruding part 13e).

The first lower surface 122e of the second columnar member 122 is located at +Z side than the second upper surface 121d of the first columnar member 121. The first lower surface 122e does not contact with the second upper surface 121 d.

The first inner surface 122f of the second columnar member 122 is a surface that is allowed to be fitted to (alternatively, to contact with or to face with) at least one portion of the first outer surface 121c of the first columnar member 121 when the first columnar member 121 is fixed to the second columnar member 122. An inclination angle of the first inner surface 122f with respect to the Z axis is same as an inclination angle of the first outer surface 121c with respect to the Z axis. The shape of the edge of the first inner surface 122f on the XY plane is same as the shape of the edge of the first outer surface 121c on the XY plane. The diameter of the first inner surface 122f on the XY plane is same as the diameter of the first outer surface 121c on the XY plane at each position on a fitting surface at which the first inner surface 122f is fitted to the first outer surface 121c (however, a margin that allows the fitting or an error caused by a fitting accuracy may be considered).

The second lower surface 122g of the second columnar member 122 is a surface that is allowed to be fitted to (alternatively, to contact with or to face with) the first upper surface 121 a of the first columnar member 121 when the first columnar member 121 is fixed to the second columnar member 122. The shape of the edge of the second lower surface 122g on the XY plane is same as the shape of the edge of the first upper surface 121 a on the XY plane. The diameter of the second lower surface 122g on the XY plane is same as the diameter of the first upper surface 121 a on the XY plane (however, a margin that allows the fitting or an error caused by a fitting accuracy may be considered).

The first inner surface 13b of the cylindrical member 13 is a surface that is allowed to be fitted to (alternatively, to contact with or to face with) the first outer surface 122c of the second columnar member 122 when the cylindrical member 13 is fixed to the columnar member 12. Namely, when the cylindrical member 13 is fitted to the columnar member 12, the second columnar member 122 is gradually fitted into the cylinder defined by the first inner surface 13b while at least one portion of the first inner surface 13b is fitted to at least one portion of the first outer surface 122c. In this case, a fitting surface at which the first inner surface 13b is fitted to the first outer surface 122c along whole of a circumferential direction (namely, a direction around the Z axis) of the first inner surface 13b and the first outer surface 122c is ensured between the first inner surface 13b and the first outer surface 122c.

Here, as described above, the cylindrical member 13 is made from the elastic material. When the second columnar member 122 is gradually fitted into the cylinder defined by the first inner surface 13b while the first inner surface 13b is fitted to the first outer surface 122c, a stress (force) that acts toward the outer side direction is applied from the second columnar member 122 to the first inner surface 13b. The first inner surface 13b is a surface that is expandable to increase its diameter due to the stress applied from the second columnar member 122 and the elasticity of the cylindrical member 13. As a result, the first inner surface 13b contacts with the first outer surface 122c more firmly, compared to the case where the first inner surface 13b is not the surface that is expandable to increase its diameter.

Considering that the first inner surface 13b is expanded to increase its dimeter and thus the first inner surface 13b contacts with the first outer surface 122c relatively firmly, the diameter of the inner surface 13c on the XY plane is equal to or smaller than the diameter of the first outer surface 122c of the XY plane when the cylindrical member 13 is not yet fitted to the columnar member 12. The shape of the edge of the first inner surface 122f on the XY plane is same as or similar to the shape of the edge of the first outer surface 121c on the XY plane.

In the initial state, the first inner surface part 13b-1 of the cylindrical member 13 does not face with (alternatively, not contact with) the first outer surface 122c of the second columnar member 122. In the initial state, the second inner surface part 13b-2 of the cylindrical member 13 is fitted to (or contacts with or faces with) at least one portion of the first outer surface 122c. In the initial state, a border between the first inner surface part 13b-1 and the second inner surface part 13b-2 corresponds to a border between the second upper surface 122b and the first outer surface 122c.

In the initial state, a distance D (a direction from the first upper surface 122a toward +Z side is set as a positive direction) from the first upper surface 122a of the second columnar member 122 to the first upper surface 13a of the cylindrical member 13 is equal to or larger than a predetermined distance D1. The predetermined distance D1 is a distance that is allowed to ensure a space SP1 surrounded by the first upper surface 122a and the second upper surface 122b of the second columnar member 122 and the first inner surface part 13b-1 of the cylindrical member 13. The predetermined distance D1 is a distance that allows a volume of the space SP1 surrounded by the first upper surface 122a and the second upper surface 122b of the second columnar member 122 and the first inner surface part 13b-1 of the cylindrical member 13 to be equal to or larger than a predetermined amount. Thus, a length along the Z axis of each of the first inner surface 13b and the first outer surface 13c of the cylindrical member 13 is a length that allows the distance from the first upper surface 122a to the first upper surface 13a to be equal to or larger than the predetermined distance D 1.

Note that the initial state described by using FIG. 7 is one example. Thus, a state that is different from the initial state illustrated in FIG. 7 may be used as the initial state. In the description below, a modified example of the initial state will be described.

At least one portion of the first outer surface 122c of the second columnar member 122 may be located at the inner side direction than at least one portion of the second outer surface 121e of the first columnar member 121. At least one portion of the first outer surface 122c and at least one portion of the second outer surface 121e may be arranged in the Z axis. The diameter of at least one portion of the first outer surface 122c on the XY plane may be equal to or smaller than the diameter of at least one portion of the second outer surface 121e on the XY plane. The distance along the X axis between at least one portion of the first outer surface 122c and at least one portion of the second outer surface 121e may be equal to or smaller than the size of each protruding part 13e along the X axis.

At least one portion of the first lower surface 122e of the second columnar member 122 may contact with at least one portion of the second upper surface 121 d of the first columnar member 121.

At least one portion of the first inner surface 122f of the second columnar member 122 may not be fitted to (alternatively, not contact with or not face with) at least one portion of the first outer surface 121c of the first columnar member 121. The inclination angle of at least one portion of the first inner surface 122f with respect to the Z axis may be different from the inclination angle of at least one portion of the first outer surface 121c with respect to the Z axis. The shape of the edge of at least one portion of the first inner surface 122f on the XY plane may be different from the shape of at least one portion of the edge of the first outer surface 121c on the XY plane.

At least one portion of the second lower surface 122g of the second columnar member 122 may not be fitted to (alternatively, not to contact with or not face with) at least one portion of the first upper surface 121 a of the first columnar member 121. The shape of the edge of at least one portion of the second lower surface 122g on the XY plane may be different from the shape of the edge of at least one portion of the first upper surface 121 a on the XY plane.

The first inner surface 13b may be a surface that is not expandable to increase its diameter, regardless of the stress applied from the second columnar member 122. The cylindrical member 13 may have stiffness that allows the diameter of the first inner surface 13b to be maintained, regardless of the stress applied from the second columnar member 122. The diameter of at least one portion of the inner surface 13c on the XY plane may be equal to or larger than the diameter of at least one portion of the first outer surface 122c of the XY plane when the cylindrical member 13 is not yet fitted to the columnar member 12. The shape of the edge of at least one portion of the first inner surface 122f on the XY plane may not be same as or similar to the shape of the edge of at least one portion of the first outer surface 121 c on the XY plane.

In the initial state, at least one portion of the first inner surface part 13b-1 of the cylindrical member 13 may be fitted to (alternatively, contact with or face with) at least one portion of the outer surface 122c of the second columnar member 122. In the initial state, at least one portion of the second inner surface part 13b-2 of the cylindrical member 13 may not be fitted to (or not contact with or not face with) the outer surface 122c. In the initial state, at least one portion of the border between the first inner surface part 13b-1 and the second inner surface part 13b-2 may not correspond to the border between the second upper surface 122b and the first outer surface 122c.

### (1-2) A method of manufacturing the supporting apparatus 1 in the first embodiment

Next, with reference to FIG. 8(a) to FIG. 8(d), a method of manufacturing the supporting apparatus 1 in the first embodiment will be described. Each of FIG. 8(a) to FIG. 8(d) is a cross-sectional view illustrating a cross-sectional plane along the XZ plane of the supporting apparatus 1 when each process for manufacturing the supporting apparatus 1 in the first embodiment is performed.

When the supporting apparatus 1 is manufactured, the base member 11 that is unified with the 24 first columnar members 121, the 24 second columnar members 122 and the 24 cylindrical members 13 are manufactured separately. Each of the base member 11, the second columnar members 122 and the cylindrical member 13s is manufactured by an injection molding, for example. However, each of the base member 11, the second columnar members 122 and the cylindrical members 13 may be manufactured by any manufacturing method different from the injection molding.

Note that the first columnar member 121 and the second columnar member 122 are manufactured separately in the first embodiment. Here, in the first embodiment, the second outer surface 121e having relatively small diameter is located in the Z axis between the third outer surface 121 f / fourth outer surface 121 g and the first outer surface 122c each having relatively large diameter. Thus, if the columnar member 12 in which the first columnar member 121 is unified with the second columnar member 122 is manufactured, it may be difficult to detach the columnar member 12 from a mold depending on a structure of the mold. However, when the first columnar member 121 and the second columnar member 122 are manufactured separately, the second outer surface 121e having relatively small diameter is not located in the Z axis between two surfaces having relatively large diameter. Therefore, it is possible to reduce the possibility that the columnar member 12 is not detached from the mold. Namely, the columnar member 12 can be manufactured relatively easily.

Next, the base member 11 that is unified with the 24 first columnar members 121, the 24 second columnar members 122 and the 24 cylindrical members 13 are assembled to manufacture the supporting apparatus 1. Note that an assembling of one first columnar member 121, one second columnar member 122 and one cylindrical member 13 is illustrated and described in FIG. 8(a) to FIG. 8(d) for the purpose of the simple drawing.

Specifically, as illustrated in FIG. 8(a), the second columnar member 122 is placed on the first columnar member 121. In this case, the second columnar member 122 is placed on the first columnar member 121 so that the first upper surface 121 a of the first columnar member 121 is fitted to (alternatively, contacts with or faces with) the second lower surface 122g of the second columnar member 122. The second columnar member 122 is placed on the first columnar member 121 so that the first outer surface 121c of the first columnar member 121 is fitted to (alternatively, contacts with or faces with) the first inner surface 122f of the second columnar member 122. In this case, as described above, the shape of the edge of each of the first upper surface 121a, the second lower surface 122g, the first outer surface 121c and the first inner surface 122f is the square shape. Thus, a rotation of the second columnar member 122 around the Z axis with respect to the first columnar member 121 is suppressed when the second columnar member 122 is placed on the first columnar member 121. Moreover, the rotation of the second columnar member 122 around the Z axis with respect to the first columnar member 121 is also suppressed, even after the second columnar member 122 has been placed on the first columnar member 121.

Then, as illustrated in FIG. 8(b), ultrasound is irradiated with the adhesion members 121b formed on the first upper surface 121 a. Due to the irradiation of the ultrasound, the adhesion members 121b melt. The melted adhesion members 121b serve as the adhesive material to fix the first upper surface 121 a and the second lower surface 122g. Therefore, the first upper surface 121 a and the second lower surface 122g are fixed to each other. As a result, the first columnar member 121 is fixed to the second columnar member 122.

Considering that the adhesive members 121b are used as the adhesive material to fix the first upper surface 121 a and the second lower surface 122g, the adhesive members 121b may be formed at at least one of the second lower surface 122g, the first outer surface 121c and the first inner surface 122f, instead of or in addition to the first upper surface 121 a.

Then, as illustrated in FIG. 8(c), the cylindrical member 13 is fitted to the columnar member 12. In an example illustrated in FIG. 8(c), the cylindrical member 13 is gradually fitted to the columnar member 12 so that the cylindrical member 13 moves from +Z side toward -Z side. The cylindrical member 13 is gradually fitted to the columnar member 12 by way of the cylindrical member 13 being pushed from +Z side toward -Z side by a not-illustrated tool. In other words, the columnar member 12 is substantially inserted into the cylinder of the cylindrical member 13 from -Z side toward + Z side by way of the cylindrical member 13 being pushed. As a result, the second columnar member 122 is gradually fitted into the cylinder defined by the first inner surface 13b while at least one portion of the first inner surface 13b (for example, at least one portion of the second inner surface part 13b-2) is fitted to at least one portion of the first outer surface 122c. Here, as described above, the cylindrical member 13 is made from the elastic material. Thus, the cylindrical member 13 is gradually fitted to the columnar member 12 while the first inner surface 13b (moreover, the first outer surface 13c) expands toward the outer side direction to increase the diameter of the first inner surface 13b at the fitting surface at which the first inner surface 13b is fitted to the outer surface 122c.

Then, as illustrated in FIG. 8(d), the cylindrical member 13 moves toward -Z side until the four protruding parts 13e of the cylindrical member 13 and the four hole parts 122d of the second columnar member 122 are located at the same XY plane. After the cylindrical member 13 has moved toward -Z side until the four protruding parts 13e and the four hole parts 122d are located at the same XY plane, the four protruding parts 13e are fitted to the four hole parts 122d, respectively. Due to the fitting of the four protruding parts 13e and the four hole parts 122d, the positional relationship between the columnar member 12 and the cylindrical member 13 is fixed. As a result, the manufacturing of the supporting apparatus 1 is completed.

The "fixing of the positional relationship between the columnar member 12 and the cylindrical member 13" means a state where the relative movement of the cylindrical member 13 with respect to the columnar member 12 is restricted compared to the case where the four protruding parts 13e are not fitted to the four hole parts 122d, respectively. For example, the "fixing of the positional relationship between the columnar member 12 and the cylindrical member 13" means a restriction of the rotation around the Z axis of the cylindrical member 13 with respect to the second columnar member 122 (alternatively, the columnar member 12). The "fixing of the positional relationship between the columnar member 12 and the cylindrical member 13" means a restriction of the movement in the Z axis of the cylindrical member 13 with respect to the second columnar member 122 (alternatively, the columnar member 12).

The positional relationship between the columnar member 12 and the cylindrical member 13 may be fixed by frictional force between the first outer surface 122c of the second columnar member 122 and the first inner surface 13b of the cylindrical member 13, instead of or in addition to the fitting of the four protruding parts 13e and the four hole parts 122d. As described above, since the first inner surface 13b contacts with the first outer surface 122c firmly, the frictional force between the first outer surface 122c and the first inner surface 13b allows the positional relationship between the columnar member 12 and the cylindrical member 13 to be fixed appropriately.

### (1-4) A method of using the supporting apparatus 1 in the first embodiment

Next, with reference to FIG. 9(a) to FIG. 9(e), a method of using the supporting apparatus 1 in the first embodiment will be described. Each of FIG. 9(a) to FIG. 9(e) is a cross-sectional view illustrating a cross-sectional plane along the XZ plane of the supporting apparatus 1 when the supporting apparatus 1 in the first embodiment is used.

As illustrated in FIG. 9(a), in the initial state, the space SP1 (especially, the space SP1 having the volume equal to or larger than the predetermined amount) surrounded by the first upper surface 122a, the second upper surface 122b and the first inner surface part 13b-1 is ensured. Any held target can be held in the space SP1. For example, when desired liquid that is one example of the held target is dispensed into the space SP1, the desired liquid is held in the space SP1.

Namely, in the initial state, the first upper surface 122a, the second upper surface 122b and at least one portion of the first inner surface 13b (for example, at least one portion of the first inner surface part 13b-1 that does not face with the first outer surface 122c) form a well (alternatively, a container or a tub) that is allowed to hold any held target. Therefore, in the initial state, the supporting apparatus 1 is allowed to serve as what we call a well plate.

Here, as described above, the first inner surface 13b contacts with the first inner surface 122c relatively firmly because the cylindrical member 13 is made from the elastic material. The space SP1 is ensured at +Z side than a contacting surface (the fitting surface) between the first inner surface 13b and the first outer surface 122c. Thus, the held target (especially, the liquid) held in the space SP1 is not leaked easily from a gap between the first inner surface 13b and the first outer surface 122c, compared to the case where the first inner surface 13b does not contact with the first inner surface 122c firmly. Namely, in the first embodiment, a water-tightness of the space SP1 is ensured well or appropriately. Therefore, even when the desired liquid that is one example of the held target is dispensed into the space SP1, the desired liquid can be held in the space SP1 appropriately.

Each cylindrical member 13 of the supporting apparatus 1 is movable toward -Z side as illustrated in FIG. 9(b), from a base position of the supporting apparatus 1 in the initial state. For example, each cylindrical member 13 is movable toward -Z side by way of each cylindrical member 13 being pushed down toward -Z side by a jig 15.

The jig 15 has a bottom part 15a and a cylindrical part 15b. The bottom part 15a is a plate-like or a circular member in a planar view. The cylindrical part 15b is a cylindrical member having one end (an end at +Z side in an example illustrated in FIG. 9(b)) attached to the bottom part 15a. The cylindrical part 15b is member having other end (an end at -Z side in the example illustrated in FIG. 9(b)) that is allowed to contact with the first upper surface 13a of the cylindrical member 13. An inner diameter of the cylindrical part 15b on the XY plane is same as an inner diameter of the first upper surface 13a of the cylindrical member 13. A space SP15 surrounded by the bottom part 15a and the cylindrical part 15b is ensured in the jig 15.

After each cylindrical member 13 has moved toward -Z side, the intermeshing (fitting) of each protruding part 13e of the cylindrical member 13 and each hole part 122d of the second columnar member 122 is released. When the intermeshing of each protruding part 13e and each hole part 122d is released, as illustrated in FIG. 9(b), each protruding part 13e is pushed toward the outer side direction by the stress applied from the first outer surface 122c of the second columnar member 122. As a result, the cylindrical member 13 is distorted. For example, as illustrated in FIG. 9(b), the cylindrical member 13 is distorted so that one portion of the first inner surface 13b that does not face with the first outer surface 122c is inclined toward the inner side direction. On the other hand, as described above, the shape of the first inner surface part 13b-1 of the first inner surface 13b that does not face with the first outer surface 122c in the initial state is the tapered shape. Therefore, even when the cylindrical member 13 is distorted by way of the intermeshing of each protruding part 13e and each hole part 122d being released, the first inner surface 13b that is inclined toward the inner side direction does not contact with the first outer surface 122c excessively. In other words, the frictional force between the first inner surface 13b that is inclined toward the inner side direction and the first outer surface 122c does not increase excessively. As a result, even when the cylindrical member 13 is distorted by way of the intermeshing of each protruding part 13e and each hole part 122d being released, the cylindrical member 13 is movable toward -Z side relatively smoothly, compared to the case where the shape of the first inner surface part 13b-1 is not the tapered shape.

Then, after the cylindrical member 13 furthermore has moved toward -Z side, as illustrated in FIG. 9(c), each protruding part 13e is located at -Z side than the first lower surface 122e of the second columnar member 122 at a certain timing. In other words, a surface with which each protruding part 13e faces along the XY plane is changed from the first outer surface 122c of the second columnar member 122 to the second outer surface 121e of the first columnar member 121. Here, as described above, the second outer surface 121e is at the inner side direction than the first outer surface 122c and the distance on the XY plane between the first outer surface 122c and the second outer surface 121e is larger than the size of each protruding part 13e on the XY plane. Therefore, when the surface with which each protruding part 13e faces along the X axis becomes the second outer surface 121 e, each protruding part 13 does not contact with the second outer surface 121e. As a result, the frictional force between the cylindrical member 13 and the second columnar member 122 decreases, compared to the case where each protruding part 13e contacts with the first outer surface 122c. Namely, the frictional force that prevents the movement of the cylindrical member 13 toward -Z side decreases. Thus, the cylindrical member 13 is movable toward -Z side relatively smoothly.

Then, after the cylindrical member 13 furthermore has moved toward -Z side, as illustrated in FIG. 9(d), each protruding part 13e gradually contacts with the third outer surface 121f having the tapered shape. As a result, the frictional force that prevents the movement of the cylindrical member 13 toward -Z side gradually increases, compared to the case where each protruding part 13e does not contact with the third outer surface 121f. Therefore, the movement of the cylindrical member 13 toward -Z side is gradually prevented. Thus, the third outer surface 121f serves as a preventing part that prevents the cylindrical member 13 from moving toward -Z side.

After the cylindrical member 13 furthermore has moved toward -Z side, as illustrated in FIG. 9(e), each protruding part 13e contacts with the fourth outer surface 121 g. As a result, the frictional force that prevents the movement of the cylindrical member 13 toward -Z side increases more, compared to the case where each protruding part 13e does not contact with the fourth outer surface 121 g (for example, contacts with the third outer surface 121f). Therefore, the movement of the cylindrical member 13 toward -Z side is prevented more. In some cases, it becomes difficult for the cylindrical member 13 to move toward -Z side due to the frictional force between each protruding part 13e and the fourth outer surface 121g. Thus, the fourth outer surface 121 g serves as a preventing part that prevents the cylindrical member 13 from moving toward -Z side or a stopping part that stops the movement of the cylindrical member 13 toward -Z side.

A state where the movement of the cylindrical member 13 toward -Z side is stopped by way of each protruding part 13e contacting with the fourth outer surface 121g is referred to as a "final state". In the final state, the first upper surface 122a of the second columnar member 122 is located at +Z side than the first upper surface 13a of the cylindrical member 13. In the final state, the distance D from the first upper surface 122a to the first upper surface 13a is equal to or less than a predetermined distance D2. Thus, the length along the Z axis of each of the first inner surface 13b and the first outer surface 13c of the cylindrical member 13 is a length that allows the distance D from the first upper surface 122a to the first upper surface 13a in the final state to be equal to or less than the predetermined distance D2. Moreover, the third outer surface 121f and the fourth outer surface 121g are formed at a position that allows the distance D from the first upper surface 122a to the first upper surface 13a in the final state to be equal to or less than the predetermined distance D2. Note that the distance D from the first upper surface 122a to the first upper surface 13a is a negative distance in an example illustrated in FIG. 9(e), because the direction from the first upper surface 122a toward +Z side is set as the positive direction.

Even when the cylindrical member 13 has moved to be in the final state, the bottom part 15a of the jig 15 does not contact with the first upper surface 122a of the second columnar member 122, because the jig 15 ensures the space SP15. Alternatively, the bottom part 15a of the jig 15 does not contact with the supported target that is supported by the first upper surface 122a. Thus, the first upper surface 122a (alternatively, the supported target) is protected appropriately.

After the cylindrical member 13 has moved to be in the final state, the first upper surface 122a is located at +Z side than the first upper surface 13a. Namely, the first upper surface 122a is exposed on the cylindrical member 13. The first upper surface 122a is exposed on the cylinder of the cylindrical member 13. Therefore, any approaching target that should approach the first upper surface 122a (alternatively, the supported target that is supported by the first upper surface 122a) is allowed to approach the first upper surface 122a without contacting with the cylindrical member 13. Namely, the cylindrical member 13 hardly or never prevents the approaching target from approaching the first upper surface 122a (alternatively, the supported target).

Here, with reference to FIG. 10(a) to FIG. 10(c), a specific example of the method of using the supporting apparatus 1 when the supporting apparatus 1 supports the biochip 14 will be described. Each of FIG. 10(a) to FIG. 10(c) is a cross-sectional view illustrating a cross-sectional plane along the XZ plane of the supporting apparatus 1 when the supporting apparatus 1 in the first embodiment that supports the biochip 14 is used.

As illustrated in FIG. 10(a), when the supporting apparatus 1 supports the biochip 14, a supporting area 122a-1 that is at least one portion of the first upper surface 122a of the second columnar member 122 supports the biochip 14. FIG. 10(a) illustrates an example in which entire first upper surface 122a is the supporting area 122a-1. The biochip 14 may be attached to the supporting area 122a-1 by an adhesive material such as a thermoset resin. The supporting apparatus 1 is in the initial state when the biochip 14 is attached. However, the supporting apparatus 1 may be in a state where the cylindrical member 13 is not yet fitted to the columnar member 12 when the biochip 14 is attached. In this case, the cylindrical member 13 may be fitted to the columnar member 12 after the biochip 14 is attached.

Then, as illustrated in FIG. 10(b), a liquid specimen LQ that is one example of the held target (namely, a specimen that is a target for a molecular diagnosis) is dispensed into the space SP1 that is ensured by the first upper surface 122a and the second upper surface 122b of the second columnar member 122 and the first inner surface 13b of the cylindrical member 13. The supporting apparatus 1 is in the initial state when the specimen LQ is dispensed. Therefore, the supporting apparatus 1 is allowed to appropriately hold the specimen LQ, which is dispensed for making the biochip 14 react to the specimen LQ, by using the space SP1. As a result, the reaction of the biochip 14 to the specimen LQ is facilitated.

Then, as illustrated in FIG. 10(c), the measuring apparatus MS optically detects the reaction of the biochip 14 to the specimen LQ. Specifically, an objective lens LS (see FIG. 24) of the measuring apparatus MS approaches the biochip 14 until a distance between the biochip 14 and a lens surface of the objective lens LS is equal to or less than an observable distance. Here, the cylindrical member 14 moves toward -Z side at any timing after the specimen LQ is dispensed (alternatively, the biochip 14 reacts to the specimen LQ) and before the objective lens LS approaches the biochip 14. As a result, the state of the supporting apparatus 1 is changed from the initial state to the final state at any timing after the specimen LQ is dispensed (alternatively, the biochip 14 reacts to the specimen LQ) and before the objective lens LS approaches the biochip 14. Thus, the objective lens LS is allowed to approach the biochip 14 without contacting with the cylindrical member 13. Namely, the cylindrical member 13 hardly or never prevents the objective lens LS from approaching the biochip 14.

Considering that the objective lens LS approaches the biochip 14 until the distance between the biochip 14 and the lens surface of the objective lens LS is equal to or less than the observable distance, any value equal to or less than the observable distance may be set to the "predetermined distance D2" that defines the distance D from the first upper surface 122a to the first upper surface 13a in the final state.

Moreover, the measuring apparatus MS irradiate the biochip 14 with an illumination light to detect the reaction of the biochip 14. There is a possibility that at least one portion of the illumination light is reflected by at least one of an upper surface of the biochip 14, the first upper surface 122a and the second upper surface 122b. There is a possibility that this reflected light serves as a noise when the measuring apparatus MS detects the reaction of the biochip 14. Therefore, it is preferable that the reflected light do not enter the objective lens LS as much as possible. In the first embodiment, the second upper surface 122b faces toward the outer side direction. Therefore, if the illumination light is reflected by the second upper surface 122b, the reflected light from the second upper surface 122b propagates toward the outer side direction. As a result, the reflected light from the second upper surface 122b does not enter the objective lens LS easily, compared to the case where the second upper surface 122b does not face toward the outer side direction. In addition, in the final state, the first upper surface 122a of the second columnar member 122 is located at +Z side than the first upper surface 13a of the cylindrical member 13. Therefore, the reflected light from at least one of the upper surface of the biochip 14, the first upper surface 122a and the second upper surface 122b does not enter the objective lens LS relatively easily by way of the reflected light being reflected by the first inner surface 13b of the cylindrical member 13. As described above, since the reflected light does not enter the objective lens Ls easily, a noise that arises when the measuring apparatus detects the reaction of the biochip 14 can be reduced.

As described above, the supporting apparatus 1 in the first embodiment allows any approaching target (for example, the objective lens LS) to approach the supported target (for example, the biochip 14) that is supported by the supporting apparatus 1 while holding any held target (for example, the specimen LQ) in the space SP1.

Note that the method of using the supporting apparatus 1 described by using FIG. 9(a) to FIG. 9(e) and FIG. 10(a) to FIG. 10(c) is one example. Thus, one portion of the method of using the supporting apparatus 1 may be changed. In the description below, a modified example of the method of using the supporting apparatus 1 will be described.

In the above description, the water-tightness of the space SP1 is ensured by the firm contact of the first inner surface 13b and the first outer surface 122c. However, the water-tightness of the space SP1 may be ensured by a firm contact of the hole part(s) 122d and the protruding part(s) 13e, instead of or in addition to the firm contact of the first inner surface 13b and the first outer surface 122c. When the water-tightness of the space SP1 is ensured by a firm contact of the hole part(s) 122d and the protruding part(s) 13e, the hole part 122d may be formed at whole circle corresponding to the edge of the first outer surface 122c on the XY plane. When the water-tightness of the space SP1 is ensured by a firm contact of the hole part(s) 122d and the protruding part(s) 13e, the protruding part 13e may be formed at whole circle corresponding to the edge of the first inner surface 13b on the XY plane. When the water-tightness of the space SP1 is ensured by a firm contact of the hole part(s) 122d and the protruding part(s) 13e, the first inner surface 13b may not contact with the first outer surface 122c relatively firmly. When the water-tightness of the space SP1 is ensured by a firm contact of the hole part(s) 122d and the protruding part(s) 13e, the first inner surface 13b may not be fitted to or contact with the first outer surface 122c.

The space SP15 that is ensured by the jig 15 is ensured mainly for the purpose of preventing the bottom surface 15a of the jig 15 from contacting with the first upper surface 122a (alternatively, the supported target such as the biochip 14 that is supported by the first upper surface 122a) at the timing when the cylindrical member 13 has been pushed down to the most -Z side. However, if the bottom surface 15a of the jig 15 does not contact with the first upper surface 122a (alternatively, the supported target) at the timing when the cylindrical member 13 has been pushed down to the most -Z side, the space SP 15 may not be ensured. In this case, the jig 15 may not have the cylindrical part 15b. Namely, the jig 15 may have any structure as long as the jig 15 is allowed to push down the cylindrical member 13 toward -Z side and the jig 15 does not contact with the first upper surface 122a (alternatively, the supported target) at the timing when the cylindrical member 13 has been pushed down to the most -Z side.

The movement of the cylindrical member 13 toward -Z side may be stopped by the contact of the protruding parts 13e and the third outer surface 121f, instead of or in addition to the contact of the protruding parts 13e and the fourth outer surface 121g. In this case, a state where the movement of the cylindrical member 13 toward -Z side is stopped by way of each protruding part 13e contacting with the third outer surface 121f may be the final state. Moreover, in this case, the third outer surface 121f serves as the stopping part that stops the movement of the cylindrical member 13 toward -Z side.

Even after the cylindrical member 13 has moved to be in the final state, the first upper surface 122a may be located at -Z side than the first upper surface 13a. The first upper surface 122a may not be exposed on the cylindrical member 13. Even in this case, the distance D from the first upper surface 122a to the first upper surface 13a is equal to or less than the predetermined distance D2. Therefore, any approaching target that should approach the first upper surface 122a (alternatively, the supported target that is supported by the first upper surface 122a) is allowed to approach the first upper surface 122a without contacting with the cylindrical member 13.

Each columnar member 12 of the supporting apparatus 1 may be movable toward +Z side, instead of or in addition to each cylindrical member 13 of the supporting apparatus 1 being movable toward -Z side. Even when each columnar member 12 moves toward +Z side, the state of the supporting apparatus 1 is changed from the initial state to the final state. When each columnar member 12 moves toward +Z side, the first columnar member 121 may not be unified with or molded integrally with the base member 11. When each columnar member 12 moves toward +Z side, the cylindrical member 13 may be unified with or molded integrally with the base member 11.

### (2) A supporting apparatus 2 in a second embodiment

Next, with reference to FIG. 11(a) to FIG. 11(d), a supporting apparatus 2 in a second embodiment will be described. Each of FIG. 11 (a) to FIG. 11 (d) is a cross-sectional view illustrating a cross-sectional plane along the XZ plane of the first columnar member 121, a second columnar member 222 and a cylindrical member 23 of the supporting apparatus 2 in the second embodiment. Note that the supporting apparatus 2 in the second embodiment is different from the supporting apparatus 1 in the first embodiment mainly in a structure of each of the second columnar member 222 and the cylindrical member 23. In the description below, the structure different from the structure of the supporting apparatus 1 in the first embodiment will be described mainly. Moreover, same reference sign is assigned to the member that is same as the member of the supporting apparatus 1 in the first embodiment, and its detailed description will be omitted.

As illustrated in FIG. 11 (a), the supporting apparatus 2 in the second embodiment has the second columnar member 222, instead of the second columnar member 122 in the first embodiment. The second columnar member 222 has the first upper surface 122a, the second upper surface 122b, the first outer surface 122c, the four hole parts 122d, the first lower surface 122e and the second lower surface 122g, as with the second columnar member 122.

Especially in the second embodiment, the second columnar member 222 has a first inner surface 222f-1, a third lower surface 222f-2 and a second inner surface 222f-3, instead of the first inner surface 122f.

The first inner surface 222f-1 is a surface extending from the edge at the inner side direction of the first lower surface 122e toward +Z side. The first inner surface 222f-1 a surface facing toward the inner side direction. The first inner surface 222f-1 is a surface parallel to the Z axis. A shape of an edge of the first inner surface 222f-1 on the XY plane is a circular shape. A center of the first inner surface 222f-1 (namely, a center of the circular shape) on the XY plane corresponds to the center of the first upper surface 122a on the XY plane.

The third lower surface 222f-2 is a surface extending from the edge at +Z side of the first inner surface 222f-1 toward the inner side direction. The third lower surface 222f-2 is a surface facing toward -Z side. The third lower surface 222f-2 is a surface parallel to the XY plane. A shape of an edge at the outer side direction of the third lower surface 222f-2 on the XY plane is a circular shape. A shape of an edge at the inner side direction of the third lower surface 222f-2 on the XY plane is a square shape. A center of the third lower surface 222f-2 (namely, a center of the circular shape or the square shape) on the XY plane corresponds to the center of the first upper surface 122a on the XY plane.

The second inner surface 222f-3 is a surface extending from the edge at the inner side direction of the third lower surface 222f-2 toward +Z side. The second inner surface 222f-3 is a surface facing toward the inner side direction. The second inner surface 222f-3 is a surface that is inclined with respect to the Z axis. The second inner surface 222f-3 is inclined with respect to the Z axis so that a diameter of the second inner surface 222f-3 on the XY plane increases toward -Z side. A shape of the second inner surface 222f-3 is a tapered shape. A shape of an edge of the second inner surface 222f-3 on the XY plane is a square shape. A center of the second inner surface 222f-3 (namely, a center of the square shape) on the XY plane corresponds to the center of the first upper surface 122a on the XY plane.

Moreover, in the second embodiment, each of the four hole parts 122d is formed at a position closer to the first lower surface 122e than to the second upper surface 122b. Each of the four hole parts 122d is formed at a position where a distance along the Z axis between the four hole parts 122d and the first lower surface 122e is smaller than a distance along the Z axis between the four hole parts 122d and the second upper surface 122b.

Each of the four hole parts 122d is formed at one portion of the first outer surface 122c adjacent to the first inner surface 222f-1 along the XY plane. Each of the four hole parts 122d is formed at one portion of the first outer surface 122c located at -Z side than the third lower surface 222f-2.

Next, as illustrated in FIG. 11(b), the supporting apparatus 2 in the second embodiment has the cylindrical member 23, instead of the cylindrical member 13 in the first embodiment. The cylindrical member 23 has the first upper surface 13a, the inner surface 13b, the first outer surface 13c, the first lower surface 13d and the four protruding parts 13e, as with the cylindrical member 13.

Especially in the second embodiment, the second member 23 includes a first part 23-1 and a second part 23-2.

The first part 23-1 is one portion of the second member 23 including an area at which the four protruding parts 13e are formed. The second part 23-2 is the other portion of the second member 23 not including the area at which the four protruding parts 13e are formed. The first part 23-1 is one portion of the second member 23 that is located at -Z side than the second part 23-2. The second part 23-2 is the other portion of the second member 23 that is located at +Z side than the first part 23-1. Note that it is enough that the difference between the first part 23-1 and the second part 23-2 is a relative difference in accordance with the inclusion of the area at which the four protruding parts 13e are formed and a relative positional relationship along the Z axis.

A thickness (namely, a length along a direction perpendicular to the Z axis) of at least one portion of the first part 23-1 is smaller than a thickness (namely, a length along a direction perpendicular to the Z axis) of the second part 23-2. In FIG. 11(b), the thickness of the first part 23-1 is smaller than the thickness of the second part 23-2 by way of a depressed part 23c-1 being formed at the first outer surface 13c of the first part 23-1. The depressed part 23c-1 is a hollow (alternatively, a hole or a concave part) that hollows from the first outer surface 13c toward the inner side direction.

Note that the supporting apparatus 2 in the second embodiment has the first columnar member 121, as with the supporting apparatus 1 in the first embodiment.

Next, FIG. 11(c) illustrates an initial state of the supporting apparatus 2 in the second embodiment. In the embodiment, the second inner surface 222f-3 of the second columnar member 222 is a surface that is allowed to be fitted to (alternatively, to contact with or to face with) at least one portion of the first outer surface 121c of the first columnar member 121 when the first columnar member 121 is fixed to the second columnar member 222. An inclination angle of the second inner surface 222f-3 with respect to the Z axis is same as the inclination angle of the first outer surface 121c with respect to the Z axis. The shape of the edge of the second inner surface 222f-3 on the XY plane is same as the shape of the edge of the first outer surface 121c on the XY plane. The diameter of the second inner surface 222f-3 on the XY plane is same as the diameter of the first outer surface 121c on the XY plane at each position on a fitting surface at which the second inner surface 222f-3 is fitted to the first outer surface 121c (however, a margin that allows the fitting or an error caused by a fitting accuracy may be considered).

In the initial state, the first inner surface 222f-1 of the second columnar member 222 does not contact with (alternatively, is not fitted to) the first outer surface 121c of the first columnar member 121. However, the first inner surface 222f-1 of the second columnar member 222 faces with the first outer surface 121c along the XY plane. In the initial state, a space SP2 is ensured between the first inner surface 222f-1 and the first outer surface 121c. In the initial state, the space SP2 is ensured among the first inner surface 222f-1, the first outer surface 121c and the third lower surface 222f-2. In the initial state, the space SP2 is ensured at the inner side direction than the first outer surface 121c.

Even in the second embodiment, each cylindrical member 23 of the supporting apparatus 2 is movable toward -Z side, from a base position of the supporting apparatus 2 in the initial state. After each cylindrical member 13 has moved toward -Z side, the intermeshing (fitting) of each protruding part 13e of the cylindrical member 13 and each hole part 122d of the second columnar member 122 is released.

When the intermeshing of each protruding part 13e and each hole part 122d is released, at least one portion of the first outer surface 122c of the second columnar member 222 is pushed toward the inner side direction by the stress applied from each protruding part 13e. Here, the space SP2 is ensured at the inner side direction than at least one portion of the first outer surface 121c to which the stress is applied from each protruding part 13e. Thus, as illustrated in FIG. 11 (d), at least one portion of the second columnar member 222 including at least one portion of the first outer surface 121c that is pushed by each protruding part 13e is distorted toward the inner side direction. For example, at least one portion of the second columnar member 222 that is surrounded by the first outer surface 122c, the first lower surface 122e and the first inner surface 222f-1 is distorted toward the inner side direction so that at least one portion of the second columnar member 222 enters the space SP2. As a result, the frictional force between each protruding part 13e or the first inner surface 13b and the first outer surface 122c decreases, compared to the case where at least one portion of the second columnar member 222 does not enter the space SP2. Namely, the frictional force that prevents the movement of the cylindrical member 23 toward -Z side decreases. Thus, the cylindrical member 23 is movable toward -Z side relatively smoothly.

Moreover, when the intermeshing of each protruding part 13e and each hole part 122d is released, each protruding part 13e is pushed toward the outer side direction by the stress applied from the first outer surface 122c. As a result, the first part 23-1 including the area at which the four protruding part 13e are formed is pushed toward the outer side direction by the stress applied from the first outer surface 122c. Here, since the depressed part 23c-1 is formed at the first outer surface 13c of the first part 23-1 (namely, the first part 23-1 is relatively thin), as illustrated in FIG. 11(d), at least one portion of the first part 23-1 is distorted toward the outer side direction. As a result, the frictional force between each protruding part 13e or the first inner surface 13b and the first outer surface 122c decreases, compared to the case where at least one portion of the first part 23-1 is not distorted toward the outer side direction. Namely, the frictional force that prevents the movement of the cylindrical member 23 toward -Z side decreases. Thus, the cylindrical member 23 is movable toward -Z side relatively smoothly.

As described above, the supporting apparatus 2 in the second embodiment allows the cylindrical member 23 to move toward -Z side more smoothly while achieving the effect that can be achieved by the above described supporting apparatus 1 in the first embodiment.

Note that the second columnar member 222 and the cylindrical member 23 described by using FIG. 11 (a) to FIG. 11 (d) is one example. Thus, one portion of the structure of the second columnar member 222 and the cylindrical member 23 may be changed. In the description below, an example of the second columnar member 222 and the cylindrical member 23 in which one portion of the structure has been changed will be described.

At least one portion of the first inner surface 222f-1 may be a surface that is inclined with respect to the Z axis. At least one portion of the first inner surface 222f-1 may be a curved surface. The shape of the edge of the first inner surface 222f-1 on the XY plane may be a shape (for example, any rectangular shape) different from the circular shape. The center of the first inner surface 222f-1 on the XY plane may not correspond to the center of the first upper surface 122a on the XY plane.

At least one portion of the third lower surface 222f-2 may be a surface that is inclined with respect to the XY plane. At least one portion of the third lower surface 222f-2 may be a curved surface. The shape of the edge at the outer side direction of the third lower surface 222f-2 on the XY plane may be a shape (for example, any rectangular shape or an oval shape) different from the circular shape. The shape of the edge at the inner side direction of the third lower surface 222f-2 on the XY plane may be a shape (for example, any rectangular shape, a circular shape or an oval shape) different from the square shape. The center of the third lower surface 222f-2 on the XY plane may not correspond to the center of the first upper surface 122a on the XY plane.

At least one portion of the second inner surface 222f-3 may be a surface parallel to the Z axis. At least one portion of the second inner surface 222f-3 may be a curved surface. The shape of at least one portion of the second inner surface 222f-3 may not be the tapered shape. The shape of the edge of the second inner surface 222f-3 on the XY plane may be a shape (for example, any rectangular shape or a circular shape) different from the square shape. The center of the second inner surface 222f-3 on the XY plane may not correspond to the center of the first upper surface 122a on the XY plane.

At least one of the four hole parts 122d may be formed at a position closer to the second upper surface 122b than to the first lower surface 122e. At least one of the four hole parts 122d may be formed at a position where the distance along the Z axis between this at least one hole part 122d and the first lower surface 122e is equal to or larger than the distance along the Z axis between this at least one hole part 122d and the second upper surface 122b.

At least one of the four hole parts 122d may be formed at another one portion of the first outer surface 122c that is not adjacent to the first inner surface 222f-1 along the XY plane. At least one of the four hole parts 122d may be formed at another one portion of the first outer surface 122c located at +Z side than the third lower surface 222f-2.

The second member 23 may not include at least one of the first part 23-1 and the second part 23-2. The thickness of the first part 23-1 may be equal to or larger than the thickness of the second part 23-2. The depressed part 23c-1 may not be formed at the first outer surface 13c of the first part 23-1.

At least one portion of the second inner surface 222f-3 of the second columnar member 222 may not be fitted to (alternatively, not contact with or not face with) the first outer surface 121c of the first columnar member 121 when the first columnar member 121 is fixed to the second columnar member 222. The inclination angle of at least one portion of the second inner surface 222f-3 with respect to the Z axis may be different from the inclination angle of the first outer surface 121c with respect to the Z axis. The shape of the edge of at least one of the second inner surface 222f-3 on the XY plane may be different from the shape of the edge of the first outer surface 121c on the XY plane.

At least one portion of the first inner surface 222f-1 of the second columnar member 222 may contact with (alternatively, may be fitted to) the first outer surface 121c of the first columnar member 121. In the initial state, the space SP2 may not be ensured between the first inner surface 222f-1 and the first outer surface 121c.

### (3) A supporting apparatus 3 in a third embodiment

Next, with reference to FIG. 12(a) to FIG. 12(d), a supporting apparatus 3 in a third embodiment will be described. Each of FIG. 12(a) to FIG. 12(d) is a cross-sectional view illustrating a cross-sectional plane along the XZ plane of a first columnar member 321, the second columnar member 121 and the cylindrical member 13 of the supporting apparatus 3 in the third embodiment. Note that the supporting apparatus 3 in the third embodiment is different from the supporting apparatus 1 in the first embodiment mainly in a structure of the first columnar member 321. In the description below, the structure different from the structure of the supporting apparatus 1 in the first embodiment will be described mainly. Moreover, same reference sign is assigned to the member that is same as the member of the supporting apparatus 1 in the first embodiment to the supporting apparatus 2 in the second embodiment, and its detailed description will be omitted.

As illustrated in FIG. 12(a), the supporting apparatus 3 in the third embodiment has the first columnar member 321, instead of the first columnar member 121 in the first embodiment. The first columnar member 321 has the first upper surface 121 a, the adhesive members 121b, the first outer surface 121c, the second upper surface 121d, the second outer surface 121e, the first lower surface 121 h, the first inner surface 121 i, the second lower surface 121j and the second inner surface 121k, as with the first columnar member 121.

The first columnar member 321 in the third embodiment does not have the third outer surface 121f and the fourth outer surface 121 g. Thus, in the third embodiment, the second outer surface 121e is a surface extending from the fifth surface 115 (especially, the lower surface 115b thereof) of the base member 11 toward +Z side.

Note that the supporting apparatus 3 in the third embodiment has the second columnar member 122 and the cylindrical member 13, as with the supporting apparatus 1 in the first embodiment.

Next, FIG. 12(b) illustrates an initial state of the supporting apparatus 3 in the third embodiment. The initial state of the supporting apparatus 3 in the third embodiment is same as the initial state of the supporting apparatus 1 in the first embodiment, except that the first columnar member 321 does not have the third outer surface 121f and the fourth outer surface 121 g. Thus, the description of the initial state of the supporting apparatus 3 in the third embodiment will be omitted.

Even in the third embodiment, each cylindrical member 13 of the supporting apparatus 3 is movable toward -Z side, from a base position of the supporting apparatus 3 in the initial state. After each cylindrical member 13 has moved toward -Z side, the intermeshing (fitting) of each protruding part 13e of the cylindrical member 13 and each hole part 122d of the second columnar member 122 is released. Then, after the cylindrical member 13 furthermore has moved toward -Z side, as illustrated in FIG. 12(c), each protruding part 13e is located at -Z side than the first lower surface 122e of the second columnar member 122 at a certain timing. Thus, the frictional force that prevents the movement of the cylindrical member 13 toward -Z side decreases, as with the first embodiment. Thus, the cylindrical member 13 is movable toward -Z side relatively smoothly.

In the third embodiment, the first columnar member 321 does not have the third outer surface 121f and the fourth outer surface 121g. Thus, as illustrated in FIG. 12(d), even when the cylindrical member 13 furthermore moves toward -Z side, each protruding part 13e and the first inner surface 13b does not contact with the first columnar member 321. Namely, in the third embodiment, the cylindrical member 13 is movable toward -Z side more smoothly, after each protruding part 13e moves to be at -Z side than the first lower surface 122e.

Note that the movement of the cylindrical member 13 toward -Z side is stopped by way of the first lower surface 13d of the cylindrical member 13 contacts with the lower surface 115b of the base member 11 in an example illustrated in FIG. 12(d). However, the movement of the cylindrical member 13 toward -Z side may be stopped by another method.

As described above, the supporting apparatus 3 in the third embodiment allows the cylindrical member 23 to move toward -Z side more smoothly while achieving the effect that can be achieved by the above described supporting apparatus 1 in the first embodiment.

### (4) A supporting apparatus 4 in a fourth embodiment

Next, with reference to FIG. 13(a) to FIG. 13(c), a supporting apparatus 4 in a fourth embodiment will be described. Each of FIG. 13(a) to FIG. 13(c) is a cross-sectional view illustrating a cross-sectional plane along the XZ plane of the first columnar member 321, a second columnar member 422 and a cylindrical member 43 of the supporting apparatus 4 in the fourth embodiment. Note that the supporting apparatus 4 in the fourth embodiment is different from the supporting apparatus 1 in the first embodiment mainly in a structure of each of the first columnar member 321, the second columnar member 422 and the cylindrical member 43. In the description below, the structure different from the structure of the supporting apparatus 1 in the first embodiment will be described mainly. Moreover, same reference sign is assigned to the member that is same as the member of the supporting apparatus 1 in the first embodiment to the supporting apparatus 3 in the third embodiment, and its detailed description will be omitted.

As illustrated in FIG. 13(a), the supporting apparatus 4 in the fourth embodiment has the second columnar member 422, instead of the second columnar member 122 in the first embodiment. The second columnar member 422 has the first upper surface 122a, the second upper surface 122b, the first outer surface 122c, the first lower surface 122e, the first inner surface 122f and the second lower surface 122g, as with the second columnar member 122. Especially in the fourth embodiment, the second columnar member 422 does not have the four hole parts 122d.

Next, as illustrated in FIG. 13(b), the supporting apparatus 4 in the fourth embodiment has the cylindrical member 43, instead of the cylindrical member 13 in the first embodiment. The cylindrical member 43 has the first upper surface 13a, the inner surface 13b, the first outer surface 13c and the first lower surface 13d, as with the cylindrical member 13.

Especially in the fourth embodiment, the cylindrical member 43 does not have the four protruding parts 13e. The cylindrical member 43 has a second inner surface 43f and a second upper surface 43g.

The second inner surface 43f is a surface extending from the edge at the inner side direction of the first lower surface 13d toward -Z side. The second inner surface 43f is a surface located at the inner side direction than the first inner surface 13b. The second inner surface 43f is a surface facing toward the inner side direction. The second inner surface 43f is a surface parallel to the Z axis. A shape of an edge of the second inner surface 43f on the XY plane is a circular shape. A center of the second inner surface 43f (namely, a center of the circular shape) on the XY plane corresponds to the center of the first upper surface 13a on the XY plane.

The second upper surface 43g is a surface extending from the edge at +Z side of the second inner surface 43f toward the outer side direction. The second upper surface 43g is a surface extending from the edge at -Z side of the first inner surface 13b (especially, the second inner surface part 13b-2) toward the inner side direction. The second upper surface 43g is a surface facing toward +Z side. The second upper surface 43g is a surface parallel to the XY plane. A shape of an edge at each of the inner side direction and the outer side direction of the second upper surface 43g on the XY plane is a circular shape. A center of the second upper surface 43g

(namely, a center of the circular shape) on the XY plane corresponds to the center of the first upper surface 13a on the XY plane.

Note that the supporting apparatus 4 in the fourth embodiment has the first columnar member 321, as with the supporting apparatus 3 in the third embodiment.

Next, FIG. 13(c) illustrates an initial state of the supporting apparatus 4 in the fourth embodiment. In the fourth embodiment, at least one portion of the second inner surface 43f of the cylindrical member 43 is a surface that is allowed to be fitted to (alternatively, to contact with or to face with) at least one portion of the second outer surface 121e of the first columnar member 321. The shape of the edge of the second inner surface 43f on the XY plane is same as the shape of the edge of the second outer surface 121e on the XY plane. The diameter of the second inner surface 43f on the XY plane is same as the diameter of the second outer surface 121e on the XY plane at each position on a fitting surface at which the second inner surface 43f is fitted to the second outer surface 121e (however, a margin that allows the fitting or an error caused by a fitting accuracy may be considered).

In the fourth embodiment, the positional relationship between the columnar member 42 and the cylindrical member 43 is fixed due to at least one of the frictional force between the first outer surface 122c of the second columnar member 422 and the first inner surface 13b of the cylindrical member 43 and the frictional force between the second inner surface 43f of the cylindrical member 43 and the second outer surface 121e of the first columnar member 321.

Note that the second upper surface 43g of the cylindrical member 43 may contact with or may not contact with the first lower surface 122e of the second columnar member 422 in the initial state.

Even in the fourth embodiment, each cylindrical member 43 of the supporting apparatus 4 is movable toward -Z side, from a base position of the supporting apparatus 4 in the initial state. Therefore, the supporting apparatus 4 in the fourth embodiment can achieve the effect that can be achieved by the above described supporting apparatus 1 in the first embodiment.

Note that the second columnar member 422 and the cylindrical member 43 described by using FIG. 13(a) to FIG. 13(c) is one example. Thus, one portion of the structure of the second columnar member 422 and the cylindrical member 43 may be changed. In the description below, an example of the second columnar member 422 and the cylindrical member 43 in which one portion of the structure has been changed will be described.

The second columnar member 422 may not have at least one of the second inner surface 43f and the second upper surface 43g.

At least one portion of the second inner surface 43f may be a surface that is inclined with respect to the Z axis. At least one portion of the second inner surface 43f may be a curved surface. At least one portion of the second inner surface 43f may be a surface located at the outer side direction than the first inner surface 13b. The shape of at least one portion of the second inner surface 43f on the XY plane may be a shape (for example, any rectangular shape or an oval shape) different from the circular shape. The center of the second inner surface 43f on the XY plane may not correspond to the center of the first upper surface 13a on the XY plane.

At least one portion of the second upper surface 43g may be a surface that is inclined with respect to the XY plane. The shape of the edge at at least one of the inner side direction and the outer side direction of the second upper surface 43g on the XY plane may be a shape (for example, any rectangular shape or an oval shape) different from the circular shape. The center of the second upper surface 43g on the XY plane may not correspond to the center of the first upper surface 13a on the XY plane.

The second inner surface 43f of the cylindrical member 43 may not be fitted to (alternatively, may not contact with or face with) the second outer surface 121e of the first columnar member 321. The shape of at least one portion of the second inner surface 43f on the XY plane may be same as or different from the shape of at least one portion of the second outer surface 121e on the XY plane.

### (5) A supporting apparatus 5 in a fifth embodiment

Next, with reference to FIG. 14(a) to FIG. 14(d), a supporting apparatus 5 in a fifth embodiment will be described. FIG. 14(a) is a planar view of a first columnar member 521 of the supporting apparatus 5 in the fifth embodiment that is observed from +Z side. FIG. 14(b) is a XIV-XIV' cross sectional view of the first columnar member 521 illustrated in FIG. 14(a). Each of FIG. 14(c) to FIG. 14(d) is a cross-sectional view illustrating a cross-sectional plane along the XZ plane of the first columnar member 521, the second columnar member 422 and the cylindrical member 43 of the supporting apparatus 5 in the fifth embodiment. Note that the supporting apparatus 5 in the fifth embodiment is different from the supporting apparatus 4 in the fourth embodiment mainly in a structure of the first columnar member 521. In the description below, the structure different from the structure of the supporting apparatus 4 in the fourth embodiment will be described mainly. Moreover, same reference sign is assigned to the member that is same as the member of the supporting apparatus 1 in the first embodiment to the supporting apparatus 4 in the fourth embodiment, and its detailed description will be omitted.

As illustrated in FIG. 14(a) and FIG. 14(b), the supporting apparatus 5 in the fifth embodiment has the first columnar member 521, instead of the first columnar member 321 in the fourth embodiment. The first columnar member 521 has the first upper surface 121 a, the adhesive members 121b, the first outer surface 121c, the second upper surface 121 d, the second outer surface 121e, the first lower surface 121 h, the first inner surface 121 i, the second lower surface 121 j and the second inner surface 121k, as with the first columnar member 321.

Especially in the fifth embodiment, the first columnar member 521 has two protruding parts 521m. Each of the two protruding parts 521m is a protrusion formed at the second outer surface 121 e. Each of the two protruding parts 521m is a protrusion that protrudes from the second outer surface 121e toward the outer side direction. The two protruding parts 521m are formed at the same XY plane. The two protruding parts 521m are formed to arrange at equal intervals along a circle that corresponds to the edge of the second outer surface 121 e on the XY plane.

Note that the supporting apparatus 5 in the fifth embodiment has the second columnar member 422 and the cylindrical member 43, as with the supporting apparatus 4 in the fourth embodiment.

Next, FIG. 14(c) illustrates an initial state of the supporting apparatus 5 in the fifth embodiment. In the fifth embodiment, each of the two protruding parts 521m is a member that is allowed to contact with the first lower surface 13d of the cylindrical member 43. Each of the two protruding parts 521m is a member that is allowed to support the first lower surface 13d from -Z side. As a result, the two protruding parts 521m is allowed to fix the positional relationship between the columnar member 52 and the cylindrical member 43 in the initial state.

When the two protruding parts 521m is allowed to fix the positional relationship between the columnar member 52 and the cylindrical member 43, the frictional force between the first outer surface 122c of the second columnar member 422 and the first inner surface 13b of the cylindrical member 43 may not fix the positional relationship between the columnar member 52 and the cylindrical member 43. In this case, the first outer surface 122c may not be fitted to (alternatively, may not contact with or face with) the first inner surface 13b. Alternatively, the frictional force between the second inner surface 43f of the cylindrical member 43 and the second outer surface 121e of the first columnar member 321 may not fix the positional relationship between the columnar member 52 and the cylindrical member 43. In this case, the second inner surface 43f may not be fitted to (alternatively, not contact with or not face with) the second outer surface 121 e.

Even in the fifth embodiment, each cylindrical member 43 of the supporting apparatus 5 is movable toward -Z side, from a base position of the supporting apparatus 5 in the initial state. After each cylindrical member 43 in the initial state has moved toward -Z side, as illustrated in FIG. 14(d), the first lower surface 13d of the cylindrical member 43 has moved toward -Z side to pass through the two protruding parts 521m.

In this case, an edge at the outer side direction of each of the two protruding parts 521m does not contact with the first inner surface 13b of the cylindrical member 13. As a result, the cylindrical member 13 is movable toward -Z side relatively smoothly, compared to the case where the edge at the outer side direction of each of the two protruding parts 521m contacts with the first inner surface 13b. However, the edge at the outer side direction of at least one of the two protruding parts 521m may contact with the first inner surface 13b.

As described above, the supporting apparatus 5 in the fifth embodiment can achieve the effect that can be achieved by the above described supporting apparatus 4 in the fourth embodiment.

Note that the first columnar member 521 described by using FIG. 14(a) to FIG. 14(d) is one example. Thus, one portion of the structure of the first columnar member 521 may be changed. In the description below, an example of the first columnar member 521 in which one portion of the structure has been changed will be described.

One of the two protruding parts 521m may be formed at a XY plane different from a XY plane at which the other one of the two protruding parts 521m is formed. The two protruding parts 521m may be formed to arrange at different or any intervals along the circle that corresponds to the edge of the second outer surface 121e e on the XY plane. The first columnar member 521 may have one protruding part 521m or three or more protruding parts 521m.

The edge at the outer side direction of each of the two protruding parts 521m may contact with the inner surface 13b of the cylindrical member 13 when the first lower surface 13d of the cylindrical member 13 moves toward -Z side to pass through the two protruding parts 521m.

### (6) A supporting apparatus 6 in a sixth embodiment

Next, with reference to FIG. 15(a) to FIG. 15(d), a supporting apparatus 6 in a sixth embodiment will be described. Each of FIG. 15(a) to FIG. 15(d) is a cross-sectional view illustrating a cross-sectional plane along the XZ plane of the first columnar member 121, the second columnar member 622 and the cylindrical member 63 of the supporting apparatus 6 in the sixth embodiment. Note that the supporting apparatus 6 in the sixth embodiment is different from the supporting apparatus 1 in the first embodiment mainly in a structure of each of the second columnar member 622 and the cylindrical member 63. In the description below, the structure different from the structure of the supporting apparatus 1 in the first embodiment will be described mainly. Moreover, same reference sign is assigned to the member that is same as the member of the supporting apparatus 1 in the first embodiment to the supporting apparatus 5 in the fifth embodiment, and its detailed description will be omitted.

As illustrated in FIG. 15(a), the supporting apparatus 6 in the sixth embodiment has the second columnar member 622, instead of the second columnar member 122 in the first embodiment. The second columnar member 622 has the first upper surface 122a, the second upper surface 122b, the first lower surface 122e and the second lower surface 122g, as with the second columnar member 122.

Especially in the sixth embodiment, the second columnar member 622 does not have the four hole parts 122d. Moreover, the second columnar member 622 has a first outer surface 622c, instead of the first outer surface 122c of the second columnar member 122. The first outer surface 622c is different from the first outer surface 122c that may not be a surface inclined with respect to the Z axis in that the first outer surface 622c is a surface inclined with respect to the Z axis so that a diameter of the first outer surface 622c decreases toward -Z side. Another feature of the first outer surface 622c may be same as that of the first outer surface 122c.

Next, as illustrated in FIG. 15(b), the supporting apparatus 6 in the sixth embodiment has the cylindrical member 63, instead of the cylindrical member 13 in the first embodiment. The cylindrical member 33 has the first upper surface 13a and the first lower surface 13d, as with the cylindrical member 13.

Especially in the sixth embodiment, the cylindrical member 63 does not have the four protruding parts 13e. Moreover, the cylindrical member 63 has a first inner surface 63b and a first outer surface 63c, instead of the first inner surface 13b and the first outer surface 13c of the cylindrical member 13. The first inner surface 63b is different from the first inner surface 13b that may not be a surface inclined with respect to the Z axis in that the first inner surface 63b is a surface inclined with respect to the Z axis so that a diameter of the first inner surface 63b decreases toward -Z side. Another feature of the first inner surface 63b may be same as that of the first inner surface 13b. The first outer surface 63c is different from the first outer surface 13c that may not be a surface inclined with respect to the Z axis in that the first outer surface 63c is a surface that is inclined with respect to the Z axis so that a diameter of the first outer surface 63c decreases toward -Z side. Another feature of the first outer surface 63c may be same as that of the first outer surface 13c.

Note that the supporting apparatus in the sixth embodiment has the first columnar member 121, as with the supporting apparatus 1 in the first embodiment.

Next, FIG. 15(c) illustrates an initial state of the supporting apparatus 6 in the sixth embodiment. In the sixth embodiment, the first inner surface 63b of the cylindrical member 63 is a surface that is allowed to be fitted to (alternatively, to contact with or to face with) the first outer surface 622c of the second columnar member 622 when the cylindrical member 63 is fitted to the columnar member 62. Thus, an inclination angle of the first inner surface 63b with respect to the Z axis is same as an inclination angle of the first outer surface 622c with respect to the Z axis. Note that an aspect of the fitting of the first inner surface 63b and the first outer surface 622c is same as an aspect of the fitting of the first inner surface 13b and the first outer surface 122c, and thus its detailed description will be omitted. However, in the sixth embodiment, the positional relationship between the columnar member 62 and the cylindrical member 63 is fixed by the frictional force between the first outer surface 622c and the first inner surface 63b in the initial state.

Even in the sixth embodiment, the distance D from the first upper surface 122a of the second columnar member 622 to the first upper surface 13a of the cylindrical member 63 is equal to or larger than the predetermined distance D1. Therefore, the diameter of each of the first outer surface 622c and the first inner surface 63b on the XY plane and the inclination angle of each of the first outer surface 622c and the first inner surface 63b with respect to the Z axis are set appropriately so that the distance D in the initial state becomes equal to or larger than the predetermined distance D1. Namely, the diameter of each of the first outer surface 622c and the first inner surface 63b on the XY plane and the inclination angle of each of the first outer surface 622c and the first inner surface 63b with respect to the Z axis are set appropriately so that the cylindrical member 63 is fitted to the columnar member 62 to be in the state illustrated in FIG. 15(c).

Even in the sixth embodiment, each cylindrical member 63 is movable toward -Z side, from a base position of the supporting apparatus 6 in the initial state. Here, as described above, in the sixth embodiment, each of the first outer surface 622c and the first inner surface 63b is inclined with respect to the Z axis so that the diameter of each of the first outer surface 622c and the first inner surface 63b decreases toward -Z side. Thus, as illustrated in FIG. 15(d), after each cylindrical member 63 has moved toward -Z side from the base position of the supporting apparatus 6 in the initial state, the intermeshing (fitting) of the first outer surface 622c and the first inner surface 63b is released. Namely, after each cylindrical member 63 has moved toward -Z side from the base position of the supporting apparatus 6 in the initial state, the first outer surface 622c does not contact with the first inner surface 63b. Therefore, the frictional force between the first outer surface 622c and the first inner surface 63b becomes smaller or zero. Namely, the frictional force that prevents the movement of the cylindrical member 63 toward -Z side becomes smaller or zero. Thus, the cylindrical member 63 is movable toward -Z side relatively smoothly.

As described above, the supporting apparatus 6 in the sixth embodiment allows the cylindrical member 63 to move toward -Z side more smoothly while achieving the effect that can be achieved by the above described supporting apparatus 1 in the first embodiment.

### (7) A supporting apparatus 7 in a seventh embodiment

Next, with reference to FIG. 16(a) to FIG. 16(c), a supporting apparatus 7 in a seventh embodiment will be described. Each of FIG. 16(a) to FIG. 16(c) is a cross-sectional view illustrating a cross-sectional plane along the XZ plane of the first columnar member 121, the second columnar member 622 and a cylindrical member 73 of the supporting apparatus 7 in the seventh embodiment. Note that the supporting apparatus 7 in the seventh embodiment is different from the supporting apparatus 6 in the sixth embodiment mainly in a structure of the cylindrical member 73. In the description below, the structure different from the structure of the supporting apparatus 6 in the sixth embodiment will be described mainly. Moreover, same reference sign is assigned to the member that is same as the member of the supporting apparatus 1 in the first embodiment to the supporting apparatus 6 in the sixth embodiment, and its detailed description will be omitted.

As illustrated in FIG. 16(a), the supporting apparatus 7 in the seventh embodiment has the cylindrical member 73, instead of the cylindrical member 63 in the sixth embodiment. The cylindrical member 73 has a first cylindrical member 73-1 and a second cylindrical member 73-2. The first cylindrical member 73-1 has a first upper surface 13a-1, a first inner surface 63b-1, a first outer surface 63c-1 and a first lower surface 13d-1. The second cylindrical member 73-2 has a first upper surface 13a-2, a first inner surface 63b-2, a first outer surface 63c-2 and a first lower surface 13d-2. The feature of each of the first upper surface 13a-1 and the first upper surface 13a-2 is same as the feature of the first upper surface 13a in the sixth embodiment. The feature of each of the first inner surface 63b-1 and the first inner surface 63b-2 is same as the feature of the first inner surface 63b in the sixth embodiment. The feature of each of the first outer surface 63c-1 and the first outer surface 63c-2 is same as the feature of the first outer surface 63c in the sixth embodiment. The feature of each of the first lower surface 13d-1 and the first lower surface 13d-2 is same as the feature of the first lower surface 13d in the sixth embodiment.

FIG. 16(a) illustrate the cylindrical member 73 when the supporting apparatus 7 is in the initial state. In the initial state, the first inner surface 63b-1 of the first cylindrical member 73-1 is allowed to be fitted to the first outer surface 63c-2 of the second cylindrical member 73-2. Thus, an inclination angle of the first inner surface 63b-1 with respect to the Z axis is same as an inclination angle of the first outer surface 63c-2 with respect to the Z axis. When the first inner surface 63b-1 is fitted to the first outer surface 63c-2, the first upper surface 13a-1 of the first cylindrical member 73-1 is located at +Z side than the first upper surface 13a-2 of the second cylindrical member 73-2. When the first inner surface 63b-1 is fitted to the first outer surface 63c-2, the first lower surface 13d-1 of the first cylindrical member 73-1 is located at +Z side than the first lower surface 13d-2 of the second cylindrical member 73-2. Therefore, a diameter of each of the first inner surface 63b-1 and the first outer surface 63c-2 on the XY plane and the inclination angle of each of the first inner surface 63b-1 and the first outer surface 63c-2 with respect to the Z axis are set appropriately so that the state illustrated in FIG. 16(a) is realized. Namely, a diameter of each of the first inner surface 63b-1 and the first outer surface 63c-2 on the XY plane and the inclination angle of each of the first inner surface 63b-1 and the first outer surface 63c-2 with respect to the Z axis are set appropriately so that the first inner surface 63b-1 is fitted to the first outer surface 63c-2 in the state illustrated in FIG. 16(a).

Note that the supporting apparatus 7 in the seventh embodiment has the first columnar apparatus 121 and the second columnar member 622, as with the supporting apparatus 6 in the sixth embodiment.

Next, FIG. 16(b) illustrates an initial state of the supporting apparatus 7 in the seventh embodiment. In the seventh embodiment, the first inner surface 63b-2 of the second cylindrical member 73-2 is a surface that is allowed to be fitted to (alternatively, to contact with or to face with) the first outer surface 622c of the second columnar member 622 when the cylindrical member 73 is fitted to the columnar member 62. Note that an aspect of the fitting of the first inner surface 63b-2 and the first outer surface 622c is same as an aspect of the fitting of the first inner surface 63b and the first outer surface 622c in the sixth embodiment, and thus its detailed description will be omitted.

In the initial state, the distance D from the first upper surface 122a of the second columnar member 622 to the first upper surface 13a-1 of the first columnar member 73-1 is equal to or larger than the predetermined distance D1. Therefore, the diameter of each of the first outer surface 622c and the first inner surface 63b-2 on the XY plane and the inclination angle of each of the first outer surface 622c and the first inner surface 63b-2 with respect to the Z axis are set appropriately so that the distance D in the initial state becomes equal to or larger than the predetermined distance D1. Namely, the diameter of each of the first outer surface 622c and the first inner surface 63b-2 and the inclination angle of each of the first outer surface 622c and the first inner surface 63b-2 with respect to the Z axis are set appropriately so that the cylindrical member 73 is fitted to the columnar member 62 to be in the state illustrated in FIG. 16(b).

Even in the seventh embodiment, each cylindrical member 73 is movable toward -Z side, from a base position of the supporting apparatus 7 in the initial state. Especially in the seventh embodiment, each of the first cylindrical member 73-1 and the second cylindrical member 73-2 that constitutes the cylindrical member 73 is movable toward -Z side. In the description below, the movement of each of the first cylindrical member 73-1 and the second cylindrical member 73-2 will be described.

Firstly, the movement of the first cylindrical member 73-1 will be described. As described above, in the seventh embodiment, each of the first inner surface 63b-1 and the first outer surface 63c-2 is inclined with respect to the Z axis so that the diameter of the first inner surface 63b-1 and the first outer surface 63c-2 decreases toward -Z side. Thus, as illustrated in FIG. 16(c), after the first cylindrical member 73-1 has moved toward -Z side from the base position of the supporting apparatus 7 in the initial state, the intermeshing (fitting) of the first inner surface 63b-1 and the first outer surface 63c-2 is released. Namely, after the first cylindrical member 73-1 has moved toward -Z side from the base position of the supporting apparatus 7 in the initial state, the first inner surface 63b-1 does not contact with the first outer surface 63c-2. Therefore, the frictional force between the first inner surface 63b-1 and the first outer surface 63c-2 becomes smaller or zero. Namely, the frictional force that prevents the movement of the first cylindrical member 73-1 toward -Z side becomes smaller or zero. Thus, the first cylindrical member 73-1 is movable toward -Z side relatively smoothly.

Next, the movement of the second cylindrical member 73-2 will be described. As described above, in the seventh embodiment, each of the first outer surface 622c and the first inner surface 63b-2 is inclined with respect to the Z axis so that the diameter of the first outer surface 622c and the first inner surface 63b-2 decreases toward -Z side. Thus, as illustrated in FIG. 16(c), after the second cylindrical member 73-2 has moved toward -Z side from the base position of the supporting apparatus 7 in the initial state, the intermeshing (fitting) of the first outer surface 622c and the first inner surface 63b-2 is released. Namely, after the second cylindrical member 73-2 has moved toward -Z side from the base position of the supporting apparatus 7 in the initial state, the first outer surface 622c does not contact with the first inner surface 63b-2. Therefore, the frictional force between the first outer surface 622c and the first inner surface 63b-2 becomes smaller or zero. Namely, the frictional force that prevents the movement of the second cylindrical member 73-2 toward -Z side becomes smaller or zero. Thus, the second cylindrical member 73-2 is movable toward -Z side relatively smoothly.

As described above, the supporting apparatus 7 in the seventh embodiment allows the cylindrical member 73 to move toward -Z side more smoothly while achieving the effect that can be achieved by the above described supporting apparatus 1 in the first embodiment.

Moreover, in the supporting apparatus 7 in the seventh embodiment, a length along the Z axis of the cylindrical member 73 (what we call a height, and a distance from the lower surface 115b to the first upper surface 13a-1 or the first upper surface 13a-2) is relatively small in the final state. Specifically, the length along the Z axis of the cylindrical member 73 is smaller in the final state, compared to the supporting apparatus 6 in the sixth embodiment having the cylindrical member 63 that is the single member, as will be noted by comparing FIG. 15(d) and FIG. 16(c). Therefore, even if a length along the Z axis of the first columnar member 121 (what we call a height, and a distance from the lower surface 115b to the first upper surface 121 a, for example) is relatively small, the first upper surface 122a is allowed to be exposed on the cylindrical member 73. Specifically, even if the length along the Z axis of the first columnar member 121 is smaller than that in the supporting apparatus 6 in the sixth embodiment, the first upper surface 122a is allowed to be exposed on the cylindrical member 73 in the final state. Thus, the supporting apparatus 7 can be downsized.

Note that two members (namely, the first cylindrical member 73-1 and the second cylindrical member 73-2) constitute the cylindrical member 73 in the above description. However, three or more members may constitute the cylindrical member 73. Even in the cylindrical member 73 that is constituted by three or more members, three or more members that constitute the cylindrical member 73 are assembled in a same manner in the case where two members constitute the cylindrical member 73.

### (8) A supporting apparatus 8 in an eighth embodiment

Next, with reference to FIG. 17(a) to FIG. 17(b), a supporting apparatus 8 in an eighth embodiment will be described. FIG. 17(a) is a planar view of the cylindrical members 13 of the supporting apparatus 8 in the eighth embodiment that is observed from +Z side. FIG. 17(b) is a XVII-XVII' cross sectional view of the cylindrical members 13 illustrated in FIG. 17(a). Note that the supporting apparatus 8 in the eighth embodiment is different from the supporting apparatus 1 in the first embodiment mainly in a structure of the cylindrical member 13. In the description below, the structure different from the structure of the supporting apparatus 1 in the first embodiment will be described mainly. Moreover, same reference sign is assigned to the member that is same as the member of the supporting apparatus 1 in the first embodiment to the supporting apparatus 7 in the seventh embodiment, and its detailed description will be omitted.

In the eighth embodiment, the plurality of (24 pieces of, in the example illustrated in FIG. 17(a)) cylindrical members 13 are unified or coupled with each other. For example, as illustrated in FIG. 17(a) and FIG. 17(b), 24 cylindrical members 13 are coupled with each other by coupling members 831 and coupling members 832. The coupling member 831 is a member that is configured to couple the outer surfaces 13c of two cylindrical members 13 adjacent along the X axis. The coupling member 832 is a member that is configured to couple the outer surfaces 13c of two cylindrical members 13 adjacent along the Y axis.

The supporting apparatus 8 in the eighth embodiment can achieve the effect that can be achieved by the above described supporting apparatus 1 in the first embodiment. Moreover, in the eighth embodiment, since 24 cylindrical members 13 are coupled with each other, all cylindrical members 13 are movable collectively by way of all cylindrical members 13 of the supporting apparatus 8 being pushed down collectively by same jig. Moreover, the plurality of cylindrical members 13 can be manufactured collectively by way of the plurality of cylindrical members 13 being molded integrally and collectively.

### (9) A supporting apparatus 9 in a ninth embodiment

Next, with reference to FIG. 18(a) to FIG. 18(b), a supporting apparatus 9 in a ninth embodiment will be described. FIG. 18(a) is a planar view of the supporting apparatus 9 in the ninth embodiment that is observed from +Z side. FIG. 18(b) is a XVIII-XVIII' cross sectional view of the supporting apparatus 9 illustrated in FIG. 18(a). Note that same reference sign is assigned to the member that is same as the member of the supporting apparatus 1 in the first embodiment to the supporting apparatus 8 in the eighth embodiment, and its detailed description will be omitted.

As illustrated in FIG. 18(a) and FIG. 18(b), the supporting apparatus 9 has a base member 91. The base member 91 has the first surface 111, the second surface 112, the third surface 113, the fourth surface 114, the fifth surface 115 and the sixth surface 116, as with the base member 11. The fifth surface 115 has the upper surface 115a and the lower surface 115b. The first through hole part 117a and the second through hole part 117b are formed at the base member 91. The groove part 118a and 118b are formed at the base member 91.

In the ninth embodiment, furthermore, the base member 91 has a seventh surface 119-1. The seventh surface 119-1 is a surface parallel to the YZ plane. The seventh surface 119-1 is a surface extending from the edge at -X side of the lower surface 115b toward +Z side. The seventh surface 119-1 is a surface extending from the edge of the upper surface 115a toward -Z side. The seventh surface 119-1 is a surface facing toward +X side. A first hole part 119a-1 and a second hole part 119b-1 are formed at the seventh surface 119-1. The first hole part 119a-1 and the second hole part 119b-1 are formed to arrange along the Z axis. The first hole part 119a-1 is located at +Z side than the second hole part 119b-1. Each of the first hole part 119a-1 and the second hole part 119b-1 is a hole to which a protruding part 932b-1 of a below described movable member 93 is allowed to be fitted.

Furthermore, the base member 91 has an eighth surface 119-2. The eighth surface 119-2 is a surface parallel to the YZ plane. The eighth surface 119-2 is a surface extending from the edge at +X side of the lower surface 115b toward +Z side. The eighth surface 119-2 is a surface extending from the edge of the upper surface 115a toward -Z side. The eighth surface 119-2 is a surface facing toward -X side. A first hole part 119a-2 and a second hole part 119b-2 are formed at the eighth surface 119-2 The first hole part 119a-2 and the first hole part 119a-1 are located on the same XY plane. The second hole part 119b-2 and the second hole part 119b-1 are located on the same XY plane. The first hole part 119a-2 and the second hole part 119b-2 are formed to arrange along the Z axis. The first hole part 119a-2 is located at +Z side than the second hole part 119b-2. Each of the first hole part 119a-2 and the second hole part 119b-2 is a hole to which a protruding part 932b-2 of the below described movable member 93 is allowed to be fitted.

Note that another feature of the base member 91 may be same as another feature of the base member 11 and so on.

Furthermore, the supporting apparatus 9 has a plurality of columnar members 92. The columnar member 92 is a member that is configured to support the supported target such as the biochip 14, for example.

Here, with reference to FIG. 19, the columnar member 92 will be described. FIG. 19 is a cross-sectional view illustrating a cross-sectional plane along the XZ plane of a first columnar member 921 and a second columnar member 922 of the columnar member 92. Note that the feature(s) of the columnar member 92 that will not be described below may be same as the feature(s) of the above described columnar member 12 and so on.

As illustrated in FIG. 19, the columnar member 92 has the first columnar member 921 and the second columnar member 922.

The first columnar member 921 has a first upper surface 921 a, adhesion members 921b and a first outer surface 921c. Note that the feature(s) of the first upper surface 921 a, the adhesion member 921 b and the first outer surface 921c that will not be described below may be same as the feature(s) of the above described first upper surface 121a, the adhesion member 121b and the first outer surface 121c and so on, respectively.

The first upper surface 921a is a surface parallel to the XY plane. The first upper surface 921 a is a surface located at the most +Z side among the surfaces of the first columnar member 921. The first upper surface 921 a is a surface facing toward +Z side. A shape of an edge of the first upper surface 921 a on the XY plane is a square shape.

The adhesion members 921b are formed on the first upper surface 921a. The adhesion member 921b is a member that is unified with the first upper surface 921a. The adhesion members 921b melt due to an irradiation of ultrasound when the first columnar member 921 is fixed to the second columnar member 922. As a result, the adhesion members 921b serve as an adhesive material and thus the first columnar member 921 is fixed to the second columnar member 922.

The first outer surface 921c is a surface extending from the edge of the first upper surface 921a toward -Z side. The first outer surface 921c is a surface extending from the lower surface 115b toward +Z side. The first outer surface 921c faces toward outer side direction. The first outer surface 921 c is a surface parallel to the Z axis. A shape of the first outer surface 921c on the XY plane is a square shape.

The second columnar member 922 has a first upper surface 922a, a first outer surface 922b and a first lower surface 922c. Note that the feature(s) of the first upper surface 922a, the first outer surface 922b and the first lower surface 922c that will not be described below may be same as the feature(s) of the above described first upper surface 122a, the first outer surface 122c and the second lower surface 122g and so on, respectively.

The first upper surface 922a is a surface located at the most +Z side among the surfaces of the second columnar member 922. The first upper surface 922a is a surface facing toward +Z side. The first upper surface 922a is a surface parallel to the XY plane. A shape of an edge of the first upper surface 922a on the XY plane is a square shape.

The first outer surface 922b is a surface extending from the edge at the outer side direction of the first upper surface 922a toward -Z side. The first outer surface 922b is a surface facing toward the outer side direction. The first outer surface 922b is a surface parallel to the Z axis. A shape of an edge of the first outer surface 922b on the XY plane is a square shape.

The first lower surface 922c is a surface extending from the edge at -Z side of the first outer surface 922b toward the inner side surface. The first lower surface 922c is a surface facing toward -Z side. The first lower surface 922c is a surface parallel to the XY plane. A shape of an edge of the first lower surface 922c on the XY plane is a square shape.

The first lower surface 922c of the second columnar member 922 is a surface that is allowed to be fitted to (alternatively, to contact with or to face with) the first upper surface 921 a of the first columnar member 921 when the first columnar member 921 is fixed to the second columnar member 922. The shape of the edge of the first lower surface 922c on the XY plane is same as the shape of the edge of the first upper surface 921 a on the XY plane. The diameter of the first lower surface 922c on the XY plane is same as the diameter of the first upper surface 921 a on the XY plane (however, a margin that allows the fitting or an error caused by a fitting accuracy may be considered).

Again in FIG. 18(a) and FIG. 18(b), furthermore, the supporting apparatus 9 has the movable member 93. The movable member 93 is a member that is movable in the Z axis. The movable member 93 is a member that allows at least one portion of a below described rubber film 94 that covers a front surface of the movable member 93 to move in the Z axis by moving in the Z axis. The movable member 93 is a member that allows at least one portion of the below described rubber film 94 that covers the front surface of the movable member 93 to protrude in the Z axis by moving in the Z axis. The movable member 93 is a member that allows the rubber film 94 that are between the plurality of columnar members 92 to move in the Z axis by moving in the Z axis.

Here, with reference to FIG. 20(a) to FIG. 20(d), the movable member 93 will be described. FIG. 20(a) is a planar view of the movable member 93 that is observed from +Z side. FIG. 20(b) is a XX(1)-XX(1)' cross sectional view of the movable member 93 illustrated in FIG. 20(a). FIG. 20(c) is a XX(2)-XX(2)' cross sectional view of the movable member 93 illustrated in FIG. 20(a). FIG. 20(d) is an enlarged view of a first surface 932a-1 at which the protruding part 932b-1 is formed. Note that the feature(s) of the columnar member 92 that will not be described below may be same as the feature(s) of the above described columnar member 12 and so on.

As illustrated in FIG. 20(a) to FIG. 20(c), the movable member 93 has a side wall member 931 and a supporting member 932.

The side wall member 931 is a member that is configured to be located around each columnar member 92. The side wall member 931 is a member that is configured to surround each columnar member 92 around the Z axis. The side wall member 931 is a surface extending around the Z axis to surround each columnar member 92 around the Z axis. The side wall member 931 is a member extending like a plate from the supporting member 932 toward +Z side. The side wall member 931 is a member extending toward +Z side to be a wall surrounding each columnar member 92. The side wall member 931 is a member that is allowed to form a predetermined space with the first upper surface 922a of the second columnar member 922. The side wall member 931 is a member that is allowed to form the predetermined space having a bottom part that is the first upper surface 922a of the second columnar member 922. In an example illustrated in FIG. 20(a), the side wall member 931 is a member constituted by a wall or a plate that is arranged in a grid pattern on the XY plane to surround 24 columnar members 92. Note that the side wall member 931 may be referred to as a cylindrical member, because the side wall member 931 is allowed to surround each columnar member. Therefore, the feature(s) of the side wall member 931 (alternatively, the movable member 93) that will not be described below may be same as the feature(s) of the above described cylindrical member 122 and so on.

### The side wall member 931 has first inner surfaces 931 a and first upper surfaces 931 b

The first inner surface 931a is a surface surrounding each columnar member 92 around the Z axis. The first inner surface 931 a is a surface extending around the Z axis. The first inner surface 931 a is a surface parallel to the Z axis. The first inner surface 931 a is a surface extending from the supporting member 932 toward +Z side.

The first upper surface 931b is a surface that is configured to couple adjacent two first inner surfaces 931a that constitute same wall or plate. The first upper surface 931b is a surface facing toward +Z side. The first upper surface 931b is a curved surface expanding toward +Z side. The first upper surface 931b is a chamfered surface. However, the first upper surface 931 b may be a surface having any shape.

The supporting member 932 is a member that is configured to support the side wall member 931 from -Z side. The supporting member 932 has the first surface 932a-1 and a second surface 932a-2. The first surface 932a-1 is a surface located at the most -X side among the surfaces of the supporting member 932. The first surface 932a-1 is a surface parallel to the Z axis. The first surface 932a-1 is a surface facing toward -X side. The second surface 932a-2 is a surface located at the most +X side among the surfaces of the supporting member 932. The second surface 932a-2 is a surface parallel to the Z axis. The second surface 932a-2 is a surface facing toward +X side.

The protruding part 932b-1 is formed at the first surface 932a-1. The protruding part 932b-1 is a protrusion that protrudes from the first surface 932a-1 toward -X side direction. The protruding part 932b-1 is allowed to be fitted to each of the first hole part 119a-1 and the second hole part 119b-1 of the base member 91.

A portion of the first surface 932a-1 at which the protruding part 932b-1 is formed has a plate-spring structure. Specifically, as illustrated in FIG. 20(d), the portion of the first surface 932a-1 at which the protruding part 932b-1 is formed is sandwiched in the Y axis between slits 932c-1 extending along the Z axis. As a result, the portion of the first surface 932a-1 at which the protruding part 932b-1 is formed has an elasticity like a plate spring. Therefore, the protruding part 932b-1 is fitted to each of the first hole part 119a-1 and the second hole part 119b-1 easily. Furthermore, the intermeshing (fitting) of the protruding part 932b-1 and each of the first hole part 119a-1 and the second hole part 119b-1 is released relatively easily.

The protruding part 932b-2 is formed at the second surface 932a-2. The protruding part 932b-2 is a protrusion that protrudes from the second surface 932a-2 toward +X side direction. The protruding part 932b-2 is allowed to be fitted to each of the first hole part 119a-2 and the second hole part 119b-2 of the base member 91. Note that a portion of the second surface 932a-2 at which the protruding part 932b-2 is formed also has a plate-spring structure.

Again in FIG. 18(a) and FIG. 18(b), furthermore, the supporting apparatus 9 has the rubber film 94. The rubber film 94 is made from an elastic material. The rubber film 94 is made from a material through which the liquid does not pass. The rubber film 94 is made from a rubber material. Polyisoprene synthetic rubber, latex and the like is one example of this material (the rubber material).

The rubber film 94 is arranged at +Z side than the movable member 93. The rubber film 94 is arranged to cover the movable member 93. The rubber film 94 is arranged to cover the side wall member 931 of the movable member 93. The rubber film is arranged not to cover the columnar members 92 (furthermore, the supported targets such as the biochips 14 that are supported by the columnar members 92). The rubber film 94 is arranged so that the columnar members 92 (furthermore, the supported targets such as the biochips 14 that are supported by the columnar members 92) are exposed on the rubber film 94. An edge at the outer side direction of the rubber film 94 is fixed to a not-illustrated film fixing part formed at the upper surface 115a.

Here, with reference to FIG. 21(a) to FIG. 21(c), the rubber film 94 will be described. FIG. 21(a) is a planar view of the rubber film 94 that is observed from +Z side. FIG. 21(b) is a cross-sectional view along the XZ plane illustrating the columnar member 92 and the rubber film 94 fixed to the columnar member 92. FIG. 21(b) is a planer view illustrating the columnar member 92 and the rubber film 94 fixed to the columnar member 92 that are observed from +Z side.

As illustrated in FIG. 21(a), the rubber film 94 has an oblong shape in a planar view. Apertures 941 by which the columnar members 92 are exposed on the rubber film 94 are formed at the rubber film 94. The number of the apertures 941 formed at the rubber film 94 is same as the number of the columnar members 92. A shape of the aperture 941 is a square shape in a planar view.

An edge part 941 a of the aperture 941 is fixed to the columnar member 92. Specifically, as illustrated in FIG. 21(b) and FIG. 21(c), the edge part 941 a of the aperture 941 is sandwiched between the first upper surface 921 a of the first columnar member 921 and the first lower surface 922c of the second columnar member 922, when the first columnar member 921 is fixed to the second columnar member 922. The edge part 941 a of the aperture 941 is fixed to the columnar member 92 by way of the first columnar member 921 being fixed to the second columnar member 922 while the edge part 941a of the aperture 941 is sandwiched.

Next, with reference to FIG. 22(a) and FIG. 22(b), a method of using the above described supporting apparatus 9 in the ninth embodiment. FIG. 22(a) is a cross-sectional view illustrating a cross-sectional plane along the XZ plane of the supporting apparatus 9 in the initial state. FIG. 22(b) is a cross-sectional view illustrating a cross-sectional plane along the XZ plane of the supporting apparatus 9 in the final state. Note that FIG. 22(a) and FIG. 22(b) illustrate a specific example of a method of using the supporting apparatus 9 when the supporting apparatus 9 supports the biochip 14.

As illustrated in FIG. 22(a), in the ninth embodiment, the initial state is a state where the protruding part 932b-1 of the movable member 932 is fitted to the first hole part 119a-1 of the base member 91 and the protruding part 932b-2 of the movable member 932 is fitted to the first hole part 119a-2 of the base member 91.

Even in the ninth embodiment, a distance D from the first upper surface 922a of the second columnar member 922 to the first upper surface 931b of the side wall member 931 (alternatively, a peak of the rubber film 94) is equal to or larger than the predetermined distance D1 in the initial state, as with the first embodiment and the like. As a result, a space SP9 surrounded by the first upper surface 922a and the rubber film 94 that covers the side wall member 931 located around each columnar member 92 is ensured. In other words, a height of the side wall member 931 (namely, a length along the Z axis, and a distance from an upper surface of the supporting member 932 to the first upper surface 931 b of the side wall member 931) is set appropriately so that the distance D is equal to or larger than the predetermined distance D1 in the initial state.

As described above, even in the ninth embodiment, the space SP9 surrounded by the first upper surface 922a and the rubber film 94 that covers the side wall member 931 located around each columnar member 92 is ensured. Any held target is allowed to be held in the space SP9. For example, when liquid specimen LQ that is one example of the held target is dispensed into the space SP9, the specimen LQ is held in the space SP9. Namely, in the initial state, the first upper surface 922a and the rubber film 94 that covers the side wall member 931 located around each columnar member 92 form the well (alternatively, the container or the tub) that is allowed to hold the specimen LQ. Therefore, in the initial state, the supporting apparatus 9 is allowed to serve as what we call a well plate. As a result, the reaction of the biochip 14 to the specimen LQ is facilitated.

Here, as described above, the rubber film 94 is made from the material through which water does not pass. Moreover, the edge parts 941 a of the apertures 941 of the rubber film 94 are fixed to the columnar member 92 at -Z side than the first upper surface 922a. Thus, the specimen LQ held in the space SP9 hardly leaks through the rubber film 94 itself, through the aperture 941 of the rubber film 94 or a contacting surface of the rubber film 94 and the columnar member 92. Namely, in the ninth embodiment, the water-tightness of the space SP9 is ensured appropriately.

In the initial state, it can be said that the first upper surface 931b of the side wall member 931 pushes the rubber surface 94 toward +Z side. Even in this case, since the first upper surface 931b is the curved surface, the tearing (breaking) of the rubber film 94 is prevented appropriately. Therefore, the water-tightness of the space SP9 is ensured appropriately also from a viewpoint of preventing the tearing (breaking) of the rubber film 94.

The movable member 93 is movable toward -Z side, from a base position of the supporting apparatus 9 in the initial state. For example, the supporting member 932 may be pushed down toward -Z side by a not-illustrated jig. In this case, the side wall member 931 extending from the supporting member 932 is also pushed down toward -Z side. As a result, the movable member 93 moves toward -Z side.

After the movable member 93 has moved toward -Z side, the intermeshing (fitting) of the protruding part 932b-1 and the first hole part 119a-1 and the intermeshing (fitting) of the protruding part 932b-2 and the first hole part 119a-2 are released. Then, after the movable member 93 has moved toward -Z side, as illustrated in FIG. 22(b), the protruding part 932b-1 is fitted to the second hole part 119b-1 and the protruding part 932b-2 is fitted to the second hole part 119b-2. In the ninth embodiment, a state where the protruding part 932b-1 is fitted to the second hole part 119b-1 and the protruding part 932b-2 is fitted to the second hole part 119b-2 is regarded as the final state.

In the final state, the distance D from the first upper surface 922a of the second columnar member 922 to the first upper surface 931 b of the side wall member 931 (alternatively, the peak of the rubber film 94) is equal to or less than the predetermined distance D2. In other words, the height of the side wall member 931 (namely, the length along the Z axis, and the distance from the upper surface of the supporting member 932 to the first upper surface 931b of the side wall member 931) is set appropriately so that the distance D is equal to or less than the predetermined distance D2 in the final state.

After the movable member 93 has moved to be in the final state, the first upper surface 922a is exposed on the sidewall member 931 or the rubber film 94. In other words, the side wall member 931 or the rubber film 94 hardly or never prevents the objective lens LS from approaching the first upper surface 922a or the biochip 14.

As described above, the supporting apparatus 9 in the ninth embodiment can achieves at least one portion of the effect that can be achieved by the above described supporting apparatus 1 in the first embodiment.

Note that the columnar member 92, the movable member 93 and the rubber film 94 described by using FIG. 18 to FIG. 22 is one example. Thus, one portion of the structure of the columnar member 92, the movable member 93 and the rubber film 94 may be changed. In the description below, an example of the columnar member 92, the movable member 93 and the rubber film 94 in which one portion of the structure has been changed will be described.

In the ninth embodiment, the base member 91 may not have at least one of the seventh surface 119-1 and the eighth surface 119-2.

At least one portion of the seventh surface 119-1 may be a surface that is inclined with respect to the YZ plane. At least one portion of the seventh surface 119-1 may be a curved surface. At least one of the first hole part 119a-1 and the second hole part 119b-1 may not be formed at the seventh surface 119-1. The first hole part 119a-1 and the second hole part 119b-1 may be formed not to arrange along the Z axis.

At least one portion of the eighth surface 119-2 may be a surface that is inclined with respect to the YZ plane. At least one portion of the eighth surface 119-2 may be a curved surface. At least one of the first hole part 119a-2 and the second hole part 119b-2 may not be formed at the eighth surface 119-2. The first hole part 119a-2and the second hole part 119b-2 may be formed not to arrange along the Z axis.

The protruding part 932b-1 may not be formed at the first surface 932a-1 of the movable member 93. The protruding part 932b-2 may not be formed at the second surface 932a-2 of the movable member 93. The portion of the first surface 932a-1 at which the protruding part 932b-1 is formed may not have the plate-spring structure. The portion of the second surface 932a-2 at which the protruding part 932b-2 is formed may not have the plate-spring structure.

The supporting apparatus 9 may have any film that is allowed to hold the held target, instead of or in addition to the rubber film 94. The supporting apparatus 9 may have any film that is allowed to ensure the water-tightness of the space that holds the held target, instead of or in addition to the rubber film 94. The rubber film 94 may be made from a material different from the elastic material. The rubber film 94 may be made from a material different from the rubber material.

The rubber film 94 may have a shape (for example, any rectangular shape, a circular shape or an oval shape in a planar view) different from the oblong shape in a planar view. The shape of the aperture 941 formed at the rubber film 94 may be a shape (for example, any rectangular shape, a circular shape or an oval shape in a planar view) different from the square shape in a planar view. The edge part 941 a of the aperture 941 may be fixed to a member different from the columnar member 92. The edge part 941 a of the aperture 941 may be fixed to a not-illustrated film fixing part formed at any surface of the first columnar member 921, instead of or in addition to being fixed by way of the edge part 941 a being sandwiched between the first upper surface 921 a of the first columnar member 921 and the first lower surface 922c of the second columnar member 922. The edge part 941 a of the aperture 941 may be fixed to a not-illustrated film fixing part formed at any surface of the second columnar member 922, instead of or in addition to being fixed by way of the edge part 941 a being sandwiched between the first upper surface 921 a of the first columnar member 921 and the first lower surface 922c of the second columnar member 922.

As described above, the side wall member 931 may be referred to as the cylindrical member, because the side wall member 931 is allowed to surround each columnar member. Thus, even in the supporting apparatus 1 in the first embodiment, the rubber film 94 may be configured to cover the cylindrical members 13, as with the supporting apparatus 9 in the ninth embodiment. Namely, the cylindrical member 13 may be used as the side wall member in the supporting apparatus 1 in the first embodiment. Same is true of the supporting apparatus 2 in the second embodiment to the supporting apparatus 8 in the eighth embodiment.

### (10) An inspecting apparatus SC

Next, with reference to FIG. 23 to FIG. 25, an inspecting apparatus SC that is configured to perform the molecular diagnosis by using the above described supporting apparatus 1 in the first embodiment will be described. Note that the inspecting apparatus SC may do the molecular diagnosis by using at least one of the supporting apparatus 2 in the second embodiment to the supporting apparatus 9 in the ninth embodiment, instead of or in addition to the supporting apparatus 1 in the first embodiment.

### (10-1) A structure of the inspecting apparatus SC

Firstly, with reference to FIG. 23 to FIG. 24, a structure of the inspecting apparatus SC in the present embodiment will be described. FIG. 23 is a schematic diagram illustrating one example of the structure of the inspecting apparatus SC in the present embodiment. FIG. 24 is a schematic diagram illustrating one example of the structure of the measuring apparatus MS in the present embodiment.

As illustrated in FIG. 23, the inspecting apparatus SC has the dispensing apparatus DP, the measuring apparatus MS and a transporting apparatus AM.

The dispensing apparatus DP performs a dispense process for dispensing the specimen LQ into each space SP1 of the supporting apparatus 1 in the initial state that supports the biochip 14. Furthermore, the dispensing apparatus DP may perform a reaction process for facilitating the reaction of the biochip 14 to the specimen LQ. Furthermore, the dispensing apparatus DP may perform a clean and dry process for cleaning and drying the supporting apparatus 1 after the biochip 14 reacts to the specimen LQ.

The transporting apparatus AM transports the supporting apparatus 1 (typically, the supporting apparatus 1 on which the clean and dry process has been performed) from the dispensing apparatus DP to the measuring apparatus MS.

The measuring apparatus MS performs a measurement process for optically measuring (in other words, detecting or gauging) the reaction of the biochip 14 to the specimen LQ. In order to perform the measurement process, as illustrated in FIG. 24, the measuring apparatus MS has a stage ST and the objective lens LS, for example. In this case, the supporting apparatus 1 that has been transported from the dispensing apparatus DP is placed on the stage ST. After the supporting apparatus 1 is placed on the stage ST, the objective lens LS approaches the biochip 14 until the distance between the biochip 14 and the lens surface of the objective lens LS is equal to or less than the observable distance. Then, the stage ST moves along a surface (for example, toward a direction along an arrow in FIG. 24) perpendicular to an optical axis of the objective lens LS. In parallel with the movement of the stage, a state of the biochip 14 is measured via the objective lens LS. A measurement result is outputted as image information from the measuring apparatus MS to a not-illustrated controlling apparatus.

### (10-2) An inspecting operation by the inspecting apparatus SC

Next, with reference to FIG. 25, an inspecting operation (an operation from the dispensing of the specimen LQ to the measuring of the reaction of the biochip 14) performed by the inspecting apparatus SC will be described. FIG. 25 is a flowchart illustrating the inspecting operation (the operation from the dispensing of the specimen LQ to the measuring of the reaction of the biochip 14) performed by the inspecting apparatus SC.

As illustrated in FIG. 25, firstly, the dispensing apparatus DP performs the dispense process for dispensing the specimen LQ into each space SP1 of the supporting apparatus 1 in the initial state that supports the biochip 14 (step S1). Since the supporting apparatus 1 is in the initial state at the timing when the dispense process is performed, the supporting apparatus 1 can hold the specimen LQ by using the space SP1. Thus, the reaction of the biochip 14 to the specimen LQ is facilitated.

Then, the dispensing apparatus DP may perform the reaction process for facilitating the reaction of the biochip 14 to the specimen LQ. For example, the dispensing apparatus DP may perform a reaction process for vibrating or churning the supporting apparatus 1 to which the specimen LQ has been dispensed.

After a time that is needed for a sufficient reaction of the biochip 14 and the specimen LQ elapses, the dispensing apparatus DP pushes down the cylindrical member 13 of the supporting apparatus 1 toward -Z side by using the above described jig 15 (step S2). As a result, the state of the supporting apparatus 1 is changed from the initial state to the final state.

Then, the dispensing apparatus performs the clean and dry process for cleaning and drying the supporting apparatus 1 (step S3). Here, since the supporting apparatus 1 is in the final state, the biochip 14 is exposed at the timing when the clean and dry process is performed. Therefore, the dispensing apparatus DP can clean and dry the biochip 14 appropriately.

Then, the transporting apparatus AM transports the supporting apparatus 1 (typically, the supporting apparatus 1 on which the clean and dry process has been performed) from the dispensing apparatus DP to the measuring apparatus MS.

Then, the measuring apparatus MS performs the measurement process for optically measuring (in other words, detecting or gauging) the reaction of the biochip 14 to the specimen LQ (step S4). Since the supporting apparatus 1 is in the final state at the timing when the measurement process is performed, the cylindrical member 13 hardly or never prevents the objective lens LS from approaching the biochip 14. Therefore, the measuring apparatus MS can perform the measurement process appropriately.

Note that the process at the step S2 for pushing down the cylindrical member 13 may be performed after the clean and dry process is performed. Alternatively, the process for pushing down the cylindrical member 13 may be performed at any time in a period after the biochip 14 reacts to the specimen LQ sufficiently and before the measuring apparatus MS starts the measurement process.

The present invention can be changed, if desired, without departing from the essence or concept of the invention that can be read from the claims and the entire specification. A supporting apparatus and an inspecting method, that involve such changes, are also intended to be within the technical scope of the present invention.

### Description of Reference Codes

- 1: supporting apparatus
- 11: base member
- 12: columnar member
- 121: first columnar member
- 122: second columnar member
- 13: cylindrical member

## Claims

1. A supporting apparatus comprising:
a columnar first member; and
a cylindrical second member having an inner surface that is allowed to face with at least one portion of an outer surface of the first member, at least one portion of the first member being inserted in a cylinder defined by the inner surface,
a state of the first and second members being allowed to change from a first state to a second state,
the first state including a state in which a predetermined space is ensured, the predetermined space being surrounded by at least one portion of the inner surface of the second member and an edge surface at one side of the first member that is different from the outer surface,
the second state including a state in which the second member has moved toward other side that is opposite to the one side relative to the first member from a base position of the first and second members in the first state.

2. The supporting apparatus according to claim 1, wherein
the first state includes a state in which a distance from the edge surface at the one side of the first member to an edge surface at the one side of the second member is a first distance,
the second state includes a state in which the distance from the edge surface at the one side of the first member to the edge surface at the one side of the second member is a second distance that is smaller than the first distance.

3. The supporting apparatus according to claim 1 or 2, wherein
the first state includes a state in which an edge surface at the one side of the second member is located at the one side than the edge surface at the one side of the first member,
the second state includes a state in which the edge surface at the one side of the second member is located at the other side than the edge surface at the one side of the first member.

4. The supporting apparatus according to any one of claims 1 to 3, wherein
at least one portion of the outer surface of the first member is allowed to be fitted to at least one portion of the inner surface of the second member along a circumferential direction of the first and second members,
the first state includes a state in which the predetermined space is ensured at the one side than a fitting surface between at least one portion of the outer surface of the first member and at least one portion of the inner surface of the second member.

5. The supporting apparatus according to any one of claims 1 to 4, wherein
the second member has an elasticity that allows the second member to expand by a stress applied from at least one portion of the outer surface of the first member,
at least one portion of the inner surface of the second member firmly contacts with at least one portion of the outer surface of the first member due to the elasticity of the second member.

6. The supporting apparatus according to any one of claims 1 to 5, wherein
the second member is covered with a watertight film that is configured to ensure a water-tightness of the predetermined space.

7. The supporting apparatus according to claim 6, wherein
an aperture is formed at the watertight film to allow the edge surface at the one side of the first member to be exposed,
an edge part of the watertight film that defines the aperture is fixed to the first member at the other side than the edge surface at the one side of the first member.

8. The supporting apparatus according to any one of claims 1 to 7, wherein
at least one of the first and second members includes a first fixing part that is configured to fix the first and second members so that the state of the first and second members becomes the first state.

9. The supporting apparatus according to claim 8, wherein
the first fixing part includes:
a first hole part that is formed at at least one of the outer surface of the first member and the inner surface of the second member; and
a first protruding part that is formed at at least another one of the outer surface of the first member and the inner surface of the second member and that is allowed to be fitted to the first hole part.

10. The supporting apparatus according to claim 9, wherein
the outer surface of the first member includes:
a first outer surface part at which the first hole part or the first protruding part is formed; and
a second outer surface part that is located at the other side than the first outer surface part and that has a diameter smaller than a diameter of the first outer surface part.

11. The supporting apparatus according to claim 10, wherein
the first hole part or the first protruding part is formed at a position closer to the second outer surface part of the first member than to the edge surface at the one side of the first member.

12. The supporting apparatus according to any one of claims 9 to 11, wherein
the second member includes: a first part at which the first hole part or the first protruding part is formed; and a second part that is different from the first part,
a thickness of at least one portion of the first part is smaller than a thickness of the second part.

13. The supporting apparatus according to any one of claims 9 to 12, wherein
the inner surface of the second member includes, at the one side than at least the first protruding part, a first tapered shape surface by which a diameter of the inner surface of the second member increases toward the one side.

14. The supporting apparatus according to any one of claims 8 to 13, wherein
the first fixing part includes a second protruding part that is formed at the outer surface of the first member and that is configured to support an edge surface at the other side of the second member in the first state from the other side.

15. The supporting apparatus according to any one of claims 1 to 14, wherein
at least one of the first and second members includes a second fixing part that is configured to fix the first and second members so that the state of the first and second members becomes the second state.

16. The supporting apparatus according to claim 15, wherein
the outer surface of the first member includes a second tapered shape surface by which a diameter of the outer surface of the first member increases toward the other side,
the second fixing part includes the second tapered shape surface.

17. The supporting apparatus according to any one of claims 1 to 16, wherein
the first member has an elasticity that allows the first member to strain by a stress applied from at least one portion of the inner surface of the second member so that a diameter of at least one portion of the outer surface of the first member decreases.

18. The supporting apparatus according to any one of claims 1 to 17, wherein
a gap is formed at an inner side of at least one portion of the outer surface of the first member.

19. The supporting apparatus according to any one of claims 1 to 18, wherein
the outer surface of the first member includes a third tapered shape surface by which a diameter of the outer surface of the first member decreases toward the other side,
the inner surface of the second member includes a fourth tapered shape surface by which a diameter of the inner surface of the second member decreases toward the other side.

20. The supporting apparatus according to claim 19 comprising, as the second member, (i) one second member having the inner surface that is allowed to face with at least one portion of the outer surface of the first member, and (ii) another second member having the inner surface that is allowed to face with at least one portion of an outer surface of the one second member,
the outer surface of the one second member including a fifth tapered shape surface by which a diameter of the outer surface of the one second member decreases toward the other side,
the first state including a state in which at least one portion of the inner surface of the one second member is fitted to at least one portion of the outer surface of the first member and at least one portion of the outer surface of the one second member is fitted to at least one portion of the inner surface of the another second member,
the second state including a state in which both of the one second member and the another second member have moved toward the other side relative to the first member from a base position of the first member, the one second member and the another second members in the first state.

21. The supporting apparatus according to any one of claims 1 to 20, wherein
the second member is movable toward at least the other side.

22. The supporting apparatus according to any one of claims 1 to 21 comprising a plurality of first members and a plurality of second members each having the inner surface that is allowed to face with the outer surface of respective one of the first member.

23. The supporting apparatus according to claim 22, wherein
the plurality of second members are unified.

24. The supporting apparatus according to any one of claims 1 to 23 wherein
the edge surface at the one side of the first member incudes: a first surface; and a second surface that is located around the first surface and that is inclined with respect to the first surface to face toward a direction away from a normal line of the first surface.

25. The supporting apparatus according to any one of claims 1 to 24 wherein
the edge surface at the one side of the first member includes an supporting area that is configured to support a biochip.

26. An inspecting method using a supporting apparatus,
the supporting apparatus having:
a columnar first member; and
a cylindrical second member having an inner surface that is allowed to face with at least one portion of an outer surface of the first member, at least one portion of the first member being inserted in a cylinder defined by the inner surface,
the inspecting method comprising:
dispensing an inspected target specimen into a predetermined space in a state where the predetermined space is ensured, the predetermined space being surrounded by at least one portion of the inner surface of the second member and an edge surface at one side of the first member that is different from the outer surface;
moving at least one of the first and second members so that the second member is moved toward other side that is opposite to the one side relative to the first member from a base position of the first and second members in dispensing the inspected target specimen; and
making a measuring apparatus approach the edge surface at the one side of the first member after moving at least one of the first and second members.
